(19) Europäisches Patentamt
European Patent Office
Office européen des brevets

(11) **EP 4 176 732 B1**

(12) **EUROPEAN PATENT SPECIFICATION**

(45) Date of publication and mention of the grant of the patent:
**05.11.2025 Bulletin 2025/45**

(21) Application number: **21853613.4**

(22) Date of filing: **06.08.2021**

(51) International Patent Classification (IPC):
***A23L 5/00*** ***(2016.01)*** ***A23L 11/00*** ***(2025.01)***

(52) Cooperative Patent Classification (CPC):
**A23L 7/109; A23L 11/05; A23L 29/212; A23L 29/219; A23P 10/20; A23P 30/20**

(86) International application number:
**PCT/JP2021/029429**

(87) International publication number:
**WO 2022/030638 (10.02.2022 Gazette 2022/06)**

(54) **STARCH-CONTAINING SOLID COMPOSITION AND METHOD FOR PRODUCING SAME**

STÄRKEHALTIGE FESTE ZUSAMMENSETZUNG UND VERFAHREN ZUR HERSTELLUNG DAVON

COMPOSITION SOUS FORME SOLIDE COMPRENANT UN AMIDON, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2020 JP 2020135378**
**09.02.2021 PCT/JP2021/004828**

(43) Date of publication of application:
**10.05.2023 Bulletin 2023/19**

(60) Divisional application:
**25206209.6**

(73) Proprietor: **Mizkan Holdings Co., Ltd.**
**Handa-shi, Aichi 475-8585 (JP)**

(72) Inventor: **HIBI, Naruhiro**
**Handa-shi, Aichi 475-8585 (JP)**

(74) Representative: **Hasegawa, Kan**
**Patentanwaltskanzlei Hasegawa**
**Untere Hauptstraße 56**
**85354 Freising (DE)**

(56) References cited:
**US-A- 5 989 620** **US-A- 5 989 620**
**US-A1- 2018 360 079**

- **WANG N ET AL: "PASTA-LIKE PRODUCT FROM PEA FLOUR BY TWIN-SCREW EXTRUSION", JOURNAL OF FOOD SCIENCE, WILEY-BLACKWELL PUBLISHING, INC, US, vol. 64, no. 4, 1 January 1999 (1999-01-01), pages 671 - 678, XP009005751, ISSN: 0022-1147, DOI: 10.1111/J.1365-2621.1999.TB15108.X**
- **WANG N, ET AL: "Pasta-like product from pea flour by twin screw extrusion", JOURNAL OF FOOD SCIENCE, WILEY-BLACKWELL PUBLISHING, INC, US, vol. 64, no. 4, 1 January 1999 (1999-01-01), US , pages 671 - 678, XP002958043, ISSN: 0022-1147, DOI: 10.1111/j.1365-2621.1999.tb15108.x**
- **ANONYMOUS: "Mizkan Group's "ZENB" Brand Releases "ZENB NOODLE", the New 100% Yellow Split Pea Staple Food. Amazing Taste, Even Though It's Just Peas! Full of Fiber and Protein Too!", MIZKAN GROUP, 30 September 2020 (2020-09-30), XP055894443, Retrieved from the Internet <URL:https://www.mizkan.co.jp/company/news/detail/200930-00.html>**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a starch-containing solid composition and a method for producing the same.

### BACKGROUND ART

When a conventional solid composition composed mainly of starch is heated under water-containing conditions, the elasticity of the composition increases with water absorption, but the viscosity of some of the starch in the composition increases with heating and water absorption, resulting in a quality that is difficult to process. A method known to address this problem includes adding polyoxyethylene sorbitan fatty acid esters alone or in combination with existing noodle modifiers to inhibit adhesion between noodle lines and produce noodles with appropriate firmness and improved elasticity (Patent Literature 1: JP2004-215543 A).

US 5 989 620 A discloses starch-containing solid compositions prepared by feeding a raw material into a high temperature extruder having a barrel with eight jacketed sections and mixing the raw material with water to form a dough mixture while water is gradually fed by three water feeders into the barrel.

WANG N et al. deal with starch-containing solid compositions prepared by feeding a raw material into an extruder and mixing the raw material with water to form a dough mixture while water is gradually fed into the extruder (WANG NET AL: "PASTA-LIKE PRODUCT FROM PEA FLOUR BY TWIN-SCREW EXTRUSION", JOURNAL OF FOOD SCIENCE, WILEY-BLACKWELL PUBLISHING, INC, us, vol. 64, no. 4, 1 January 1999 (1999-01-01), pages 671-678).
US 2018/360079 A1 discloses starch-containing solid compositions prepared by cooking a dough within an extruder.

However, this prior art method cannot be used universally, because it relies on addition of a modifier such as polysorbate and imparts an undesirable flavor of the modifier or is undesirable due to the recent safety consciousness of consumers. In other words, there has been no conventional method to provide a starch-containing solid composition that combines desirable elasticity when retaining water and low viscosity when retaining water, when heated under water-containing conditions.

### SUMMARY OF INVENTION

### PROBLEM TO BE SOLVED BY THE INVENTION

An objective of the present invention is to provide a starch-containing solid composition that combines desirable elasticity during water retention and low viscosity during water retention, when heated under water-containing conditions.

### MEANS TO SOLVE THE PROBLEM

Through intensive efforts in view of various plant starches and their processing conditions, the present inventors have found that high-temperature, strong kneading of starch, mainly from pulse, under pressurized conditions increases the intermediate molecular weight fraction in its composition, and heating of the kneaded product under water-containing conditions produces a composition with desirable properties that combines desirable elasticity during water retention and low viscosity during water retention . Based on these findings, the present inventors have completed the inventions as specified in the claims.

### EFFECT OF THE INVENTION

The starch-containing solid composition of the present invention combines desirable elasticity during water retention and low viscosity during water retention, when heated under water-containing conditions.

### BRIEF EXPLANATION OF FIGURES

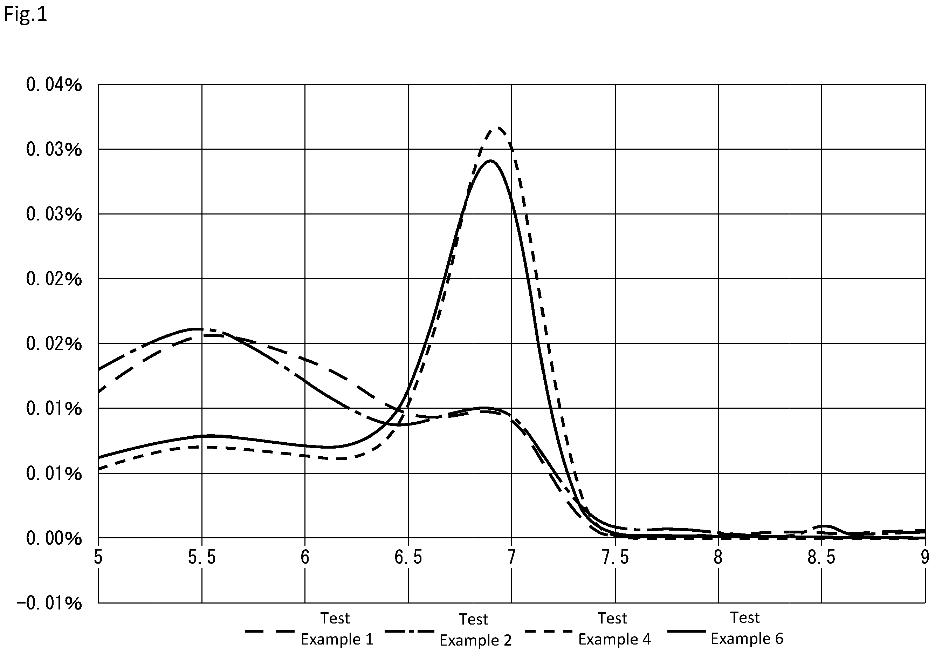

[Figure 1] Figure 1 shows a molecular weight distribution of the compositions of Test Example obtained by subjecting the compositions to isothermal treatment at 90°C in 40-fold volume of water for 15 minutes, followed by the [Procedure a] above to obtain purified starch, and then analyzing the purified starch under the [Condition A] above.

### DESCRIPTION OF EMBODIMENTS

The present invention will now be described based on specific embodiments.

[I. Starch-containing solid composition]

An embodiment of the present invention relates to a starch-containing solid composition satisfying the specific properties explained below (hereinafter also referred to as "the starch-containing solid composition of the present invention" or simply as "the composition of the present invention").

*Embodiments of the composition:

The starch-containing solid composition of the present invention may preferably be a food product, since it combines desirable elasticity during water retention and low viscosity during water retention, when heated under water-containing conditions. Embodiments of the composition include compositions that can be eaten as food products (food compositions) and compositions that can be used as food products (food ingredient compositions). The food ingredient composition may be a composition in a crushed state (crushed composition) or a composition in an agglomerated state of such a crushed composition (crushed composition agglomerate), as will be explained later. In either case, the composition of the present invention may preferably be a starch-containing composition for cooking that is used for cooking in liquid (especially in water), a cooking environment in which the ingredients of the composition are particularly susceptible to leaching. The starch-containing composition for heat cooking may preferably be a composition in the form of, e.g., noodles or noodle-like strings or strips such as pasta, since the composition of the present invention has the property of retaining its edible shape even after heat cooked in water for eating (e.g., more than 5 minutes in water at a temperature of 90°C or higher).

Examples of the composition of the present invention include, although not limited to: pasta, Chinese noodles, udon (Japanese wheat-flour noodles), inaniwa udon, kishimen, houtou, suiton, hiyamugi, somen (variations of udon), soba (Japanese buckwheat-flour noodles), soba gaki (Japanese buckwheat-flour paste), bee-hun (rice vermicelli), pho, reimen (Korean cold noodles), vermicelli, oatmeal, couscous, kiritanpo (variation of Japanese rice cake in an elongate shape), tteok, and gyoza skins.

Examples of pastas include long pasta and short pasta.

The term "long pasta" is typically a generic term referring to long, thin pasta, but may also be used herein in a broader meaning encompassing udon and soba noodles. Specific examples include, although not limited to, spaghetti (diameter: 1.6 mm to 1.7 mm), spaghettini (diameter: 1.4 mm to 1.5 mm), vermicelli (diameter: 2.0 mm to 2.2 mm), cappellini (diameter: 0.8 mm to 1.0 mm), linguini (short diameter: about 1 mm, long diameter: about 3 mm), tagliatelle or fettuccine (short diameter: about 1 mm, long diameter: about 3 mm), and other types of pasta. diameter: about 1 mm, long diameter: about 3 mm), tagliatelle or fettuccine (flat noodles of about 7 mm to 8 mm in width), pappardelle (flat noodles of about 10 mm to 30 mm in width), etc. Long pasta is a product that typically has a large contact area between noodles and therefore tends to lose its surface smoothness and adhere to each other. Accordingly, making the composition of the present invention into the form of pasta may be useful and desirable.

The term "short pasta" is typically a general term referring to short pasta, but may also be used herein in a broader meaning encompassing product once shaped in long pasta and then processed into smaller sizes, such as fregola (granular pasta) and couscous. Examples include, although not limited to, macaroni (cylindrical shape with a diameter of about 3 to 5 mm), penne (cylindrical shape with both ends cut diagonally like the tip of a pen), farfalle (shaped like a butterfly), conchiglie (shaped like a seashell), and orecchiette (dome-shaped like an ear), etc.

*Composition in Dry State:

The composition of the present invention may be a composition containing a relatively high moisture content (specifically, a moisture content of 25 mass % or more on a dry weight basis) or a dry composition containing a relatively low moisture content (specifically, a moisture content of less than 25 mass % on a dry weight basis). However, for the sake of storage, it can be a dry composition in a dry state. In particular, it is particularly useful to make the compositions in a dry state while performing the water retention treatment described below, because the resulting compositions are less likely to bind to each other.

The "dry" state herein refers to a state in which the moisture content is less than 25 mass % on a dry weight basis and the water activity value is less than 0.85. The water content in a composition can be measured by subjecting the dried powder to the decompression heating and drying method described below, and the water activity value can be measured by using a general water activity measurement device (e.g., "LabMaster-aw NEO," manufactured by Novavacina, which includes an electrical resistance (electrolyte) humidity sensor) according to a standard method.

*Composition Made into Elongated Form:

The composition of the present invention may be made in any shape that conventional starch-containing solid compositions have, particularly as a composition into an elongate form such as long pasta.

The composition of the present invention made into such an elongated form may preferably have a diameter of, although not limited to, typically 20 mm or smaller, preferably 10 mm or smaller, more preferably 5 mm or smaller, even more preferably 3 mm or smaller, even further preferably 2 mm or smaller. The "diameter" of a composition herein refers to the length of the longest diagonal line of a cut surface of the composition when cut perpendicular to its longitudinal direction (the maximum length of line segments connecting any two points on the contour of the cross-section), and means its diameter if the cut surface is circular, its major axis if the cut surface is oval, or its diagonal if the cut surface is rectangular (e.g., in the case of a composition formed into a plate).

(Starch and its content)

The composition of the present invention contains starch. The composition of the present invention is more likely to have the effect of elasticity felt as water is absorbed after heat-cooking when it contains starch at a certain concentration or more. Although the reason is not known, it is possible that the high-temperature, high-pressure, and strong kneading process causes the relatively large molecular weight fraction of starch in the composition to form a network structure, which results in the aforementioned effect. The term "heat cooking" herein generally refers to a cooking method of raising the temperature of food by applying heat to the food directly using fire or microwaves or indirectly through a medium such as water or air. Generally, it refers to cooking at a temperature of about 70°C or higher, typically from 80°C to 180°C, for example, over a period of time between 1 minute and 60 minutes. Examples of heat cooking include baking, boiling, stir-frying, and steaming. The composition in the present invention has the characteristic of not losing their shape when heat-cooked in the liquid. The composition according to the present invention may preferably be prepared to be heat-cooked in a water-based liquid (i.e., contain water at a 50% or more). Accordingly, the compositions of the present invention may particularly preferably be a composition for heat cooking in liquid, which are to be consumed after being heat-cooked in liquid.

Specifically, the lower limit of the starch content in the composition of the present invention may be typically 20 mass % or more in terms of dry mass basis. It may preferably be 25 mass % or more, particularly 30 mass % or more, or 35 mass % or more, or 40 mass % or more, or 45 mass % or more, particularly 50 mass % or more. On the other hand, the upper limit of the starch content in the composition of the present invention may be, although not particularly limited to, 85 mass % or less, particularly 80 mass % or less, or 70 mass % or less, or 60 mass % or less in terms of dry mass basis.

The origin of the starch in the composition of the present invention is not particularly restricted. Examples include plant-derived starch and animal-derived starch, but pulse-derived starch may be preferred. Specifically, the ratio of pulse-derived starch to the total starch content of the composition may preferably be typically 30 mass % or more, particularly 40 mass % or more, or 50 mass % or more, or 60 mass % or more, or 70 mass % or more, or 80 mass % or more, or 90 mass % or more, particularly 100 mass %. The upper limit is not particularly restricted, and may be typically 100 mass % or less. The pulse-derived starch may preferably be derived from pea, most preferably from yellow pea. Pulse will be discussed below.

The starch to be incorporated in the composition of the present invention may be either an isolated and pure starch or, more preferably, in the form of starch-containing pulse. Specifically, the ratio of starch contained in pulse to the total starch content in the composition may preferably be typically 30 mass % or more, particularly 40 mass % or more, or 50 mass % or more, or 60 mass % or more, or 70 mass % or more, or 80 mass % or more, or 90 mass % or more, particularly 100 mass %. The upper limit is not particularly restricted, and may typically be 100 mass % or less.

In the present invention, the starch content in a composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

(Starch grain structure)

The composition of the present invention may preferably be characterized in that the number of starch grain structures satisfies a predetermined value or less. Although the principle behind this is unknown, it is estimated that since the composition is subjected to the high-temperature, high-pressure, and strong kneading conditions described below while the starch grain structures are broken down, the starch diffuses throughout the composition in a matrix-like structure, which enable the amylopectin in the starch to easily develop elasticity during water retention. Specifically, the composition of the present invention may preferably satisfy the requirement(s) (a) and/or (b) below, more preferably both the requirements (a) and (b).

(a) When 6% suspension of a crushed product of the composition is observed, the number of starch grain structures observed is 300/mm$^2$ or less.

(b) When 14 mass % aqueous slurry of a crushed product of the composition is subjected to measurement with a rapid visco-analyzer with elevating the temperature from 50°C to 140°C at a rate of 12.5°C/min, the peak temperature of gelatinization obtained is lower than 120°C.

The starch grain structures recited in (a) above are iodine-stained structures with circular shapes of about 1 to 50 μm in diameter in a planar image, and can be observed, for example, by preparing 6% aqueous suspension of crushed product of the composition and observing the suspension under magnified view. Specifically, 6% suspension of the composition powder is prepared by sieving crushed product of the composition through a sieve with 150 μm apertures, and 3 mg of the 150-μm pass composition powder is suspended in 50 μL of water. This suspension is then placed on a slide to obtain a prepared slide, which is observed under a phase contrast microscope with polarized light or under an optical microscope with iodine staining. The magnification factor is not restricted, but may be 100 times or 200 times. When the distribution of starch grain structures on the prepared slide is uniform, the percentage of starch grain structures in the entire prepared slide can be estimated by observing a representative field of view. On the other hand, when the distribution of starch grain structures on the prepared slide is found to be biased, a finite number of fields of view (e.g., two or more, e.g., five or ten) can be observed, and the observation results can be added together to obtain a measurement for the entire preparation. The reason for this is not clear, but it is estimated that the starch granules are destroyed by subjecting starch-containing materials and/or dough to high-temperature, strong kneading or other treatment, whereby this value is reduced.

Specifically, in the composition of the present invention may preferably be characterized in that the number of starch grain structures observed under these conditions is typically 300/mm$^2$ or less, particularly 250/mm$^2$ or less, furthermore 200/mm$^2$ or less, particularly 150/mm$^2$ or less, or 100/mm$^2$ or less, or 50/mm$^2$ or less, or 30/mm$^2$ or less, or 10/mm$^2$ or less, particularly 0/mm$^2$.

The rapid viscometer analyzer (RVA) recited in in (b) above may be any device that can raise the temperature of the object to be measured up to 140°C, an example of which is the RVA4800 manufactured by Perten. The peak temperature of gelatinization measured with RVA at a temperature increase rate of 12.5°C/min can specifically be measured by the following procedure. A composition sample of 3.5 g dry mass is crushed such that the resulting crushed product has a size of, e.g., 100-mesh pass (150 μm mesh aperture) and 120-mesh on (125 μm mesh aperture). The resulting crushed material is then weighed into an aluminum cup for RVA measurement, and distilled water is added to make a total volume of 28.5 g to prepare 14 mass % sample aqueous slurry (this may be referred to simply as "composition crushed product aqueous slurry" or "sample aqueous slurry"), which is used for the RVA viscosity measurement in [Procedure a] above. The measurement is started at 50°C. The rotation speed is set at 960 rpm from the start of measurement for 10 seconds, and then changed to 160 rpm and maintained until the end of measurement. After held at 50°C for one minute, the temperature is increased at a rate of 12.5°C/minute from 50°C to 140°C, while the peak temperature of gelatinization (°C) is measured.

The composition according to the present invention with less starch grain structures tends to have a relatively low peak temperature of gelatinization because no viscosity increase associated with swelling of starch grain structures due to addition of water occurs or, if any, the increase is slight. Accordingly, the peak temperature of gelatinization thus-measured tends to be lower than a predetermined limit, whereby a favorable effect is achieved. Specifically, the temperature may preferably be less than 120 °C, particularly less than 115 °C. The reason for this is not clear, but it is estimated that the starch granules are destroyed by subjecting starch-containing materials and/or dough to high-temperature strong kneading or other treatment, whereby this value is reduced. However, even in compositions where the starch grains have been destroyed, constituents may swell due to added water and exhibit pseudo temperature of gelatinization. Accordingly, the lower limit may be, although not particularly limited to, typically more than 80 °C, or more than 85 °C, or more than 90 °C, or more than 95 °C.

The term "peak temperature of gelatinization" used herein represents the temperature (°C) at which the viscosity shows the highest value (cP) within a given temperature range and then turns to a decreasing trend during the RVA temperature raising process, and is an index reflecting the heat resistance of starch grains. For example, if a composition has the highest viscosity at the 50°C holding stage immediately after the start of measurement and then decreases in viscosity, then the peak temperature of gelatinization is 50°C, and the viscosity at any temperature T°C ($50 \leq T \leq 140$°C) during the temperature increase stage from 50°C to 140°C is the highest. If the viscosity of a composition decreases during the temperature increase stage after T°C, the peak temperature of gelatinization is T°C. If the viscosity of a composition shows the highest value during the 140°C holding stage, then the peak temperature of gelatinization is 140°C.

The terms "crushed product of a composition," "composition crushed product," or "crushed composition" used herein all refer to, unless otherwise specified, a composition that has been crushed to such an extent that the particle diameter $d_{50}$ and/or $d_{90}$ (preferably both $d_{50}$ and $d_{90}$) after ultrasonication, as measured by a laser diffraction particle size distribution analyzer, is about 1000 μm or less. The lower limit of the particle diameter $d_{50}$ and/or $d_{90}$ (preferably both particle diameters $d_{50}$ and $d_{90}$) after ultrasonication is not particularly limited, but is usually 1 μm or more.

(Degree of gelatinization of starch)

The composition of the present invention may preferably be characterized in that the degree of gelatinization of starch in the composition satisfies a predetermined limit or more. Specifically, in the composition of the present invention the degree of gelatinization of starch may preferably be typically 50 mass % or more, particularly 60 mass % or more, particularly 70 mass % or more. The upper limit of the degree of gelatinization is not particularly restricted, and may be 100 mass % or less. However, if the degree of gelatinization is too high, starch may break down and the composition may become sticky and of undesirable quality. Accordingly, the upper limit of the degree of gelatinization may preferably be 99 mass % or less, particularly 95 mass % or less, furthermore 90 mass % or less.

In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jfrl.or.jp/storage/file/221.pdf).

(Characteristics relating to the molecular weight distribution of starch)

The composition of the present invention may preferably be characterized in that when the composition is subjected to isothermal treatment at 90°C in 40-fold volume of water for 15 minutes, and then subjected to [Procedure a] below to obtain purified starch, which is then analyzed [Condition A] to obtain a molecular weight distribution curve, then the logarithm of the mass average molecular weight (also referred to as "weight average molecular weight") obtained from the molecular weight distribution curve, as well as the area under the curve in an interval with molecular weight logarithms of 5.0 or more but less than 6.5 the ratio of (also referred to as "[value $\alpha$]"), the area under the curve in an interval with molecular weight logarithms of 6.5 or more but less than 8.0 the ratio of (also referred to as "[value $\beta$]"), and, the area under the curve in an interval with molecular weight logarithms of 8.0 or more but less than 9.5 the ratio of (also referred to as "[value $\gamma$]") with respect to the area under the entire molecular weight distribution curve (the area under the molecular weight distribution curve in an interval with molecular weight logarithms of 5.0 or more but less than 9.5 ) satisfy the predetermined conditions.

The terms "molecular weight distribution" or "molecular weight distribution curve" used herein refers to a distribution diagram obtained by plotting the logarithms of molecular weights on the horizontal axis (x-axis) and the percentage (%) of the measured value at each logarithm of molecular weight against the total RI detector measured values over the entire measurement range on the vertical axis (y-axis). In addition, when the composition is subjected to isothermal treatment at 90°C in 40-fold volume of water for 15 minutes, and then subjected to [Procedure a] below to obtain purified starch which is then analyzed [Condition A] to obtain a molecular weight distribution curve, the area under the curve is calculated from the molecular weight distribution curve as follows. That is, after numerically correcting the entire curve so that the lowest value in the measurement range is 0, the area under the curve is calculated by plotting the logarithms of molecular weights on the horizontal axis (X-axis) with even intervals. This allows proper evaluation of the low molecular weight fraction (the fraction around [value $\alpha$]), which has a large quality effect but is underestimated in molecular weight conversion.

*[Procedure a]:

[Procedure a] is a procedure in which 2.5% aqueous dispersion of the composition in liquid is pulverized, treated with proteolytic enzyme, and an ethanol-insoluble and dimethyl sulfoxide-soluble component is obtained as purified starch. The technical significance of the [Procedure a] is to remove impurities such as proteins with relatively close molecular sizes and also to obtain purified starch using its ethanol-insoluble and dimethyl sulfoxide-soluble properties to thereby prevent column blockage during gel filtration chromatography and improve the accuracy and reproducibility of the analysis.

The method for crushing the composition after the thermostatic treatment in this [Procedure a] may be any method that can sufficiently homogenize the composition, an example of which is to crush the composition at 25,000 rpm for 30 seconds using a homogenizer NS52 (Microtech Nichion, Inc.).

The proteolytic enzyme treatment in this [Procedure a] may be any treatment that can sufficiently enzymatically degrade the proteins in the composition. An example of the treatment is to add 0.5 mass % proteolytic enzyme (Proteinase K by Takara Bio, product code 9034) to the composition after the pulverizing treatment and allow them to react for 16 hours at 20°C.

The extraction of ethanol-insoluble and dimethyl sulfoxide-soluble components from the pulverized composition (or pulverized defatted composition) in this [Procedure a] is not limited, but may be carried out, for example, as follows. (i) After having undergone pulverizing and optional degreasing treatment, the composition is mixed with 240-fold volume of 99.5% ethanol (FUJIFILM Wako Pure Chemicals Co.), and the mixture is centrifuged (e.g., at 10000 rpm for 5 minutes).

The precipitate fraction is collected as the ethanol-insoluble component. Next, (ii) the resulting ethanol-insoluble fraction is mixed with 80-fold volume of dimethyl sulfoxide (CAS67-68-5, FUJIFILM Wako Pure Chemicals Co.) based on the initial volume of the crushed composition. The mixture is dissolved by isothermal treatment at 90°C for 10 minutes with stirring, and the dissolved solution after isothermal treatment is centrifuged (e.g., at 10000 rpm for 5 minutes). The resulting supernatant is collected to obtain dimethyl sulfoxide-soluble fraction dissolved in dimethyl sulfoxide. Then, (iii) the resulting dimethyl sulfoxide-soluble fraction dissolved in dimethyl sulfoxide is mixed with 240-fold volume of 99.5% ethanol (FUJIFILM Wako Pure Chemicals Co.), and the mixture is centrifuged (e.g., at 10000 rpm for 5 minutes). The precipitate fraction is collected. Then, (iv) the above (iii) is repeated three times, and the final precipitate obtained is dried under reduced pressure, whereby the ethanol-insoluble and dimethyl sulfoxide-soluble component can be obtained as purified starch.

*[Condition A]:

The [Condition A] means a procedure in which the product from the treatment of [Procedure a] above is dissolved into 1M aqueous solution of sodium hydroxide at a concentration of 0.30 mass %, allowed to stand at 37°C for 30 minutes, mixed with an equal volume of water and an equal volume of eluent (e.g., 0.05M NaOH/0.2% NaCl), and then subjected to filtration with a 5-μm filter. 5mL of the filtrate is then subjected to gel filtration chromatography, and a molecular weight distribution in an interval with molecular weight logarithms of 5.0 or more but less than 9.5 is measured.

The technical significance of this [Condition A] is to prevent column blockage during gel filtration chromatography by removing insoluble coarse foreign matter from starch dissolved in water under alkaline conditions by filtration, thereby improving the accuracy and reproducibility of the analysis.

*Gel filtration chromatography:

According to the present invention, the composition is subjected to isothermal treatment at 90°C in 40-fold volume of water for 15 minutes, and then treated in accordance with the [Procedure a] above to obtain purified starch. The resulting filtrate obtained under the [Condition A] above are then subjected to gel filtration chromatography, and a molecular weight distribution in an interval with molecular weight logarithms of 5.0 or more but less than 9.5 is determined. The thus-obtained molecular weight distribution curve is then analyzed after correcting the data so that the lowest value is zero, to thereby calculate the mass average molecular weight logarithm, [value α] (the ratio of the area under the curve in an interval with molecular weight logarithms of 5.0 or more but less than 6.5 to the total area under the entire curve obtained from the molecular weight distribution curve), [value β] (the ratio of the area under the curve in an interval with molecular weight logarithms of 6.5 or more but less than 8.0 to the total area under the entire curve obtained from the molecular weight distribution curve), and [value γ] (the ratio of the area under the curve in an interval with molecular weight logarithms of 8.0 or more but less than 9.5 to the total area under the entire curve obtained from the molecular weight distribution curve). Gel filtration chromatography conditions may preferably be set appropriately such that these values can be obtained.

For this reason, in the present invention, it may be preferable to use, as gel filtration columns for gel filtration chromatography, the combination of a gel filtration column with normal logarithm of the exclusion limit (Da) in a middle molecular weight logarithm range (between 6.5 and 8.0) and a gel filtration column with normal logarithm of the exclusion limit (Da) in a lower molecular weight logarithm range (less than 6.5) among the molecular weight logarithm of 5.0 or more but less than 9.5 to be measured. It is more preferable to adopt a column configuration in which these plural gel filtration columns with different molecular exclusion limits within the aforementioned ranges are connected in series (in tandem) from the one with the highest molecular exclusion limit to the one with the lowest, in order from the upstream of analysis. Such a column configuration allows for the starch with molecular weight logarithms corresponding to [value β] (i.e., 6.5 or more but less than 8.0) to be separated from the starch with molecular weight logarithms corresponding to the smaller [value α] (i.e., 5.0 or more but less than 6.5) and/or from the starch with molecular weight logarithms corresponding to the larger [value γ] (8.0 or more but less than 9.5), and for each parameter to be measured appropriately.

A specific example of such a combination of gel filtration columns is the following combination of four columns connected in tandem.

*TOYOPEARL HW-75S (made by Tosoh Co., exclusion limit molecular weight (logarithm): 7.7Da, average pore diameter 100 nm or more, Φ2cmx30cm): two columns.
*TOYOPEARL HW-65S (made by Tosoh Co., exclusion limit molecular weight (logarithm): 6.6Da, average pore diameter 100 nm, Φ2cmx30cm): one column.
*TOYOPEARL HW-55S (made by Tosoh Co., exclusion limit molecular weight (logarithm): 5.8Da, average pore diameter 50 nm, Φ2cmx30cm): one column.

The eluting agent for gel filtration chromatography may be, although not restricted, 0.05M NaOH/0.2% NaCl.

The conditions for gel filtration chromatography may be, although not restricted, such that the analysis can be carried out at an oven temperature of 40°C, at a flow rate of 1 mL/min, and with a unit time of 0.5 seconds.

The detection equipment for gel filtration chromatography may be, although not restricted, an RI detector (RI-8021 manufactured by Tosoh Co., Ltd.).

Data analysis methods for gel filtration chromatography are not limited, but specific examples include the following. Measurement values obtained from the detection instrument within the molecular weight logarithmic range to be measured (i.e., 5.0 or more but less than 9.5) are corrected so that the lowest value within the measurement range is zero. A calibration curve is prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). Using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals. In addition, the sum of the measurement values obtained at all elution times within a given molecular weight logarithmic range (e.g., 5.0 or more but less than 9.5) of the measurement target is set at 100, and the measured value at each elution time (molecular weight log) is expressed as a percentage. This allows for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created.

*Mass average molecular weight logarithm:

The composition of the present invention may preferably be characterized in that the mass average molecular weight logarithm of the molecular weight distribution obtained by the procedure explained above satisfies a predetermined value or more, since the resulting composition may have excellent elasticity. Specifically, the mass average molecular weight logarithm (common logarithm of the mass average molecular weight) of the composition of the present invention may preferably be 6.0 or more, particularly 6.1 or more, furthermore 6.2 or more, particularly 6.3 or more, more particularly 6.4 or more. On the other hand, the upper limit of this parameter may preferably be, although not particularly limited to, typically 9.0 or less, particularly 8.5 or less, more particularly 8.0 or less.

The mass average molecular weight can be calculated from the molecular weight distribution curve obtained above by the following procedure. For each value obtained by the above procedure within the molecular weight logarithm range to be measured (i.e., 5.0 or more but less than 9.5), the molecular weight converted from the elution time is multiplied by 1/100 of the Y-axis value (percentage of the measured value at each molecular weight to the total of the RI detector measurement values over the entire measurement range) in the molecular weight distribution described above, and the resulting values are integrated to obtain the mass average molecular weight. The common logarithm of the mass average molecular weight is calculated to obtain the logarithm of the mass average molecular weight. For example, if the percentage of the measured value at a molecular weight logarithm of 5.0 is 10% of the total of the RI detector measurement values for the entire measurement, the molecular weight of 10,000, calculated from the molecular weight logarithm of 5.0, is multiplied by 1/100th of 10% (0.10). The same calculation is performed for the entire measurement range (molecular weight logarithm of 5.0 or more but less than 9.5), and these values are summed to obtain the mass average molecular weight. The common logarithm of the molecular weight is further calculated to obtain the logarithm of the mass average molecular weight.

*Ratio of the area under the curve with molecular weight logarithms within a predetermined range:

The composition of the present invention may preferably be characterized in that when the composition is subjected to isothermal treatment at 90°C in 40-fold volume of water for 15 minutes, and then subjected to [Procedure a] below to obtain purified starch, which is then analyzed under the [Condition A] to obtain a molecular weight distribution curve, the ratio of the area under the curve in an interval with molecular weight logarithms of 5.0 or more but less than 6.5 to the area under the entire curve (the area under the molecular weight distribution curve in an interval with molecular weight logarithms of 5.0 or more but less than 9.5) [value $\alpha$], the ratio of the area under the curve in an interval with molecular weight logarithms of 6.5 or more but less than 8.0 to the area under the entire curve [value $\beta$], the ratio of the area under the curve in an interval with molecular weight logarithms of 8.0 or more but less than 9.5 to the area under the entire curve [value $\gamma$], the ratio of [value $\beta$] to [value $\alpha$] ($\beta/\alpha$), and the ratio of [value $\beta$] to [value $\gamma$] ($\beta/\gamma$) satisfy the conditions mentioned below. These [value $\alpha$], [value $\beta$], and [value $\gamma$] can be determined by calculating the ratio of the area under the curve in the corresponding molecular weight logarithm range (e.g., in the case of [value $\alpha$], in a range of molecular weight logarithms of 5.0 or more but less than 6.5) to the area under the molecular weight distribution curve in the entire measurement range (with molecular weight logarithms of 5.0 or more but less than 9.5) (the area under the entire curve).

*[Value α]:

The composition of the present invention may be characterized in that the ratio of the area under the curve in an interval with molecular weight logarithms of 5.0 or more but less than 6.5 [value α] is a predetermined value or less. The [value α] is considered to be a value indicating the percentage of starch degradation products derived from amylose and higher molecular weight starches among the starch degradation products obtained by degrading the starch in the composition by the procedure described above. Specifically, [value α] may be 60% or less, preferably 55% or less, furthermore 50% or less, particularly 45% or less, or 40% or less, particularly 35% or less. On the other hand, the lower limit of the ratio may preferably be, although not particularly limited to, typically 10% or more, furthermore 20% or more, from the viewpoint of industrial productivity.

The composition of the present invention may preferably be characterized in that when the molecular weight distribution curve is observed, one or more peaks are found (more preferably only one peak is found) in the range of molecular weight logarithms of 5.0 or more but less than 6.5 (which corresponds to the [value α] above). The composition of the present invention is preferred due to the relatively low content of such relatively small molecular weight starch fraction, which may result in a composition with reduced viscosity during water retention, when heated with water. The principle behind this is unknown, but these starches with relatively small molecular weights tend to leach out of the composition when heated, and may be the cause of the viscosity that occurs during water retention.

*Amylose content:

As mentioned above, the ratio of the area under the curve in an interval with molecular weight logarithms of 5.0 or more but less than 6.5 [value α] is considered to be a value indicating the percentage of starch degradation products derived from amylose and higher molecular weight starches among the starch degradation products obtained by degrading the starch in the composition by the procedure described above. In accordance with this, the ratio of amylose content to total starch contained in the composition of the present invention may preferably be typically 60 mass % or less, particularly 55 mass % or less, furthermore 50 mass % or less, particularly 45 mass % or less, or 40 mass % or less, particularly 35 mass % or less. On the other hand, the lower limit of the ratio may preferably be, although not particularly limited to, typically 10 mass % or more, furthermore 20 mass % or more from the viewpoint of industrial productivity. The term "during water retention" used herein refers to the state in which the dry mass basis moisture content of the composition is 50 mass % or more.

*[Value β]:

The composition of the present invention may be characterized in that the ratio of the area under the curve with molecular weight logarithms of 6.5 or more but less than 8.0 [value β] is a predetermined value or more. The [value β] is considered to be a value indicating the percentage of the sum of special amylopectin with relatively low molecular weight and starch degradation products derived from higher molecular weight starches among the starch degradation products obtained by degrading the starch in the composition by the procedure described above. Specifically, [value β] may be typically 35% or more, preferably 40% or more, furthermore 45% or more, particularly 50% or more, or 55% or more, particularly 60% or more. On the other hand, the upper limit of the ratio may be, although not particularly limited to, typically 90% or less, furthermore 80% or less from the viewpoint of industrial productivity.

The composition of the present invention may preferably be characterized in that when the molecular weight distribution curve is observed, one or more peaks are found (more preferably only one peak is found) in the range of molecular weight logarithms of 6.5 or more but less than 8.0. The composition of the present invention is preferred due to the relatively high content of such intermediate molecular weight starch fraction, which may result in a composition with reduced viscosity when heated with water. The principle is unknown, but it is possible that these starches with intermediate molecular weights do not have the structure that causes the viscosity of relatively high molecular weight starches, and have physical properties that are hydrophilic but with reduced viscosity.

*Amylopectin content:

the ratio of the area under the curve with molecular weight logarithms of 6.5 or more but less than 8.0 [value β] is considered to be a value indicating the percentage of the sum of special amylopectin with relatively low molecular weight and starch degradation products derived from higher molecular weight starches among the starch degradation products obtained by degrading the starch in the composition by the procedure described above. In accordance with this, the ratio of the amylopectin content to the total starch content in the composition of the present invention may preferably be typically 35 mass % or more, particularly 40 mass % or more, furthermore 45 mass % or more, particularly 50 mass % or more, or 55 mass % or more, particularly 60 mass % or more. On the other hand, the upper limit of the ratio may be, although not particularly limited to, typically 90 mass % or less, furthermore 80 mass % or less from the viewpoint of industrial productivity.

*Ratio of [value $\beta$] to [value $\alpha$] ($\beta/\alpha$):

The composition of the present invention may preferably be characterized in that the ratio of [value $\beta$] to [value $\alpha$] ($\beta/\alpha$) is a predetermined value or more, the characteristics of [value $\beta$] become more prominent, resulting in a composition with a better eating quality. Specifically, the ratio of [value $\beta$] to [value $\alpha$] ($\beta/\alpha$) may preferably be typically 0.5 or more, particularly 0.6 or more, furthermore 0.7 or more, particularly 0.8 or more, or 0.9 or more, particularly 1.0 or more. On the other hand, the upper limit of the ratio may be, although not particularly limited to, incalculable since value $\alpha$ is 0 mass %, particularly 5.0 or less, furthermore 4.0 or less, particularly 3.0 or less, from the viewpoint of industrial productivity.

*[Value $\gamma$]:

The composition of the present invention may be characterized in that the ratio of area under the curve with molecular weight logarithms of 8.0 or more but less than 9.5 [value $\gamma$] is a predetermined value or less. The [value $\gamma$] is considered to be a value indicating the percentage of high molecular weight amylopectin characteristically found in rice starch and other starch among the starch degradation products obtained by degrading the starch in the composition by the procedure described above. Specifically, [value $\gamma$] may preferably be 30% or less, particularly 25% or less, furthermore 20% or less, particularly 15% or less, or 10% or less, particularly 5% or less. On the other hand, the lower limit of the ratio may be, although not particularly limited to, typically 0% or more, from the viewpoint of industrial productivity.

The composition of the present invention may preferably be characterized in that there is no peak which is thought to be derived from high molecular weight amylopectin characteristically found in rice starch, etc. in the range with molecular weight logarithms of 8.0 or more but less than 9.5. The relatively low content of these relatively high molecular weight starch fractions may result in a composition with reduced viscosity when heated with water. The principle is unknown, but these starches with relatively high molecular weight may have some structure that causes viscosity, so that a high percentage of these starches may result in a highly viscous composition.

*Ratio of [value $\beta$] to [value $\gamma$] ($\beta/\gamma$):

The composition of the present invention may more preferably be characterized in that the ratio of [value $\beta$] to [value $\gamma$] ($\beta/\gamma$) is a predetermined value or more, since this will serve to inhibit viscosity more effectively and provide the composition with a better eating quality. Specifically, the ratio of [value $\beta$] to [value $\gamma$] ($\beta/\gamma$) may preferably be typically 10 or more, 15 or more, particularly 20 or more, furthermore 25 or more, particularly 30 or more, or 40 or more, particularly 50 or more. On the other hand, the upper limit of the ratio may be, although not particularly limited to, incalculable since [value $\gamma$] is 0 mass %, particularly 1000 or less, furthermore 900 or less, particularly 800 or less, particularly 700 or less, particularly 650 or less from the viewpoint of industrial productivity.

(Iodine stainability)

The composition of the present invention may preferably be characterized in that the iodine stainability of a specific molecular weight logarithm fraction is a predetermined value or less, since an elasticity loss of the composition of the present invention during storage may thereby be suppressed. Specifically, the composition is placed into 40-fold volume of water and immediately treated in accordance with the [Procedure a] above, and separated and collected under the [Condition A] above to obtain purified starch. A sample is then prepared from a separated fraction with molecular weight logarithms of 5.0 or more but less than 6.5 by adjusting the pH of the fraction to 7.0 and staining one mass part of the fraction with 9 mass parts of iodine solution (0.25mM). The resulting sample is then measured for an absorbance at 660nm, and the measured value is then calibrated by subtracting it from the absorbance at 660 nm of a blank 0.25 mM iodine solution (which contains no sample).

The composition of the present invention is characterized in that the $ABS_{5.0-6.5}$ value thus obtained is 0.75 or less. The $ABS_{5.0-6.5}$ value thus obtained may be 0.70 or less, particularly 0.65 or less, or 0.60 or less, or 0.55 or less, or 0.50 or less, or 0.45 or less, or 0.40 or less, or 0.35 or less, particularly 0.30 or less. On the other hand, the lower limit of this value may be, although not particularly limited to, typically -0.20 or more, furthermore -0.10 or more, particularly 0.00 or more, or 0.10 or more, or 0.20 or more. Although the principle behind this is unknown, it is estimated as follows. The compositions with higher values of ABS 5.0-6.5 may contain more starch degradation products derived from starch fractions with even higher molecular weights (this starch degradation product is thought to be mainly amylopectin contained in the fraction with a molecular weight logarithms of 6.5 or more but less than 8.0, which has been degraded to a molecular weight log of 5.0 or more but less than 6.5 by thermal degradation associated with hyperthermia). Such starch degradation products are estimated to have characteristics that tend to reduce elasticity upon addition of water.

The detailed measurement method for the aforementioned $ABS_{5.0\text{-}6.5}$ values is as follows. The composition is put into 40 times the volume of water, and then immediately (i.e., without carrying out isothermal treatment at 90°C for 15 minutes) treated according to the [Procedure a] above to obtain purified starch. The purified starch is then separated under the [Condition A] above, and a separated fraction with molecular weight logarithms of 5.0 or more but less than 6.5 is collected. The details of the [Procedure a] and [Condition A] above have been described in detail above. The resulting separated fraction is then adjusted to pH 7.0 to prepare a sample, and one mass of the sample is put into 9 parts of 0.25 mM iodine solution at room temperature (20°C) for 3 minutes, and then subjected to absorbance measurement, which is performed as follows. Both an iodine solution before addition of the sample (control) and an iodine solution after addition of the sample are each measured for an absorbance (660 nm) with a conventional spectrophotometer (e.g., UV-1800 manufactured by Shimadzu Corp.) using a square cell with a 10 mm optical path length. The absorbance difference (i.e., {absorbance of iodine solution after addition of sample} minus {absorbance of iodine solution before addition of the sample}) is calculated and determined as $ABS_{5.0\text{-}6.5}$.

The composition of the present invention may preferably be characterized in that a separated fraction with molecular weight logarithms of 6.5 or more but less than 8.0, which has relatively higher molecular weights compared to the separated fraction with molecular weight logarithms of 5.0 or more but less than 6.5 mentioned above, has high iodine stainability. Specifically, the composition is put into 40 times the volume of water, and then immediately (i.e., without carrying out isothermal treatment at 90°C for 15 minutes) treated according to the [Procedure a] above to obtain purified starch. The purified starch is then separated under the [Condition A] above, and a separated fraction with molecular weight logarithms of 6.5 or more but less than 8.0 is obtained. The resulting separated fraction is then adjusted to pH 7.0 to prepare a sample, and one mass of the sample is put into 9 parts of 0.25 mM iodine solution for staining. The resulting sample is then measured for an absorbance at 660nm, and the measured value is then calibrated by subtracting it from the absorbance at 660 nm of a blank 0.25 mM iodine solution (which contains no sample) to thereby obtain a calibrated value (also referred to as "$ABS_{6.5\text{-}8.0}$"). The ratio of the $ABS_{6.5\text{-}8.0}$ to the $ABS_{5.0\text{-}6.5}$ ($ABS_{6.5.8.0}/ABS_{5.0.6.5}$) may preferably be a predetermined value or more.

The composition of the present invention may preferably be characterized in that the $ABS_{6.5\text{-}8.0}/ABS_{5.0\text{-}6.5}$ value obtained in accordance with the procedure mentioned above is typically 0.003 or more, particularly 0.005 or more, furthermore 0.007 or more, particularly 0.009 or more, or 0.010 or more, or 0.020 or more, or 0.030 or more, or 0.040 or more, or 0.050 or more, or 0.060 or more, particularly 0.070 or more. On the other hand, the upper limit of this parameter may be, although not particularly limited to, typically 1.000 or less, furthermore 0.9000 or less. The principle is unknown, but it is estimated that the ratio of starch thermally decomposed during its processing becomes relatively small compared to the starch before decomposition, thereby increasing the ratio and finally resulting in a composition of good quality.

The details of the measurement method for $ABS_{6.5\text{-}8.0}$ are the same as those for $ABS_{5.0\text{-}6.5}$ described above, except that the separation fraction with molecular weight logarithms of 6.5 or more but less than 8.0 is used.

(Amylolytic enzyme activity)

The composition of the present invention may preferably have an amylolytic enzyme activity of a predetermined value or less, since the resulting composition maintains its water-holding capacity. Although the principle behind this is unknown, it is estimated that the enzyme affects the starch in the composition under water-containing conditions, resulting in the degradation and reduction of high molecular weight starch, which has high water-holding capacity. Specifically, the amylolytic enzyme activity of the composition may preferably be typically 30.0 U/g or less, particularly 25.0 U/g or less, or 22.0 U/g or less, or 20.0 U/g or less, furthermore 18.0 U/g or less, particularly 16.0 U/g or less, or 14.0 U/g or less, or 12.0 U/g or less, or 10.0 U/g or less, or 8.0 U/g or less, or 6.0 U/g or less, particularly 4.0 U/g or less, in terms of dry mass basis. On the other hand, the lower limit of the ratio may be, although not particularly limited to, typically 0.0 U/g or more.

The amylolytic enzyme activity of a composition may be determined by, although not limited to, the following method.

*Preparation of enzyme solution:

One gram of a crushed sample is combined with 10 mL of 0.5% NaCl/10 mM acetic acid buffer (pH 5), allowed to stand at 4°C for 16 hours, then homogenized into a paste by using a homogenizer NS52 (Microtech Nichion) at 2500 rpm for 30 seconds, allowed to stand at 4°C for another 16 hours, and then filtered through filter paper (Advantec, Qualitative Filter Paper No. 2) to obtain an enzyme solution.

*Measurement of activity:

Two milliliter of 0.05% soluble starch (FUJIFILM Wako Pure Chemicals, starch (soluble) CAS 9005-25-8, product code 195-03961) is put into a test tube and allowed to stand at 37°C for 10 minutes. 0.25 mL of the enzyme solution is added and mixed, the mixture is then allowed to stand at 37°C for 30 minutes, and 0.25mL of 1M HCl is added and mixed. 0.25 mL of potassium iodide solution containing 0.05 mol/L of iodine (0.05 mol/L iodine solution: FUJIFILM Wako Pure Chemicals (product code 091-00475)) is added, mixed, and diluted with 11.5 mL of water. The absorbance of the resulting solution at 660 nm is measured with a spectrophotometer (absorbance A). As a control, 2 mL of 0.05% soluble starch is placed in a test tube and allowed to stand at 37°C for 40 minutes, then 0.25 mL of 1M HCl is added and mixed, followed by addition of 0.25 mL of the enzyme solution, 0.25 mL of 0.05 mol/L iodine solution, and 0.25 mL of water. After dilution, the absorbance at 660 nm is measured with a spectrophotometer (absorbance B). The term "iodine solution" used herein refers to a dilute solution of potassium iodide solution containing 0.05 mol/L of iodine (also simply referred to as "0.05 mol/L iodine solution" or "0.05 mol/L iodine solution). Unless otherwise specified, a mixed potassium iodide solution containing 93.7 mass % water, 0.24 mol/L (4.0% by mass) potassium iodide, and 0.05 mol/L (1.3% by mass) iodine (0.05 mol/L iodine solution (product code 091-00475) manufactured by FUJIFILM Wako Pure Chemicals Co.) is used after dilution. The "0.05 mol/L iodine solution" can be diluted 200 times with water to obtain a "0.25 mM iodine solution."

*Enzyme activity unit (U/g):

A measurement sample is subjected to the enzyme reaction for 30 minutes, and the absorbance reduction rate C (%) at a wavelength of 660 nm measured with a spectrophotometer before and after the reaction was determined as the absorbance reduction rate of the enzyme reaction zone (absorbance A) relative to the comparison zone (absorbance B), i.e., {(absorbance B) - (absorbance A) / (absorbance B)} x 100 (%). The enzyme activity that reduces absorbance by 10% per 10 minutes is determined as one unit (U), and the enzyme activity per gram of the sample measured is determined from the absorbance reduction rate C (%) when the enzyme reaction is conducted with 0.25 mL of the enzyme solution (sample content: 0.025 g) for 30 minutes, using the following formula.

[Formula 1]

$$\text{Enzyme activity unit (U/g)} = \{C \times (10/30) \times (1/10)\} / 0.025$$

(Protein)

The composition of the present invention may preferably contain protein. The lower limit of the protein content in the composition of the present invention may preferably be typically 3.0 mass % or more, particularly 3.5 mass % or more, furthermore 4.0 mass % or more, particularly 4.5 mass % or more, or 5 mass % or more, particularly 6 mass % or more, furthermore 7 mass % or more, particularly 8 mass % or more, or 9 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, or 19 mass % or more, or 20 mass % or more, or 21 mass % or more, particularly 22 mass % or more in terms of dry mass basis. On the other hand, the upper limit of the protein content in the composition of the present invention may be, although not particularly limited to, typically 85 mass % or less, preferably 80 mass % or less, more preferably 75 mass % or less, more preferably 70 mass % or less, more preferably 65 mass % or less, more preferably 60 mass % or less in terms of dry mass basis.

The origin of the protein in the composition of the present invention is not particularly limited. Examples include plant-derived protein and animal-derived protein, of which protein of plant origin (especially pulse) is preferred. Specifically, the ratio of pulse-derived protein content to the total protein content in the whole composition may preferably be typically 10 mass % or more, particularly 20 mass % or more, furthermore 30 mass % or more, particularly 40 mass % or more, or 50 mass % or more, or 60 mass % or more, or 70 mass % or more, or 80 mass % or more, or 90 mass % or more, particularly 100 mass %. The pulse-derived protein may preferably be particularly pea-derived protein, most preferably yellow pea-derived protein.

The protein incorporated in the composition of the present invention may be in the form of an isolated pure product or, preferably, may be present in the state of being contained in pulse. Specifically, the ratio of the content of protein contained in pulse to the total protein content of the composition may preferably be typically 10 mass % or more, particularly 20 mass % or more, furthermore 30 mass % or more, particularly 40 mass % or more, or 50 mass % or more, or 60 mass % or more, or 70 mass % or more, or 80 mass % or more, or 90 mass % or more, particularly 100 mass %.

The protein content in a composition herein can be measured by, e.g., quantifying the total amount of nitrogen using the combustion method (improved Dumas method) specified in the Food Labeling Law ("About Food Labeling Standards" (March 30, 2015, Shokuhin Table No. 139)), and then multiplying the total amount of nitrogen with the "nitrogen-protein conversion factor."

(PDI of protein)

The composition of the present invention may preferably be characterized in that the protein contained therein has a low solubility, since the low solubility imparts a chewy yet easy-to-bite-off texture to the composition. Although the principle behind this is unknown, it is estimated that the insolubilized protein affects the texture of the starch. Specifically, the PDI (protein dispersibility index) value of the composition of the present invention may preferably be less than 55 mass %, particularly less than 50 mass %, furthermore less than 45 mass %, particularly less than 40 mass %, or less than 35 mass %, or less than 30 mass %, or less than 25 mass %, or less than 20 mass %, 又less than 15 mass %, particularly less than 10 mass %. On the other hand, the lower limit of the ratio may be, although not particularly limited to, typically 0 mass % or more, furthermore 2 mass % or more, particularly 4 mass % or more.

The protein dispersibility index (PDI) value herein refers to an index of protein solubility, and can be obtained as the percentage of the soluble nitrogen content to the total nitrogen content in the composition {(soluble nitrogen content in the composition)/(total nitrogen content in the composition) x 100 (%)} according to the standard method. Specifically, a sample to be measured is mixed with 20 times the volume of water and then crushed (using a Microtech Nichion NS-310E3 homogenizer at 8500 rpm for 10 minutes), and the total nitrogen content of the resulting crushed liquid is multiplied by 20 to determine the total nitrogen content of the entire composition. The crushing solution is then centrifuged (3000G for 10 minutes), and the total nitrogen content of the supernatant obtained is then multiplied by 20 to determine the water soluble nitrogen content, whereby the PDI value in the composition can be determined. The total nitrogen content is measured using the combustion method (improved Dumas method) specified in the Food Labeling Law ("About Food Labeling Standards" (March 30, 2015, Shokuhin Table No. 139)).

(Insoluble dietary fiber content)

The composition of the present invention contains insoluble dietary fiber. The term "insoluble dietary fiber" used herein refers to indigestible ingredients in food that cannot be digested by human digestive enzymes and are insoluble in water. The insoluble dietary fiber content may be measured in accordance with the Japan Standard Tables for Food Composition 2015 (7th revised edition) using the Prosky variant method. The composition of the present invention is useful because it does not result in a composition with a grainy texture even when the insoluble fiber content is high. Although the reason for this is not known, it is possible that the high-temperature, high-pressure, strong kneading treatment improves the texture of insoluble dietary fiber by causing the dietary fiber in the composition to interact with starch and protein to form a network structure.

The lower limit of the insoluble dietary fiber content in the composition of the present invention may preferably be typically 2.0 mass % or more, particularly 3 mass % or more, particularly 4 mass % or more, particularly 5 mass % or more, or 6 mass % or more, or 7 mass % or more, or 8 mass % or more, or 9 mass % or more, particularly 10 mass % or more, in terms of dry mass basis. By setting the content of insoluble dietary fiber above the aforementioned lower limit, the composition of the present invention is more likely to have a structure in which the insoluble dietary fiber is homogeneously dispersed in the matrix-like starch in an appropriate size and the starch is distributed in a matrix-like manner, which in turn improves the rubbery texture of the product. The "dry mass" used herein refers to a mass obtained by calculating the moisture content from the aforementioned "moisture content (dry mass basis moisture content)" and subtracting the calculated moisture content from the overall mass of the composition, etc. The "dry mass basis" used herein refers to a content ratio of each component calculated with the dry mass of the composition as the denominator and the content of each component as the numerator

The upper limit of the insoluble dietary fiber content in the composition of the present invention may preferably be, although not particularly limited to, typically 50 mass % or less, particularly 40 mass % or less, furthermore 30 mass % or less in terms of dry mass basis, from the viewpoint of industrial production efficiency.

The origin of the insoluble dietary fiber contained in the composition of the present invention is not particularly limited, and may be either those derived from various naturally-occurring materials containing insoluble dietary fiber or those synthesized. When those derived from naturally-occurring materials are used, insoluble dietary fiber contained in various materials may be isolated, purified, and used, or alternatively, such materials containing insoluble dietary fiber may be used as such. Examples of insoluble dietary fibers that can be used include those derived from cereals, those derived from pulse (beans), those derived from potatoes, those derived from vegetables, those derived from nuts, and those derived from fruits. Preferable among them are those derived from cereals and those derived from pulse (beans) from the viewpoint of the texture of the composition, more preferably those derived from pulse (beans), even more preferably those derived from pea, most preferably those derived from yellow pea. When pulse containing insoluble dietary fiber is used, it may be used either with or without its seed skin, but pulse with seed skin may preferably be used since it has a higher content of dietary fiber.

The insoluble dietary fiber contained in the composition of the present invention may be either in the form of an isolated pure product or, more preferably, in the form of being contained in pulse. Specifically, the ratio of the insoluble dietary fiber contained in pulse to the total insoluble dietary fiber content in the whole composition may preferably be typically 10 mass % or more, particularly 20 mass % or more, furthermore 30 mass % or more, particularly 40 mass % or more, or 50 mass % or more, or 60 mass % or more, or 70 mass % or more, or 80 mass % or more, or 90 mass % or more, particularly 100 mass %.

The constitution of the insoluble dietary fiber contained in the composition of the present invention is not particularly restricted. However, the ratio of lignin (especially acid-soluble lignin) to the total insoluble dietary fiber content (especially to the total insoluble dietary fiber) may preferably satisfy the aforementioned limits or more, since this will make it easier to obtain a more pronounced texture improvement effect. Specifically, the ratio of the lignin content (especially the acid-soluble lignin content) to the total dietary fiber content to the total insoluble dietary fiber content may preferably be typically 5 mass % or more, particularly 10 mass % or more, or 30 mass % or more, in terms of dry mass basis.

(Particle diameter distribution of insoluble dietary fiber)

The composition of the present invention may preferably be characterized in that the particle size of the insoluble fiber contained therein satisfies a certain size or less. If the particle size of the insoluble dietary fiber is too large, the composition may become grainy and undesirable in texture. The reason for this is not known, but it is estimated that coarse insoluble dietary fiber inhibits the formation of matrix structures such as starch, making it difficult for the effects of the invention to be realized. It is highly likely that the insoluble fiber size in randomly crushed pulse powder is more than 450 μm (because the insoluble fiber in pulse is usually rod-shaped, and the laser diffraction particle size distribution measurement according to the invention tends to yield larger values). In particular, when food ingredients containing hard tissues, such as pulse with seed coat, are used as raw materials, the insoluble dietary fiber in the seed coat is coarse and is less easily crushed than the edible portion. Therefore, when such food ingredients are used in the present invention, it may be preferable to use one that has undergone a specific crushing process in advance so that the insoluble dietary fiber contained therein is within a specific size range.

According to the present invention, the particle size of the insoluble dietary fiber in the composition is evaluated by a method including treating the aqueous suspension of the composition with protease and amylase, and subjecting the composition after the starch- and protein-degradation treatment, in which starch and protein are degraded by enzymes, to the ultrasonication, and then to the measurement using a laser diffraction particle size analyzer to determine the particle size distribution. Specifically, 6 mass % aqueous suspension of the composition is treated with 0.4 volume % of protease and 0.02 mass % of α-amylase at 20°C for 3 days (also referred to as "[Procedure b]") to carry out the starch- and protein-digestion treatment, and the enzyme-treated composition is subjected to the measurement for the particle diameter distribution after ultrasonication.

Specifically, the composition of the present invention may preferably be characterized in that the particle size $d_{90}$ in the particle size distribution of insoluble dietary fiber measured by the above procedure is less than 450 μm, more preferably 400 μm or less, more preferably 350 μm or less, more preferably 300 μm or less, more preferably 250 μm or less, more preferably 200 μm or less, more preferably 150 μm or less, more preferably 100 μm or less, more preferably 80 μm or less, more preferably 60 μm or less, 50 μm or less. On the other hand, the lower limit of the particle diameter $d_{90}$ of the insoluble dietary fiber may preferably be, although not particularly limited to, typically 1 μm or more, more preferably 3 μm or more.

Likewise, the composition of the present invention may preferably be characterized in that the particle size $d_{50}$ in the particle size distribution of insoluble dietary fiber measured by the above procedure is less than 450 μm, more preferably 400 μm or less, more preferably 350 μm or less, more preferably 300 μm or less, more preferably 250 μm or less, more preferably 200 μm or less, more preferably 150 μm or less, more preferably 100 μm or less, more preferably 80 μm or less, more preferably 60 μm or less, 50 μm or less. On the other hand, the lower limit of the particle diameter $d_{50}$ of the insoluble dietary fiber may preferably be, although not particularly limited to, typically 1 μm or more, more preferably 3 μm or more.

A more specific procedure for measuring the particle size distribution of insoluble dietary fiber, polysaccharides, etc., in a composition is as follows. 300 mg of the composition is placed in a plastic tube with 5 mL of water, allowed to swell at 20°C for about 1 hour, and then processed using a small Hiscotron (Microtech Nichion homogenizer NS-310E3) until a porridge-like consistency is obtained (about 15 seconds at 1000 rpm) to prepare a 6 mass % water suspension of the composition. 2.5 mL of the treated sample is then divided and combined with 10 μL of protease (Proteinase K, Takara Bio) and 0.5 mg of α-amylase (α-Amylase from Bacillus subtilis, Sigma), and allowed to react at 20°C for 3 days. After the reaction, the resulting protease- and amylase-treated composition is subjected to sonication, and then to measurement for particle size distribution.

The measurement of particle size distribution of a protease- and amylase-treated composition after ultrasonic treatment shall be performed using a laser diffraction particle size analyzer according to the following conditions. Ethanol is used as the solvent for the measurement, which has little effect on the structure of the composition. The laser diffraction particle size analyzer used for the measurement is not limited to any particular type, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. After the sample is loaded, the measurement sample is subjected to ultrasonic treatment by the measurement device, followed by measurement. Specifically, a sample that has not been subjected to ultrasonic treatment is put into the measurement solvent

(ethanol) circulating in the measurement system, the concentration is adjusted to within the appropriate range using the Sample Loading feature, and then the ultrasonic treatment is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 μm; Lower limit of measurement: 0.021 μm.

The term "particle size $d_{90}$" (or the term "particle size $d_{50}$") herein refers to, when the particle size distribution of the object is measured on a volume basis and divided into two parts at a certain particle size, the particle size at which the ratio between the cumulative value of the particle frequency % on the larger side to that on the smaller side are 10:90 (or 50:50). The "ultrasonic treatment" herein refers to a treatment with ultrasonic waves of 40 kHz frequency at an output of 40 W for 3 minutes, unless otherwise specified.

(Total oil and fat content)

The total oil and fat content in the composition of the present invention may preferably be, although not limited to, typically less than 17 mass %, particularly less than 15 mass %, furthermore less than 13 mass %, particularly less than 10 mass %, or less than 8 mass %, or less than 7 mass %, or less than 6 mass %, or less than 5 mass %, or less than 4 mass %, or less than 3 mass %, or less than 2 mass %, or less than 1 mass %, particularly 0.less than 8 mass %, in terms of dry mass basis. On the other hand, the lower limit of the total oil and fat content may preferably be, although not particularly limited to, typically 0.01 mass % or more, in terms of dry mass basis. The total oil and fat content in a solid paste composition can be measured by a method, e.g., according to the Japan Standard Tables for Food Composition 2015 (7th revised edition), using the Soxhlet extraction method with diethyl ether.

The origin of the oil and fat content in the composition of the present invention is not particularly restricted. Examples include plant-derived oils and fats and animal-derived oils and fats, of which plant-derived oils and fats are preferred. Specifically, the ratio of the content of plant-derived oils and fats in the whole composition may preferably be typically 50 mass % or more, particularly 60 mass % or more, furthermore 70 mass % or more, particularly 80 mass % or more, or 90 mass % or more, particularly 100 mass %. Examples of plant-derived oil and fat content include those derived from cereal, those derived from pulse (beans), those derived from potato, those derived from vegetable, those derived from nuts, and those derived from fruits. From the viewpoint of achieving the aforementioned suitable molecular weight distribution of starch, preferred among these are those derived from pulse (beans), particularly pea-derived oil and fat, most preferably yellow pea-derived oil and fat.

The oil and fat content incorporated in the composition of the present invention may be in the form of an isolated pure product or, preferably, may be present in the state of being contained in edible plant (particularly pulse). Specifically, the ratio of the oil and fat content incorporated in pulse to the total protein content of the composition may preferably be typically 50 mass % or more, particularly 60 mass % or more, furthermore 70 mass % or more, particularly 80 mass % or more, or 90 mass % or more, particularly 100 mass %.

Typically 50 mass % or more, particularly 60 mass % or more, furthermore 70 mass % or more, particularly 80 mass % or more, or 90 mass % or more, particularly 100 mass % of the oil and fat content in the composition of the present invention may preferably be derived from pulse, more preferably derived from pulse of the same species, more preferably derived from pulse of the same individual. In addition, typically 50 mass % or more, particularly 60 mass % or more, furthermore 70 mass % or more, particularly 80 mass % or more, or 90 mass % or more, particularly 100 mass % of the oil and fat content in the composition of the present invention may preferably be present in the state of being contained in edible plant.

(Dry mass basis moisture content)

The dry mass basis moisture content in the composition of the present invention may preferably be a predetermined value or less. Specifically, the dry mass basis moisture content in the composition of the present invention may be, although not limited to, 60 mass % or less, or 55 mass % or less, particularly 50 mass % or less, or 45 mass % or less, or 40 mass % or less, or 35 mass % or less, or 30 mass % or less, or 25 mass % or less, or 20 mass % or less, or 15 mass % or less. On the other hand, the lower limit of the dry mass basis moisture content in the composition of the present invention may be, although not limited to, from the viewpoint of industrial production efficiency, 0.5 mass % or more, or 1 mass % or more, or 2 mass % or more. The dry mass basis moisture content of the composition of the present invention may be either derived from various ingredients of the composition or derived from further added water. If the dry mass basis moisture content in the dough composition before processing is high, a process such as drying can be employed to adjust the dry mass basis moisture content to within the aforementioned range.

The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 2]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

(Raw materials)

The raw materials for the compositions of the present invention are not particularly restricted, as long as the various ingredient compositions and properties specified in the present invention can be achieved. However, it may be preferable to use one or more edible plants as raw materials, and it is more preferable to use pulse as edible plants.

*Pulse:

When pulse is used as edible plant in the composition of the present invention, preferable examples of pulse species that can be used include, although not limited to, one or more selected from Pisum, Phaseolus, Cajanus, Vigna, Vicia, Cicer, Glycine, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of foodstuffs not exemplified can be naturally understood by those skilled in the art who deal with the foodstuffs or processed products of the foodstuffs. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more.

When pulse is used for the composition of the present invention, it may be preferable to use mature pulse rather than immature pulse seeds (e.g. green peas, which are immature pea seeds, or edamame, which are immature soybean seeds), because the proportion of the intermediate molecular weight fraction (molecular weight log 6.5 to 8.0) of starch in the composition increases. For the same reason, it may be preferable to use pulse which is in a state where the dry mass basis moisture content is a predetermined value or less as they mature. Specifically, the dry mass basis moisture content in the pulse to be used for the composition of the present invention may preferably be typically less than 15 mass %, particularly less than 13 mass %, furthermore less than 11 mass %, or less than 10 mass %. On the other hand, the lower limit of the dry mass basis moisture content of the pulse may be, although not particularly limited to, typically 0.01 mass % or more.

When pulse is used for the composition of the present invention, the content of pulse in the composition of the present invention may preferably be, although not limited to, typically 50 mass % or more, particularly 55 mass % or more, furthermore 60 mass % or more, or 65 mass % or more, or 70 mass % or more, or 75 mass % or more, or 80 mass % or more, or 85 mass % or more, or 90 mass % or more, particularly 95 mass % or more, in terms of dry mass basis. The upper limit may be, although not particularly limited to, typically 100 mass % or less.

When pulse is used for the composition of the present invention, it may be preferable to use pulse in the form of powder. Specifically, it is preferred to use pulse powder which, when measured using a laser diffraction particle size analyzer after ultrasonication, has a particle diameter $d_{90}$ and/or $d_{50}$ which each satisfy a predetermined upper limit or less. Specifically, the particle diameter $d_{90}$ of the pulse powder after ultrasonication may preferably be less than 500 μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less. Likewise, the particle diameter $d_{50}$ of the pulse powder after ultrasonication may preferably be less than 500 μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less. The lower limit of each of the particle diameters $d_{90}$ and $d_{50}$ after ultrasonication may be, although not particularly limited to, typically 0.3 μm or more, or 1 μm or more, or 5 μm or more, or 10 μm or more. Especially if the composition has a certain size or more during extrusion, the composition tends to pulsate during molding, which deteriorates productivity and may result in an uneven composition surface. Therefore, it may be preferable to use powdered pulse with a certain size or less.

*Other food ingredients:

The composition of the present invention may further contain any one or more food ingredients. Examples of such food ingredients include plant ingredients (vegetables, potatoes, mushrooms, fruits, algae, grains, seeds, etc.), animal ingredients (seafood, meat, eggs, milk, etc.), and microbial food products. The amount of these food ingredients can be set appropriately as long as they do not undermine the purpose of the present invention.

*Seasonings and food additives:

The composition of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

However, in view of the recent increase in nature consciousness, the composition of the present invention may preferably not contain any additives of any one category, more preferably any two categories, most preferably all three categories, of the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers").

*Non-swollen composition:

The composition of the present invention may be either a swollen food product or a non-swollen food product, but may preferably be a non-swollen food product rather than a swollen food product (particularly a swollen food product having a density specific gravity of less than 1.0 due to swelling). As will be explained below, the composition of the present invention may preferably be produced using an extruder, which have often been used for producing swollen products such as puffs. Since the production conditions were typically determined such that the cooling temperature at step (iii) exceeds the lowest temperature at which the composition swells, the convention production method cannot be applied to the production of a non-swollen composition such as the composition of the present invention. This is because the internal temperature transition of the extruder occurs continuously, and if, for example, only the temperature rise condition during kneading is adopted and the outlet temperature setting is adjusted to a lower temperature as required, the effect of lowering the outlet temperature setting affects the temperature during kneading and the entire internal temperature, resulting in completely different conditions, which cannot be controlled by a person skilled in the art as appropriate. In addition, since it was technical common knowledge for those skilled in the art that during the production of puff and other swollen food products, the proportion of moisture in the total mass flow rate should be kept low to allow rapid swelling upon depressurization, there was no motivation to increase the moisture content in the total mass flow rate as in the composition without swelling, as in the present invention. On the other hand, in the production of the compositions of the present invention, the compositions can be obtained by, after kneading the dough composition at high temperature and pressure, lowering the temperature while preventing swelling, usually with pressure applied, and then reducing the pressure to about atmospheric pressure.

[II. Method for Producing Starch-Containing Solid Composition]

Another embodiment of the present invention relates to a method for producing the composition of the present invention (hereinafter also referred to as "the production method of the present invention").

Specifically, the production method of the present invention is characterized by comprising the steps (i) and (ii) below, and preferably the step (iii) and/or step (iv) below.

(i) The step of preparing a composition having a starch content of 10.0 mass % or more in terms of wet mass basis and a dry mass basis moisture content of more than 40 mass % ; and

(ii) The step of kneading the composition prepared at step (i) at a temperature of between 100°C and 190°C under conditions with an SME value of 400 kJ/kg or more until the requirements (1) to (5) below are satisfied.

(1) The composition satisfies the requirement(s) (a) and/or (b) below.

(a) The number of starch grain structures of the composition is 300/$mm^2$ or less.

(b) When 14 mass % aqueous slurry of a crushed product of the composition is subjected to measurement with a rapid visco-analyzer with elevating the temperature from 50°C to 140°C at a rate of 12.5°C/min, the peak temperature of gelatinization is less than 120 °C.

(2) The degree of gelatinization of the composition is 50 mass % or more.

(3) The [value $\alpha$] of the composition is 60% or less.

(4) The [value $\beta$] of the composition is 35% or more.

(5) The $ABS_{5.0-6.5}$ value of the composition is 0.75 or less.

(iii) The step of cooling the kneaded composition from step (ii) to less than 100 °C.

(iv) The step of adjusting the dry mass basis moisture content of the composition to less than 25 mass %. Preferably, the time required after the temperature of the composition drops below 80°C until the dry mass basis moisture content of the composition decreases to less than 25 mass % on a dry weight basis after step (ii) is adjusted to 5 minutes or more.

The production method of the present invention will be explained in details below.

(2) Step (i): Preparation of Dough Composition

In this step (i), a food ingredient as a raw material for the composition of the present invention, e.g., pulse, may be mixed with other food ingredient, seasoning, and other ingredients optionally used to prepare a composition which is a basis for the composition of the present invention (hereinafter also referred to as the "dough composition"). The dough composition (also simply referred to as the "dough" or the "paste dough composition") may be in any form as long as the food ingredients are partly or wholly integrated with water, and it may be in liquid, sol, gel or solid form. For example, it may be in a plasticized form, such as bread dough, or it may be in a non-plasticized form, such as a minced form. The method for preparing the dough composition is not particularly restricted, but may be a method in which a food ingredient as a raw material for the composition of the present invention (preferably at least one or more pulse, optionally in combination with one or more other edible plants) is simply mixed with other food ingredient, seasoning, and other ingredients optionally used to prepare the dough composition.

In an embodiment where the kneading is carried out using an extruder as will be explained below, preparation of the dough composition at step (i) may be carried out either by a method involving adding water to the raw materials before being fed into the extruder (i.e., an embodiment in which the dough composition at step (i) is prepared before being fed into the feeder) or by a method involving adding water to the raw materials already in the extruder (i.e., an embodiment in which the raw materials (e.g. pulses) are fed into the feeder with a moisture content of 25 mass% or less in terms of dry mass basis (e.g., in powder form), and the dough composition at step (i) is prepared by adding water to the raw materials being conveyed by the first flight section), or by a method combining these embodiments. In addition, in an embodiment where the kneading is carried out using an extruder as will be explained below, and the dough composition at step (i) is prepared by adding water to the raw materials being conveyed in the extruder, it may be preferred that the raw materials in the extruder are not exposed to a high temperature of 90 °C or higher (or 95°C, or 100°C ) with a dry mass basis moisture content of less than 25 mass % (or less than 30 mass %, or less than 35 mass %, or less than 40 mass %), since this may render starch more resistant to thermal decomposition.

*Ingredients of the dough composition:

The dough composition may preferably be prepared so as to satisfy the various ingredient requirements explained below.

The starch content in the dough composition in terms of wet mass basis may preferably be typically 10.0 mass % or more, particularly 15 mass % or more, more particularly 20 mass % or more, especially 25 mass % or more, or 30 mass % or more, or 35 mass % or more, or 40 mass % or more, or 45 mass % or more, especially 50 mass % or more. The term "wet mass" used herein refers to the mass of the whole composition including its moisture content, and the "wet mass basis ratio" used herein refers to the ratio of an ingredient of a composition or a fraction calculated with the wet mass of the composition or the fraction including its moisture content as the denominator and the content of the ingredient as the numerator. The upper limit is not particularly restricted, but may be typically 80 mass % or less, or 75 mass % or less, or 70 mass % or less.

The dry mass basis moisture content in the dough composition may preferably be typically more than 40 mass %, particularly more than 45 mass %, more particularly more than 50 mass %, especially more than 55 mass %, or more than 60 mass %, or more than 65 mass %, or more than 70 mass %, or more than 75 mass %, especially more than 80 mass %. The upper limit is not particularly restricted, but may be typically 200 mass % or less, or 175 mass % or less, or 150 mass % or less.

The wet mass basis content of insoluble dietary fiber in the dough composition may preferably be typically 1.5 mass % or more, particularly 2.0 mass % or more, more particularly 3 mass % or more, especially 4 mass % or more, or 5 mass % or more, or 6 mass % or more, or 7 mass % or more, or 8 mass % or more, or 9 mass % or more, especially 10 mass % or more. The upper limit is not particularly restricted, but may be typically 40 mass % or less, or 30 mass % or less.

The wet mass basis content of protein in the dough composition may preferably be typically 3.0 mass % or more, particularly 4.0 mass % or more, more particularly 5.0 mass % or more, especially 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more. The upper limit is not particularly restricted, but may be typically 40 mass % or less, or 30 mass % or less.

The contents of insoluble dietary fiber, starch, and protein in the dough composition herein each refer to the wet mass basis ratio calculated with the mass of the whole dough composition containing water as a denominator and the content of each ingredient as a numerator, and may be adjusted so as to satisfy their respective predetermined ranges by adjusting the ingredients contained in the edible plant (e.g., pulse) to be used as a raw material as appropriate.

When edible plant (e.g., pulse) is used as a raw material for the dough composition, the wet mass basis ratio of such edible plant (e.g., pulse) may preferably be 30 mass % or more, particularly 40 mass % or more, more particularly 50 mass % or more, especially 60 mass % or more, or 70 mass % or more, or 80 mass % or more, or 90 mass % or more, or 100 mass %. The upper limit is not particularly restricted, but may be typically 100 mass % or less.

The origin of the total starch content and/or the total protein content in the composition of the present invention is not particularly limited, and may be derived either from various raw materials used for the composition or from an isolated pure product externally. When edible plant (e.g., pulse) is used as a raw material for the dough composition, the ratio of the starch content and/or the protein content derived from edible plant (e.g., pulse, especially heat-treated pulse explained below) to the total starch content and/or the total protein content in the dough composition may preferably be a predetermined value or more. Specifically, the ratio of the starch content derived from edible plant (e.g., pulse, especially heat-treated pulse explained below) to the total starch content in the dough composition may preferably be 30 mass % or more, particularly 40 mass % or more, more particularly 50 mass % or more, especially 60 mass % or more, or 70 mass % or more, or 80 mass % or more, or 90 mass % or more, or 100 mass %. The upper limit is not particularly restricted, but may be typically 100 mass % or less. Likewise, the ratio of the protein content derived from edible plant (e.g., pulse, especially heat-treated pulse explained below) to the total protein content in the dough composition may preferably be 10 mass % or more, particularly 20 mass % or more, more particularly 30 mass % or more, especially 40 mass % or more, or 50 mass % or more, or 60 mass % or more, or 70 mass % or more, or 80 mass % or more, or 90 mass % or more, especially 100 mass %. The pulse-derived protein may preferably be pea-derived protein, most preferably protein derived from yellow pea.

*Degree of gelatinization of starch:

It is preferred to use gelatinized starch as a raw material of the dough composition, since this facilitates the gelatinization step (i.e., step (ii) explained below). Specifically, the degree of gelatinization of the starch contained in the composition before the gelatinization step (i.e., at step (i)) may preferably be a predetermined value or more. Specifically, the upper limit may preferably be 10 mass % or more, particularly 20 mass % or more, more particularly 30 mass % or more, or 30 mass % or more, or 40 mass % or more, or 50 mass % or more, or 60 mass % or more, or 70 mass % or more, or 80 mass % or more, or 90 mass % or more. The upper limit is not particularly restricted, but may be typically 100 mass % or less.

For the same reason, the starch contained in the composition before the gelatinization step (i.e., at step (i)) may preferably be starch heated at a predetermined temperature or higher in advance. Specifically, the heat temperature may preferably be 80 °C or higher, particularly 90 °C or higher, more particularly 100 °C or higher, or 110 °C or higher, or 120 °C or higher. The upper limit is not particularly restricted, but may be typically 200 °C or lower, more particularly 180 °C or lower. In addition, since starch heated at a high temperature with a dry mass basis moisture content of less than a predetermined value may have a low processability due to thermal decomposition, the starch contained in the composition before the gelatinization step (i.e., at step (i)) may preferably be starch heated with a dry mass basis moisture content of a predetermined value or higher. Specifically, it may be preferable to use heat-treated starch which have been heated with a dry mass basis moisture content of more than 25 mass %, particularly more than 30 mass %, more particularly more than 35 mass %, especially more than 40 mass %, or more than 45 mass %, or more than 50 mass %, or more than 55 mass %, or more than 60 mass %, or more than 65 mass %, or more than 70 mass %, or more than 75 mass %, especially more than 80 mass %, at a predetermined temperature or higher (specifically, for example 80 °C or higher, particularly 90 °C or higher, more particularly 100 °C or higher, or 110 °C or higher, or 120 °C or higher, while the upper limit is not particularly restricted, but may be for example 200 °C or lower, more particularly 180 °C or lower). The upper limit of the dry mass basis moisture content during the teat treatment is not particularly restricted, but may be typically 200 mass % or less, or 175 mass % or less or 150 mass % or less.

*Starch degrading enzyme activity in raw materials:

In order to provide the composition of the present invention with a starch degrading enzyme activity of a predetermined value or lower, it may be preferable to use, as a raw material for the dough composition at this step (i), starch or starch-containing edible plant (e.g., pulse) which has been processed so as to adjust the starch degrading enzyme activity to less than a predetermined value. Specifically, such raw materials may preferably be used such that the starch degrading enzyme activity in the dough composition containing starch or starch-containing edible plant (e.g., pulse) in terms of dry mass basis is 100 U/g or less, particularly 90.0 U/g or less, or 80.0 U/g or less, or 70.0 U/g or less, or 60.0 U/g or less, or 50.0 U/g or less, or 40.0 U/g or less, or 30.0 U/g or less. On the other hand, the lower limit may be, although not particularly limited to, typically 0.0 U/g or more, or 5.0 U/g or more, or 10.0 U/g or more, or 20.0 U/g or more, or 30.0 U/g or more, or 35.0 U/g or more. Since starch degrading enzymes contained in edible plants (e.g., pulse) are extremely heat-resistant in general, in order to obtain an edible plant with a low starch degrading enzyme activity, it may be preferable to use a processing method in which heat treatment is carried out at a predetermined temperature or higher with a dry mass basis moisture content of 50 mass % or more. Specifically, it may preferably be 100 °C or higher, particularly 110 °C or higher, especially 120 °C or higher. On the other hand, the upper limit of the temperature may be, although not particularly limited to, typically less than 200°C. The duration of heating may be set as appropriate as long as the starch degrading enzyme activity is adjusted at a predetermined value, but may be typically 0.1 minute or more.

According to the present invention, the starch degrading enzyme activity (U/g) may preferably decrease before and after step (ii) by 20 % or more (i.e., the decreasing ratio defined as "{(in the composition before step (ii) starch degrading enzyme activity (U/g)) - (the starch degrading enzyme activity in the composition after step (ii) (U/g))} / (the starch degrading enzyme activity in the composition before step (ii) (U/g))" corresponds to a predetermined value or higher), since this may serve to promote the effects of the present invention. The ratio may preferably be particularly 25 % or more, more particularly 30 % or more, especially 35 % or more, or 40 % or more, or 45 % or more, or 50 % or more, or 55 % or more, or 60 % or more, especially 65 % or more. The decreasing ratio corresponding to a predetermined value or higher encompasses special cases where the starch degrading enzyme activity (U/g) in the composition before step (ii) is 0.0U/g and the ratio therefore diverges to infinity. When the starch degrading enzyme activity (U/g) in the composition before step (ii) is more than 0.0, the upper limit of the ratio is not particularly limited, and may be for example typically 100 % or less, or 95 % or less.

*PDI of raw materials:

In order to provide the composition of the present invention with a PDI value of less than a predetermined value, it may be preferable to use, as a raw material for the dough composition at this step (i), protein or protein-containing edible plant (e.g., pulse) which has been processed so as to adjust the PDI value to less than a predetermined value. Specifically, the PDI value of protein or protein-containing edible plant (e.g., pulse) to be used as a raw material of the dough composition may preferably be less than 90 mass %, particularly less than 85 mass %, more particularly less than 80 mass %, especially 75 mass % less than, or less than 70 mass %, or less than 65 mass %, or less than 60 mass %, or less than 55 mass %, or less than 50 mass %, or less than 45 mass %, or less than 40 mass %, or less than 35 mass %, or less than 30 mass %, or less than 25 mass %, or less than 20 mass %, or less than 15 mass %, especially less than 10 mass %. On the other hand, the lower limit of the ratio may be, although not particularly limited to, typically 0 mass % or more, more particularly 2 mass % or more, particularly 4 mass % or more. In addition, the composition may more preferably be characterized in that the ratio of the protein content contained in edible plant (e.g., pulse) to the total protein content in the composition is a predetermined value or higher while the PDI value is a predetermined value or lower, since the food texture improvement effect of the composition may be even more pronounced. As a processing method for obtaining a protein with a low PDI value in the state of being contained in edible plant (e.g., pulse), it may be preferable to carry out heat treatment in a circumstance with a dry mass basis moisture content of 30 mass % or more at a predetermined temperature or higher, e.g., preferably 80 °C or higher, particularly 90 °C or higher, more particularly 100 °C or higher, especially 110 °C or higher. The upper limit of the temperature may be, although not particularly limited to, typically less than 200°C. The duration of heating may be set as appropriate as long as the PDI value is adjusted at a predetermined value, but may be typically 0.1 minute or more.

*Particle diameter of insoluble dietary fiber in raw materials:

When edible plant (e.g., pulse) is used as a raw material for the dough composition, since the kneading treatment does not significantly change the shape of insoluble dietary fiber, the insoluble dietary fiber derived from such edible plant (e.g., pulse) may preferably have a predetermined size. It is highly likely that the insoluble fiber size in randomly crushed pulse powder is more than 450 μm (because the insoluble fiber in pulse is usually rod-shaped, and the laser diffraction particle size distribution measurement according to the invention tends to yield larger values). Therefore, the insoluble dietary fiber contained in food ingredients to be used in the present invention (especially food ingredients containing hard tissues, such as pulse with seed coat) may preferably have undergone specific crushing treatment in advance so as to adjust its size to within a specific range. Specifically, as explained above for the insoluble dietary fiber in composition, the particle size of the insoluble dietary fiber in edible plant (e.g., pulse) is evaluated by a method including treating the aqueous suspension of the edible plant (e.g., pulse)with protease and amylase, and subjecting the composition after the starch- and protein-degradation treatment, in which starch and protein are degraded by enzymes, to the ultrasonication, and then to the measurement using a laser diffraction particle size analyzer to determine the particle size distribution. Specifically, 6 mass % aqueous suspension of the edible plant (e.g., pulse) is treated with 0.4 volume % of protease and 0.02 mass % of α-amylase at 20°C for 3 days (also referred to as "[Procedure b]") to carry out the starch- and protein-digestion treatment, and the enzyme-treated composition is subjected to the measurement for the particle diameter distribution ($d_{90}$ and/or $d_{50}$) after ultrasonication. Such treatment degrades starch and protein among the constituents of the edible plant, so that the particle size distribution of the resulting degraded product is considered to reflect the particle size distribution of the structure composed mainly of insoluble dietary fiber.

Specifically, the particle diameter $d_{90}$ of the insoluble dietary fiber in the edible plant (e.g., pulse) obtained via the procedure mentioned above may preferably be 450 μm or less, more preferably, 400 μm or less, more preferably 350 μm or less, more preferably 300 μm or less, more preferably 250 μm or less, more preferably 200 μm or less, more preferably 150 μm or less, more preferably 100 μm or less, more preferably 80 μm or less, more preferably 60 μm or less, more preferably 50 μm or less. Likewise, the particle diameter $d_{50}$ of the insoluble dietary fiber in the edible plant (e.g., pulse) obtained via the procedure mentioned above may preferably be 450 μm or less, more preferably 400 μm or less, more preferably 350 μm or less, more preferably 300 μm or less, more preferably 250 μm or less, more preferably 200 μm or less, more preferably 150 μm or less, more preferably 100 μm or less, more preferably 80 μm or less, more preferably 60 μm or less, more preferably 50 μm or less. If the particle diameter $d_{90}$ and/or $d_{50}$ of the insoluble dietary fiber in the edible plant exceeds these upper limits, the effects of the present invention may not be easily obtained. The reason for this is not clear, but it is estimated that large and coarse insoluble dietary fibers inhibit the formation of matrix structure from starch, etc., making it difficult for the effects of the invention to be achieved. On the other hand, the lower limit of the particle diameter $d_{90}$ and/or the particle diameter $d_{50}$ of insoluble dietary fiber contained in edible plant may preferably be, although not particularly limited to, typically 1 μm or more, more preferably 3 μm or more.

*CFW-stained sites in raw materials:

When edible plant (e.g., pulse) is used as a raw material for the dough composition, since the kneading treatment does not significantly change the shape of insoluble dietary fiber, the insoluble dietary fiber contained in the edible plant (e.g., pulse) may preferably have predetermined shapes. Specifically, as explained above for the insoluble dietary fiber in composition, when water suspension of edible plant (e.g., pulse) is treated with protease and amylase to enzymatically digest starch and protein to prepare a starch- and protein-digested product (specifically, a processed product from the starch- and protein-digestion treatment of [Procedure b]), and the product is stained with CFW (Calcofluor White) and then observed under fluorescence microscope, the average of the longest diameters and/or the average of the aspect ratios of CFW-stained sites each may preferably satisfy a predetermined value or lower. The thus-obtained CFW-stained sites are deemed to have structures composed mainly of insoluble dietary fiber. Specifically, the arithmetic average of the longest diameters of CFW-stained sites in edible plant (e.g., pulse) measured in accordance with the procedure explained above may preferably be typically 450 μm or less, particularly 400 μm or less, or 350 μm or less, or 300 μm or less, or 250 μm or less, or 200 μm or less, or 150 μm or less, or 100 μm or less, or 80 μm or less, more particularly 60 μm or less, especially 50 μm or less. If the average of the longest diameters of CFW-stained sites exceeds these limits, the effects of the present invention may be less likely to be achieved. The reason for this is not clear, but it is estimated that insoluble dietary fibers with large diameters inhibit the formation of matrix structure from starch, etc., making it difficult for the effects of the invention to be achieved. On the other hand, the lower limit of the arithmetic average of the longest diameters of CFW-stained sites may preferably be, although not particularly limited to, typically 2 μm or more, more preferably 3 μm or more. The "average value" (also referred to as "average" or "arithmetic average value") used herein refers to an arithmetic average, unless otherwise indicated.

Since the kneading treatment at step (ii) does not significantly change the shape of insoluble dietary fiber, it may be preferable to use an edible plant (e.g., pulse) in powder form which has been processed such that the insoluble dietary fiber contained therein has an aspect ratio of a predetermined value or lower. It is highly likely that the insoluble fiber size in randomly crushed pulse powder is more than 450 μm (because the insoluble fiber in pulse is usually rod-shaped, and the laser diffraction particle size distribution measurement according to the invention tends to yield larger values). In addition, if edible plant (e.g., pulse) powder is subjected to air sorting, it is likely that edible plant particles having specific shapes are removed, rendering the aspect ratios of CFW-stained sites in the resulting insoluble dietary fiber powder to be either too high or too low. Therefore, it may be preferable to use an edible plant (e.g., pulse) powder that has been subjected to certain crushing treatment to adjust the arithmetic average of the aspect ratios of CFW-stained sites, which are composed mainly of insoluble dietary fiber, to within a predetermined range. Specifically, the arithmetic average of the aspect ratios of CFW-stained sites in edible plant (e.g., pulse) measured in accordance with the procedure explained above may preferably be typically 5.0 or less, particularly 4.5 or less, or 4.0 or less, or 3.5 or less, or 3.0 or less, or 2.5 or less, especially 2.0 or less. If the average of the aspect ratios of CFW-stained sites exceeds these limits, the effects of the present invention may be less likely to be achieved. The reason for this is not clear, but it is estimated that insoluble dietary fibers with large aspect ratios inhibit the formation of matrix structure from starch, etc., making it difficult for the effects of the invention to be achieved. On the other hand, the lower limit of the arithmetic average of the aspect ratios of CFW-stained sites may preferably be, although not particularly limited to, typically 1.1 or more, more preferably 1.3 or more.

The specific conditions and procedures for measuring various parameters related to insoluble dietary fiber in edible plant (e.g., pulse) used as a raw material for the dough composition, i.e., amylase and protease treatment, ultrasonication, particle size distribution (particle size $d_{90}$ and $d_{50}$) measurement, CFW staining and fluorescence microscopy, can be determined in accordance with the aforementioned methods for measuring various parameters related to insoluble dietary fiber in a composition explained above.

*Pulverization and powdering of raw materials:

When edible plant (e.g., pulse) is used as a raw material for the dough composition in the present invention, the edible plant may preferably have undergone pulverization and powdering process. The means and conditions for the pulverization and powdering process are not particularly limited. Specifically, the temperature during the pulverization and powdering process is not particularly limited, but it may preferably be dried at a temperature of 200°C or lower, for example, since if the powder is exposed to too high temperatures, the elasticity of the composition of the present invention tends to decrease. However, when pulse is used as the edible plant and heated before subjected to pulverization and powdering for use, the temperature is not particularly limited since the heat load is reduced. The pressure during the pulverization and powdering process is not limited, and may be chosen from high pressures, normal pressures, and low pressures. Examples of devices for the pulverization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

*Heating and water addition treatment of raw materials:

When edible plant (e.g., pulse) containing starch is used as a raw material for the dough composition in the present invention, it is preferred to use edible plant that has been heated under water-containing conditions as a pre-treatment. It is particularly desirable to use edible plant that has been heated in an environment where the dry mass basis moisture content is adjusted to a predetermined value or higher (wet heating), since this may facilitate the formation of structures in the resulting paste composition for food cooking.

Specifically, the dry mass basis moisture content of edible plant upon heating may preferably be, although not limited to, typically 25 mass % or more, particularly 30 mass % or more, or 40 mass % or more, especially 50 mass % or more. The upper limit of the dry mass basis moisture content is not particularly restricted, but may be typically 200 mass % or less, particularly 175 mass % or less. The heating temperature of edible plant may preferably be, although not limited to, typically 80 °C or higher, particularly 90 °C or higher, more particularly 100 °C or higher, and typically 200 °C or lower, particularly 190 °C or lower.

According to the present invention, it is more preferable to use both an edible plant containing starch and an edible plant containing protein, more preferably an edible plant containing both starch and protein, and after pre-heating them with water, and subject the edible plant(s) to pre-heating under water addition conditions before use.

On the other hand, when starch-containing edible plant (e.g., pulse) that has been powdered (e.g., to have a $d_{90}$ and/or $d_{50}$ < 1000μm) is subjected to pre-heating treatment before use, it may not be preferable to use edible plant heated (e.g., at 90°C or higher) in a dry environment with a dry mass basis moisture content of less than 25 mass %, since localized heating of the starch may result in overheating, which may accelerate the thermal degradation of the amylopectin in its structure and gives the composition a sticky quality.

*Iodine stainability of the dough composition

The dough composition prepared at step (i) may preferably be characterized in that the $ABS_{5.0-6.5}$ value, which is measured in accordance with the same method as that used for the composition of the present invention, is a predetermined value or less. Specifically, the $ABS_{5.0-6.5}$ value thus obtained for the dough composition may preferably be typically 0.80 or less, particularly 0.75 or less, more particularly 0.70 or less, especially 0.65 or less, or 0.60 or less, or 0.55 or less, or 0.50 or less, or 0.45 or less, or 0.40 or less, or 0.35 or less, especially 0.30 or less. On the other hand, the lower limit of this parameter may be, although not particularly limited to, typically 0.00 or more, more particularly 0.10 or more, particularly 0.20 or more. Although the principle behind this is unknown, it is estimated that a composition with high stainability of such separated fractions may contain a high amount of starch degradation products derived from starch fractions with higher molecular weights (which is thought to be degradation products with molecular weight logarithms of 5.0 or more but less than 6.5, which results from amylopectin contained mainly in a fraction with molecular weight logarithms of 6.5 or more but less than 8.0, due to thermal degradation associated with hyperthermalization), and such starch degradation products may have characteristics that tend to reduce elasticity upon addition of water.

The dough composition prepared at step (i) may also preferably be characterized in that the $ABS_{6.5-8.0}/ABS_{5.0-6.5}$ ratio, which is measured in accordance with the same method as that used for the composition of the present invention, is a predetermined value or more. Specifically, the $ABS_{6.5-8.0}/ABS_{5.0-6.5}$ ratio thus obtained for the dough composition may preferably be typically 0.003 or more, particularly 0.005 or more, more particularly 0.007 or more, especially 0.009 or more, or 0.010 or more, or 0.020 or more, or 0.030 or more, or 0.040 or more, or 0.050 or more, or 0.060 or more, especially 0.070 or more. On the other hand, the upper limit of this parameter may be, although not particularly limited to, typically 1.000 or less, more particularly 0.9000 or less. Although the principle behind this is unknown, it is estimated that the proportion of thermally decomposed starch becomes relatively low compared to the original starch before decomposition, and results in good quality of the composition. Compared to starch in a raw material that has neither been powdered nor exposed to high temperatures, starch in a raw material that has been powdered and kneaded at high temperatures with a low dry mass basis moisture content tends to undergo thermal decomposition more significantly, so that its $ABS_{6.5-8.0}/ABS_{5.0-6.5}$ ratio is likely to be less than 0.003 (Test Example 43). In fact, as demonstrated by Test Example 21 below, when a dough composition was kneaded while being heated to 80°C in powder form and thereby became in an overheated state, the $ABS_{6.5-8.0}/ABS_{5.0-6.5}$ ratio measured for the resulting dough composition in the extruder immediately after the kneading at 80°C was 0.001, as shown in the "Temperature conditions for each barrel segment" (2) section below.

In the production method of the present invention, it may be preferable to carry out the production steps with observing not only the dough composition prepared at step (i) and the final composition of the present invention, but also throughout the entire production process, by controlling the thermal history of starch so that the $ABS_{5.0-6.5}$ value and $ABS_{6.5-8.0}/ABS_{5.0-6.5}$ ratio measured in accordance with the aforementioned procedures for multiple intermediate compositions produced in the course of production satisfy the aforementioned requirements (i.e., by providing the heat necessary such that the ratio of the medium molecular weight fraction in the composition of the present invention increases, while avoiding over-heating to such an extent that the starch decomposes).

*Particle diameter of the dough composition

The particle size of the dough composition as a whole may preferably be similar in size to the edible plant (e.g., pulse) powder mentioned above as a preferably used raw material. Specifically, when measuring the particle size of the entire dough composition, a 1 cm square lump of a composition sample is immersed in 50 mL of a solvent for particle size distribution measurement (e.g. ethanol) at 80°C, allowed to stand for about 5 minutes, then stirred well while crushing with a spatula, suspended in liquid, and sieved with a 8-mesh sieve having an aperture size of 2.36 mm and a line diameter (Wire Dia.) of 1.0 mm to thereby prepare a solution for measurement (also referred to as the suspension). This solution is subjected to ultrasonication and then to particle diameter measurement using a laser diffraction particle size distribution analyzer. The particle diameter $d_{90}$ after ultrasonication may preferably be typically 500 µm or less, particularly 450 µm or less, or 400 µm or less, or 350 µm or less, or 300 µm or less, or 250 µm or less, or 200 µm or less, or 150 µm or less, or 100 µm or less, or 90 µm or less, or 80 µm or less, or 70 µm or less, or 60 µm or less, or 50 µm or less. The particle diameter $d_{50}$ after ultrasonication may preferably be typically 500 µm or less, particularly 450 µm or less, or 400 µm or less, or 350 µm or less, or 300 µm or less, or 250 µm or less, or 200 µm or less, or 150 µm or less, or 100 µm or less, or 90 µm or less, or 80 µm or less, or 70 µm or less, or 60 µm or less, or 50 µm or less. The lower limit of each of $d_{90}$ and $d_{50}$ is not particularly restricted, but may be typically 0.3 µm or more, or 1 µm or more.

The term "mesh" used herein refers to a unit of mesh density for metallic wire meshes, sieves, filters, etc., and represents the number of mesh apertures per inch. For example, "8 mesh pass" means a fraction that passes through a sieve with an aperture size of 2.36 mm. Wire thickness values and aperture spacing values related to mesh-on parameters may be the values specified in U.S.A. Standard Testing Sieves ASTM Specifications E 11-04 (e.g., 8 mesh corresponds to "No. 8" as defined in "Alternative" of the Nominal Dimensions, Permissible Variation for Wire Cloth of Standard Testing Sieves (U.S.A.) Standard Series in this document) or equivalent values, unless otherwise specified.

(3) Step (ii): Kneading Treatment under High Temperature Conditions

The dough composition obtained at step (i) is kneaded at a certain strength under specific high-temperature conditions. This strong kneading under high temperature conditions allows the desired molecular weight distribution of starch explained above to develop properly, whereby the effect of the invention is achieved. In particular, kneading under predetermined high-temperature and high-pressure conditions is more desirable since it enhances the effect of preventing insoluble ingredients from flowing out. The reason for this is not clear, but presumably because processing under specific high-temperature conditions, preferably under high-temperature and high-pressure conditions with a predetermined dry mass basis moisture content, may cause the proteins, starches, and insoluble dietary fibers in the paste dough composition to form a composite structure on the surface of the composition, which may particularly reduce the outflow of insoluble components. On the other hand, ordinary noodles made of refined starch as a raw material, such as cold noodles, contain only a very small amount of dietary fiber in particular, so the structure unique to the composition of the present invention does not develop properly, whereby the effect of the invention may not be achieved.

As for the specific conditions during kneading, the SME (specific mechanical energy) value calculated according to Equation I below may be equal to or higher than a predetermined value, since this may serve to break down the starch grains sufficiently to develop the properties of a matrix. Specifically, the SME value with which the kneading is carried out may preferably be typically 400 kJ/kg or more, particularly 450kJ/kg or more, more particularly 500kJ/kg or more, or 550kJ/kg or more, or 600kJ/kg or more, or 700kJ/kg or more, especially 800 kJ/kg or more. When an extruder is used for the kneading, screw rotation speed may preferably be set at higher than 150rpm, more preferably higher than 200rpm, still more preferably higher than 250rpm.

[Formula 3]

$$SME = \frac{\frac{N}{N_{max}} \times \frac{\tau - \tau_{empty}}{100}}{Q} \times P_{max} \times 3600 \qquad \text{Equation I}$$

N: Screw rotation speed during kneading (rpm)
$N_{max}$: Maximum screw speed (rpm)
$\tau$: Kneading torque / maximum torque (%)
$\tau_{empty}$: Idling torque / maximum torque (%)
Q: Total mass flow rate (kg/hr)
$P_{max}$: Maximum power of the agitator (e.g. extruder) (kW)

In addition, the aforementioned kneading may more preferably be carried out at such a high temperature as 100 °C or higher, more preferably 110 °C or higher, more preferably 120 °C or higher, since the starch grain structure is more likely to be destroyed. When an extruder is used, the kneading at a high temperature with a high SME value as described above may preferably be carried out at 3% or more (more preferably 5% or more, still more preferably 8% or more, still more preferably 10% or more, still more preferably 15% or more, still more preferably 20% or more) of the total barrel length. Since the starch grain structures derived from pulse and seeds are more robust, the kneading at a high temperature with a high SME value as described above is more useful. The upper limit of the kneading temperature may preferably be 200°C or less, more preferably 190°C or less, more preferably 180°C or less, more preferably 170°C or less, more preferably 160°C or less. If the temperature at this step exceeds the above-mentioned upper limit, especially when an extruder is used for kneading, the temperature at the time of extrusion of the composition from the die section of the extruder may not be sufficiently low.

When the above kneading is carried out under pressurized conditions relative to atmospheric pressure, it is more desirable to carry out the kneading under conditions in which a higher pressure than usual is applied, as this will facilitate the development of the stained site structure according to the present invention. When an extruder is used, the pressure during the kneading can be measured by measuring the outlet pressure of the extruder. When kneading is carried out under pressurized conditions relative to atmospheric pressure, the lower limit of the pressure to be applied may preferably be typically 0.1MPa or more, preferably 0.3MPa or more, more preferably 0.5MPa or more, more preferably 1MPa or more, more preferably 2MPa or more, more preferably 3MPa or more. The upper limit of the pressure is not particularly limited, but it may be 50MPa or less. It is also preferable to install a flow retardation structure on the tip side of the extruder, near the end point of the kneading segment (preferably just after the end point of the kneading segment), as this can serve to increase the pressure in the kneading segment.

The kneading time can be determined appropriately based on various conditions such as the kneading temperature and pressure and the size of the kneading vessel. In particular, since the amount of heat applied to the composition varies greatly depending mainly on the characteristics of the apparatus used, it may be preferable to determine the processing time such that the physical properties of the composition before and after the processing are adjusted to within their respective desired ranges mentioned above.

The kneading time is not particularly restricted, but may be generally as follows. The lower limit of the kneading time may preferably be typically 0.1 minute or more, particularly 0.2 minute or more, more particularly 0.3 minute or more, or 0.4 minutes or more, or 0.5 minutes or more, or 0.8 minute or more, or 1 minutes or more, especially 2 minutes or more. The upper limit of the kneading time is not particularly restricted, but may be typically 60 minutes or less, particularly 30 minutes or less, more particularly 15 minutes or less.

It is a surprising finding completely unknown in the past that kneading a dough composition under such severe high-temperature and high-pressure conditions serves to form a complex structure of proteins, starches, insoluble dietary fibers, etc., and improve the texture of the compositions, whereby the outflow of insoluble and soluble ingredients of the composition may be suppressed.

The kneading treatment at step (ii) may preferably be carried out until the number of starch grain structures in the composition becomes a predetermined value or lower. Although the principle behind this is unknown, it is estimated that processing the composition under such high-temperature, high-pressure, and strong kneading conditions with its starch grain structures being disrupted helps the starch spread in a matrix form throughout the composition, whereby amylopectin in the starch forms a structure that makes it easier for the resulting composition to express elasticity during water retention. Specifically, the kneading treatment of the composition may preferably be carried out until the resulting composition satisfies the requirement(s) (a) and/or (b) below, more preferably both the requirements (a) and (b).

(a) When 6% suspension of a crushed product of the composition is observed, the number of starch grain structures observed is 300/mm$^2$ or less.
(b) When 14 mass % aqueous slurry of a crushed product of the composition is subjected to measurement with a rapid visco-analyzer with elevating the temperature from 50°C to 140°C at a rate of 12.5°C/min, the peak temperature of gelatinization obtained is lower than 120°C.

With regard to the requirement (a), the number of starch grain structures observed under the conditions mentioned above for the composition after the kneading treatment at step (ii) may preferably be typically 300/mm$^2$ or less, particularly 250/mm$^2$ or less, more particularly 200/mm$^2$ or less, especially 150/mm$^2$ or less, or 100/mm$^2$ or less, or 50/mm$^2$ or less, or 30/mm$^2$ or less, or 10/mm$^2$ or less, especially 0/mm$^2$. The details of the starch grain structures are the same as those explained above for the composition of the present invention.

With regard to the requirement (b), the peak temperature of gelatinization measured under the conditions mentioned above for the composition after the kneading treatment at step (ii) may preferably be typically less than 120 °C, particularly less than 115 °C. The details of the peak temperature of gelatinization are the same as those explained above for the composition of the present invention.

The degree of gelatinization of starch in the composition after the kneading at step (ii) may preferably be a predetermined value or higher, from the viewpoint of preventing shape collapse during heat cooking. Specifically, the degree of gelatinization of starch in the composition after the kneading at step (ii) may preferably be typically 50 mass % or more, particularly 55 mass % or more, more particularly 60 mass % or more, especially 65 mass % or more, or 70 mass % or more, or 75 mass % or more, especially 80 mass % or more. The upper limit of the degree of gelatinization is not particularly restricted, but if it is too high, the starch may break down and the composition may become sticky and of undesirable quality. Accordingly, the upper limit of the degree of gelatinization may preferably be 100 mass % or less, 99 mass % or less, particularly 95 mass % or less, more particularly 90 mass % or less.

The kneading treatment at step (ii) may preferably be carried out until the ratio of the area under the curve in an interval with molecular weight logarithms of 5.0 or more but less than 6.5, i.e., [value $\alpha$], becomes typically 60 % or less, particularly 55 % or less, or 50 % or less, or 45 % or less, or 40 % or less, or 35 % or less. The details of the [value $\alpha$] are the same as those explained above for the composition of the present invention.

The kneading treatment of the composition of the present invention may preferably be carried out until the ratio of the area under the curve in an interval with molecular weight logarithms of 6.5 or more but less than 8.0, i.e., [value $\beta$], becomes typically 35 % or more, particularly 40 % or more, or 45 % or more, or 50 % or more, or 55 % or more, or 60 % or more. The details of the [value$\beta$] are the same as those explained above for the composition of the present invention.

According to the present invention, the composition may preferably be kneaded in such a manner that the number of starch grain structures decreases through step (ii). Although the principle behind this is unknown, it is estimated that processing the composition under such high-temperature, high-pressure, and strong kneading conditions with its starch grain structures being disrupted helps the starch spread in a matrix form throughout the composition, whereby amylopectin in the starch forms a structure that makes it easier for the resulting composition to express elasticity during water retention. Specifically, the kneading treatment of the composition may preferably be carried out until the resulting composition satisfies the requirement(s) (c) and/or (d) below, more preferably both the requirements (c) and (d).

(c) When 6% suspension of a crushed product of the composition is observed, the number of starch grain structures decreases by more than 5% during step (ii).

(d) When 14 mass % aqueous slurry of a crushed product of the composition is subjected to measurement with a rapid visco-analyzer with elevating the temperature from 50°C to 140°C at a rate of 12.5°C/min, the peak temperature of gelatinization decreases by 1 °C or higher during step (ii).

According to the present invention, it may be preferable that as defined in the requirement (c), the number of starch grain structures observed in 6% suspension of a crushed product of the composition decreases before and after step (ii) by a specific decrement (i.e., the decreasing ratio calculated by "{(the number of starch grain structures in the composition before step (ii)) - (the number of starch grain structures in the composition after step (ii))}/(the number of starch grain structures in the composition before step (ii))" satisfies a predetermined value or higher), specifically by 5 % or more, particularly 10 % or more, more particularly 15 % or more, especially 20 % or more, or 25 % or more, or 30 % or more, or 35 % or more, or 40 % or more, or 45 % or more, especially 50 % or more. The upper limit is not particularly restricted, but may be typically 100 % or less, or 95 % or less. The kneading treatment at step (ii) may more preferably carried out in such a manner that the decreasing ratio of the number of starch grain structures before and after step (ii) satisfies the above requirement especially when 6% suspension of a crushed product of the dough composition at step (i) is observed, the number of starch grain structures observed is more than 100, or more than 200, or more than 300.

According to the present invention, it may be preferable that as defined in the requirement (d), the peak temperature of gelatinization measured for 14 mass % aqueous slurry of a crushed product of the composition with a rapid visco-analyzer with elevating the temperature from 50°C to 140°C at a rate of 12.5°C/min decreases before and after step (ii) by a specific decrement (i.e., the decrease in temperature calculated by "(the peak temperature of gelatinization in the composition before step (ii)) - (the peak temperature of gelatinization in the composition after step (ii))" satisfies a predetermined value or higher), specifically 1 °C or higher, particularly 2 °C or higher, more particularly 3 °C or higher, especially 4 °C or higher, or 5 °C or higher, or 6 °C or higher, or 7 °C or higher, or 8 °C or higher, or 9 °C or higher, especially 10 °C or higher. The upper limit is not particularly restricted, but may be typically 70 °C or lower, or 65 °C or lower, or 60 °C or lower, or 55 °C or lower, or 40 °C or lower, or 35 °C or lower. The kneading treatment at step (ii) may more preferably carried out in such a manner that the decrease in the peak temperature of gelatinization before and after step (ii) satisfies the above requirement especially when the peak temperature of gelatinization measured for 14 mass % aqueous slurry of a crushed product of the dough composition at step (i) with a rapid visco-analyzer with elevating the temperature from 50°C to 140°C at a rate of 12.5°C/min is higher than 100°C, or higher than 110°C, or higher than 120°C.

(4) Step (iii): Cooling kneading treatment

If the composition after step (ii) above is depressurized without lowering the temperature, the water in the composition unfavorably evaporates rapidly, causing the composition to swell. Therefore, after the kneading under high temperature conditions, the composition temperature may be lowered to typically less than 100 °C, particularly less than 97 °C, more particularly less than 95 °C, especially less than 92 °C, to prevent the composition from swelling. In particular, this step of lowering the temperature may preferably be carried out under constant pressure conditions. In this case, the pressurization conditions during this temperature-lowering step are not particularly limited as long as swelling of the composition can be prevented, although they may preferably be the same as those during the kneading step. Specifically, the lower limit of the pressure to be applied during the temperature-lowering step (pressure to be further applied in addition to the atmospheric pressure) may preferably be typically 0.01MPa or more, particularly 0.03MPa or more, more particularly 0.05MPa or more, or 0.1MPa or more, or 0.2MPa or more, especially 0.3MPa or more. On the other hand, the upper limit of the pressure to be applied during the temperature-lowering step is not particularly restricted, but may be 5MPa or less.

It may further be preferable to lowering the outlet temperature setting of the extruder further while keeping the total mass flow rate to a predetermined level or more, since it increases the pressure during the kneading in step (ii) and promotes structure formation in the composition. If an extruder is used, these conditions can be adjusted as necessary so that the outlet pressure is adjusted to such a predetermined level or more, but the outlet temperature of the extruder may preferably be set at less than 95°C, more preferably less than 90°C, more preferably less than 85°C, more preferably less than 80°C, more preferably less than 75°C, more preferably less than 70°C, more preferably less than 65°C, more preferably less than 60°C, more preferably less than 55°C, more preferably less than 50°C, more preferably less than 45°C, still more preferably less than 40°C. On the other hand, the lower limit of the temperature is not particularly restricted, but may be typically higher than 0°C, or higher than 4°C. The total mass flow rate is also not particularly restricted, but may be for example typically 0.5kg/hour or more, particularly 0.7kg/hour or more, more particularly 1.0kg/hour or more.

The temperature difference between the maximum heating temperature during the kneading in step (ii) and the lowering temperature in step (iii) may preferably be a predetermined value or more. Specifically, the temperature difference between the maximum heating temperature during the kneading in step (ii) (when an extruder is used, the temperature of the maximum heating area) and the lowering temperature in step (iii) (when an extruder is used, the outlet temperature) may preferably be 15 °C or higher, particularly preferably 20 °C or higher, more particularly preferably 25 °C or higher, especially preferably 30 °C or higher. The temperature difference set at or above the lower limit mentioned above is preferable because this will inhibit the outflow of insoluble and soluble ingredients from the resulting composition, which in turn will inhibit the binding of the composition, resulting in a composition with better properties that retains its elasticity.

As mentioned above, the starch-containing solid composition of the present invention may be a composition with swelling (swollen composition) or a composition without swelling (non-swollen composition), but may preferably be a non-swollen composition. Conventionally, extruders have often been used to produce puff and other swollen compositions, and their production conditions are particularly difficult to apply to the production of compositions without swelling, as the conditions at step (iii) are usually set at temperatures which cause the compositions to swell. This is because the internal temperature transition of the extruder occurs continuously, and if, for example, only the temperature rise condition during kneading is adopted and the outlet temperature setting is adjusted to a lower temperature as required, the effect of lowering the outlet temperature setting is to lower the temperature during kneading and the entire internal temperature, resulting in a completely different condition, which is not an adjustment that a skilled person can make as required. This was not an adjustment that could be made by a person skilled in the art as appropriate. In addition, when manufacturing puff and other puffed products, it is technical common technical common knowledge of those skilled in the art to reduce the proportion of moisture in the total mass flow rate in order to cause rapid swelling at reduced pressure. Therefore, there was no motivation to increase the moisture content in the total mass flow rate as in the case of compositions that do not involve swelling.

The composition after step (iii) may be conveyed on a conveyor. In this case, the type of the conveyor is not restricted, but may preferably be a mesh-shaped conveyor having a ventilated (preferably ventilated and water/liquid permeable) loading surface in part or in whole. Employing such a mesh-shaped conveyor makes it easier to apply various treatments to the composition being conveyed, such as water retention treatment, moisture content adjustment treatment, drying treatment, etc., as described below. The details of these processes when a mesh-shaped conveyor is used are described below.

(5) Step (iv): Water retention treatment

The composition obtained through the steps (i) to (ii) or through the steps (i) to (iii) may be used as the composition of the present invention, or may be subjected to the step of (iv) adjusting the dry mass basis moisture content of the composition to less than 25 mass %. This step (iv) may be achieved in part or as a whole by one or more of the step (i) to (iii) above, or may be achieved by an additional step other than the steps (i) to (iii) above. Specifically, the production method of the present invention may preferably be characterized in that the time required after the temperature of the composition drops below 80°C until the dry mass basis moisture content of the composition decreases to less than 25 mass % on a dry weight basis after step (ii) is adjusted to a predetermined limit or longer, since this may serve to provide the resulting composition with a desirable quality to prevent pieces of the composition from binding to each other. Specifically, the duration of time required after the temperature of the composition drops below 80°C until the dry mass basis moisture content of the composition decreases to less than 25 mass % on a dry weight basis after step (ii) may preferably be adjusted to typically 10 minutes or more, particularly 15 minutes or more, more particularly 20 minutes or more, or 30 minutes or more, or 40 minutes or more, or 50 minutes or more, especially 60 minutes or more. Although the reason of this is not clear, but it is estimated that the starch in the composition gelatinizes at step (ii) and thereby exhibits a desirable quality to prevent pieces of the composition from binding to each other. The upper limit of this duration of time is not particularly restricted, but may be typically 2400 minutes or less, or 1800 minutes or less.

The temperature of the composition at step (iv) may preferably be, although not limited to, typically 90 °C or lower, particularly 80 °C or lower, more particularly 70 °C or lower, especially 60 °C or lower. The lower limit of the composition temperature is not particularly restricted, but may be higher than 0 °C, or higher than 4 °C. The pressure condition at step (iv) may be, although not limited to, set at normal pressure. When a step of decreasing the moisture content in the composition (e.g., drying treatment) is employed, the water retention treatment may be carried out at any time, i.e., before, during, or after the moisture content is decreased. However, the water retention treatment may preferably be carried out before the moisture content decreases, since the effects of the present invention may thereby be even more pronounced.

The degree of gelatinization of starch in the composition after the water retention treatment at step (iv) is not particularly restricted, but may preferably be 10 mass % or more, particularly 20 mass % or more, more particularly 30 mass % or more, especially 40 mass % or more, especially 50 mass % or more, and typically 98 mass % or less, particularly 95 mass % or less, more particularly 90 mass % or less, especially 85 mass % or less, especially 80 mass % or less. It is more preferable that the degree of gelatinization decreases before and after the water retention treatment by a predetermined ratio or more (i.e., the decremental difference in the degree of gelatinization calculated by "(the degree of gelatinization in the composition before the water retention treatment) - (the degree of gelatinization in the composition after the water retention treatment)" satisfies a predetermined limit or more). Specifically, the decremental difference in the degree of gelatinization before and after the water retention treatment at step (iv), which is achieved by any of the step (ii) and subsequent steps, may preferably be 1 mass % or more, particularly 2 mass % or more, more particularly 3 mass % or more, especially 4 mass % or more, especially 5 mass % or more. The upper limit is not particularly restricted, but may be typically 50 mass % or less.

(6) Adjustment of the moisture content in the composition

As an example of a means to accelerate the ageing described above, it may be preferable to add water to the composition at any of the steps (i) to (iii) above to adjust the dry mass basis moisture content in the dough composition to above a predetermined value. The addition of water to the composition may preferably be carried out at step (i) to adjust the dry mass basis moisture content in the dough composition to above a predetermined value. Specifically, the dry mass basis moisture content in the composition may preferably be typically more than 40 mass %, particularly more than 45 mass %, more particularly more than 50 mass %, especially more than 55 mass %, or more than 60 mass %, or more than 65 mass %, or more than 70 mass %, or more than 75 mass %, especially more than 80 mass %. The upper limit of the dry mass basis moisture content in the composition is not particularly restricted, but may be typically 200 mass % or less, or 175 mass % or less, or 150 mass % or less.

Specific means to adjust the moisture content in the composition may include, although not limited to, adding to the composition a part or all of the total moisture to be added during the production process at any one of the step (i), step (ii), step (iii), and step (iv). A preferable embodiment of such means is to adjust the dry mass basis moisture content to higher than a predetermined value at step (i), and then to add the reminder of the total moisture to the composition after step (i), more specifically one or more of step (ii), step (iii), and step (iv). Specifically, the dry mass basis moisture content in the composition at step (i) may preferably be typically more than 25 mass %, particularly more than 30 mass %, more particularly more than 35 mass %, especially more than 40 mass %, or more than 45 mass %, or more than 50 mass %, or more than 55 mass %, or more than 60 mass %, or more than 65 mass %, or more than 70 mass %, or more than 75 mass %, especially more than 80 mass %. The upper limit of the dry mass basis moisture content in the composition at step (i) is not particularly restricted, but may be typically 200 mass % or less, or 175 mass % or less, or 150 mass % or less. **In** addition, a predetermined ratio or more of the total moisture to be added during the production process (especially the moisture to be added at step (i) and step (ii)) may preferably be added when the dough composition is prepared at step (i). Specifically, typically 50 % or more, particularly 55 % or more, more particularly 60 % or more, or 75 % or more, or 80 % or more, or 85 % or more, or 90 % or more, especially 100% of the total moisture to be added during the production process (especially the moisture to be added at step (i) and step (ii)) may preferably be mixed with other raw materials at step (i).

Water may be added either in the form of water or in the form of steam, but may preferably be added in the form of water. When an extruder is used, water may be added to raw materials before being fed into the extruder in advance. Alternatively, raw materials may be fed into the extruder before water is added to the raw materials in the extruder. When the raw materials are kneaded in the extruder, water may be fed via the feeder into the extruder to be mixed with the raw materials to prepare the composition at step (i) in the extruder, followed by step (ii) in succession. However, a predetermined ratio or higher (typically 50 % or more, particularly 55 % or more, more particularly 60 % or more, or 75 % or more, or 80 % or more, or 85 % or more, or 90 % or more, especially 100%) of the total moisture to be added during the production (especially the moisture to be added at step (i) and step (ii)) may preferably be added when the dough composition is prepared at step (i). Alternatively, water may be added to the raw materials to be fed via the feeder such that they have a dry mass basis moisture content of less than 40 mass %, and then a part (or all) of the total moisture to be added during the production process may be injected into the extruder by a water injection mechanism attached to the extruder barrel to prepare the dough composition at step (i) in the extruder, and step (ii) may be carried out in succession. However, adopting this embodiment may tend to cause air bubbles in the resulting composition. Therefore, it may be preferable to carry out deaeration at any step before the die section, more preferably by a deaeration mechanism attached to the feeder and/or by a vent section attached to the extruder barrel, as will be explained below. In addition, when water is added by the water injection mechanism attached to the extruder barrel during the production process, the extruder may preferably be a biaxial extruder.

In addition, a predetermined ratio or higher of the total moisture to be added during the production process may preferably be mixed with other raw materials before the temperature inside the extruder reaches a predetermined value, since this may help prevent the starch from being decomposed due to overheating. Specifically, a predetermined ratio or higher of the total moisture may preferably be mixed with other raw materials before the temperature inside the extruder reaches typically 90 °C or higher, or 85 °C or higher, or 80 °C or higher. The ratio of the moisture to be mixed with other raw materials before the temperature inside the extruder reaches a predetermined value may preferably be typically 50 mass % or more, particularly 60 mass % or more, more particularly 70 mass % or more, or 80 mass % or more, or 90 mass % or more, especially 100 mass % of the total moisture to be added during the production process (especially of the total moisture to be added at step (i) and step (ii)). When a certain ratio of moisture is mixed with other raw materials, the raw materials may preferably be mixed with the ratio of moisture before being fed into the extruder. Specifically, 60 mass % or more of the total moisture to be added during the production process (especially of the total moisture to be added at step (i) and step (ii)) may preferably be mixed with other raw materials before the temperature inside the extruder reaches 80 °C or higher. In addition, 60 mass % or more of the total moisture to be added during the production process (especially of the total moisture to be added at step (i) and step (ii)) may preferably be mixed with other raw materials before the temperature inside the extruder increases from the external temperature by 20 °C or higher.

In general, simply for the purpose of gelatinizing starch, a dry mass basis moisture content of about 40 mass % or less in the dough composition is sufficient. Considering the subsequent drying step, it can be said that there is no motivation, but rather a disincentive, to add more water. Therefore, it is difficult to conceive of increasing the dry mass basis moisture content in the dough composition, unless having the idea of ageing the starch once it has been gelatinized as in step (iv) of the present invention. In addition, even if the dry mass basis moisture content in the dough composition is simply increased, it would still not be possible to adopt the configuration described above, i.e., to adjust the time required after the temperature of the composition decreases to below 80°C after step (iii) until the dry mass basis moisture content in the composition to be below 25 mass % to a predetermined value or higher, unless having the idea of retaining moisture as in step (iv) of the present invention, which is the opposite of the idea of subsequently drying the moisture in the composition.

It is also possible to employ a method to add moisture to the composition at step (iii) or any subsequent step (especially, when an extruder is used, to the composition after extrusion) to increase the time for the composition to reach a dry mass basis moisture content of 25 mass % to a predetermined time or longer. In this method, the moisture may be added either in the form of water or in the form of steam, but may preferably be added in the form of water. It is more preferable to add water by spraying it in the form of mist, since this can serve to reduce the amount of water used in the production process while producing a composition of good quality. Alternatively, it is also possible to employ a method to put the composition directly into water and cause the composition to absorb water.

In addition, it may be preferable to employ a method to volatilize moisture as soon as it is added to the composition at step (iii) or any subsequent step (especially, when an extruder is used, to the composition after extrusion), since the composition temperature drops quickly due to the heat of vaporization. Specifically, the treatment may preferably be carried out with adjusting the dry mass basis moisture content in the composition after volatilization so that it does not fall below 25 mass %. More specifically, as mentioned above for example, it is possible to use a method to convey the composition after step (iii) using a mesh conveyor whose loading surface is partially or fully ventilated (preferably ventilated and water/liquid permeable), and to carry out water retention treatment by adding water to the composition before and after the composition is placed on the conveyor (i.e., before or during transport). This method is preferable because it allows the composition to be conveyed and the aforementioned treatment to be carried out at the same time. The water retention treatment may also be carried out by spraying the composition after conveyor transport with water on mist or by other means.

An embodiment of the water retention treatment includes: placing the composition after extrusion on a conveyor; immersing the entire conveyor in water (e.g., by providing a temporary immersion process in a water tank in the conveyor transport process); and optionally blowing air to the composition being conveyed by the conveyor. Another embodiment of the water retention treatment includes: placing the composition after extrusion on a conveyor; spraying water in mist form on the composition at any stage before or after placing it on the conveyor; and optionally blowing air to the composition being conveyed by the conveyor. In either case, it may be preferable to make part or all of the conveyor loading surface a mesh-like structure with ventilation (such that, e.g., when air is blown vertically through the mesh, more than 1% or 3% of the airflow passes through it), since the added water is more likely to volatilize during transport, and the heat of vaporization can efficiently lower the temperature of the composition and adjust the time taken to reach a moisture content of 25% by mass in terms of dry mass basis. Especially in an embodiment where the composition is blown while being conveyed on the conveyor, it may be preferable to blow air from the top and/or from the bottom of the mesh conveyor. The aperture size of the mesh-like structure is not particularly limited, but may be determined such that the average aperture area is 1 $mm^2$ or more (specifically 1 mm x 1 mm or more), or 3 $mm^2$ or more (specifically 3 mm x 1 mm or more), or 10 $mm^2$ or more (specifically 5 mm x 2 mm or more). On the other hand, the upper limit of the average aperture area is not particularly restricted, but may be 2500 $mm^2$ or less (specifically 50 mm x 50 mm or less), or 1500 $mm^2$ or less (specifically 50 mm x 30 mm or less), or 500 $mm^2$ or less (specifically 20 mm x 25 mm or less).

The degree of gelatinization may preferably be decreased by a predetermined ratio or higher (i.e., the decremental difference in the degree of gelatinization calculated as "the degree of gelatinization in the composition before the treatment) - (the degree of gelatinization after the treatment)" is a predetermined value or higher) before and after blower treatment, in which air is blown from the top and/or from the bottom of the mesh conveyor. Specifically, the water retention treatment may preferably be carried out until the decremental difference in the degree of gelatinization reaches 1 mass % or more, particularly 2 mass % or more, more particularly 3 mass % or more, especially 4 mass % or more, especially 5 mass % or more. The upper limit is not particularly restricted, but may be typically 50 mass % or less.

If the dry mass basis moisture content of the composition temporarily drops to below 25% by mass on a dry weight basis, the water retention process can be continued by re-hydrating the dry composition to increase the dry mass basis moisture content. When the dry composition is re-hydrated, the temperature may preferably be kept at typically 60 °C or lower, particularly 50 °C or lower, more particularly 40 °C or lower during the majority of the subsequent holding time.

It is also preferable to use a method to extend the duration of time until the dry mass basis moisture content decreases to 25% to be longer than the predetermined time by increasing the ambient humidity of the composition (when an extruder is employed, the composition after extrusion) at step (iii) and subsequent steps. This may serve to locally age the starch near the surface of the composition, which normally loses water quickly and is less likely to age compared to the interior of the composition, and make the resulting composition easier to eat. This is especially preferable when the composition is made into multiple pieces to be eaten together, such as noodles, since pieces of the compositions are less likely to bind to each other.

Alternatively, it is also preferable to use a method to extend the duration of time until the dry mass basis moisture content decreases to 25% to be longer than the predetermined time by quickly lowering the temperature of the composition (when an extruder is employed, the composition after extrusion) at step (iii) and subsequent steps. More specifically, the composition temperature may preferably be kept at typically 80 °C or lower, particularly 70 °C or lower, or 60 °C or lower, or 50 °C or lower, or 40 °C or lower, during the majority of the time until the dry mass basis moisture content decreases to 25%. When the composition is produced using an extruder, the temperature of the composition extruded from the outlet of the extruder may preferably be kept at typically 80 °C or lower, particularly 70 °C or lower, or 60 °C or lower, or 50 °C or lower, or 40 °C or lower, and the temperature of the outlet of the extruder may more preferably be set so as to satisfy these temperature. The lower limit of the temperature is not particularly restricted, but may be higher than 0 °C, or higher than 4 °C.

For example, it may be preferable to provide a cooler at the second flight section and/or at the die section of the barrel with the capacity to lower the temperature of the composition at the channel outlet of the die section to a predetermined temperature, especially because this may serve to more effectively age the starch on the composition surface and inhibit binding of pieces of the composition. It is also preferable to make the die section into an elongated shape, since this may make it easier to reduce the composition temperature. It is also preferable to adopt a method it may be preferable to adopt a method including adding water to the composition at step (iii) and onward (when an extruder is employed, the composition after extrusion) and then volatilizing the water promptly to rapidly lower the composition temperature by the heat of vaporization and to thereby achieve the above conditions. **In** this case, it is more preferable to carry out the treatment while adjusting the dry mass basis moisture content in the composition after volatilization so as not fall below 25 mass %.

Alternatively, it is also preferable to use a method to extend the duration of time until the dry mass basis moisture content decreases to 25% to be longer than the predetermined time by adjusting the internal temperature of the extruder (more specifically, the kneading section and beyond) to drop below a predetermined value at step (iii). Specifically, the internal temperature of the extruder (more specifically, the kneading section and beyond) may preferably be adjusted to typically less than 95 °C, particularly less than 90 °C, more particularly less than 85 °C, or less than 80 °C, or less than 75 °C, or less than 70 °C, or less than 65 °C, or less than 60 °C, or less than 55 °C, or less than 50 °C, or less than 45 °C, especially less than 40 °C. The lower limit is not particularly restricted, but may be higher than 0 °C, or higher than 4 °C. This method can extend the duration of time after the composition extruded from inside the extruder until the dry mass basis moisture content decreases to less than 25 mass % to preferably 10 minutes or more, particularly 15 minutes or more, more particularly 20 minutes or more, or 30 minutes or more, or 40 minutes or more, or 50 minutes or more, especially 60 minutes or more. The upper limit of the extended duration of time is not particularly restricted, but may be 2400 minutes or less, more particularly 1800 minutes or less.

(7) Drying treatment

It is also preferable to provide, after step (iii) or step (iv), or after any treatment to extend the duration of time until the dry mass basis moisture content decreases to 25% to be longer than the predetermined time, such as the water retention treatment or the surface aging treatment mentioned above, a step to adjust the dry mass basis moisture content of the composition to a predetermined value or lower (so-called drying treatment). This step may serve to slow down or stop the progression of starch ageing in the composition, resulting in compositions of good quality. When this step is provided, it may preferably be carried out so as to adjust the dry mass basis moisture content in the final composition to typically less than 60 mass %, particularly less than 55 mass %, more particularly less than 50 mass %, or less than 45 mass %, or less than 40 mass %, or less than 35 mass %, or less than 30 mass %, or less than 25 mass %, or less than 20 mass %, or less than 15 mass %. On the other hand, the lower limit of the dry mass basis moisture content in the composition may be, although not limited to, 0.5 mass % or more, or 1 mass % or more, or 2 mass % or more from the viewpoint of industrial production efficiency. The composition temperature during the drying treatment is not restricted, but when the treatment is carried out under normal pressure, it may preferably be higher than 50 °C, particularly higher than 60 °C, or higher than 70 °C, especially higher than 80 °C. The upper limit may be, although not limited to, less than 100 °C, or less than 98 °C.

It is also preferable to carry out the drying treatment composition slowly with controlling the temperature, because this may serve to reduce the dry mass basis moisture content of the composition to 10 mass % or less in a relatively short time and provide the post-treatment composition (with a dry mass basis moisture content of 10 mass % or less) with a good quality not prone to cracking. Specifically, it may be preferable to calculate the "ambient relative humidity determined from the composition temperature at any given point in time" from the composition temperature during the treatment, and to control the composition temperature so that the average relative humidity during the entire treatment time to a predetermined ratio or higher. For example, in cases where the composition has a relatively high moisture content (e.g., with a dry mass basis moisture content of 25 mass % or more) during the treatment where the dry mass basis moisture content in the composition decreases to 10 mass % or less, it is possible to adjust the composition temperature to a relatively high temperature to the extent that the saturated moisture vapor content does not rise too high, to thereby increase the absolute humidity in the atmosphere via evaporation of the moisture in the composition, whereby the average relative humidity can be adjusted to a predetermined ratio or higher. On the other hand, in cases where the composition has a relatively low moisture content (e.g., with a dry mass basis moisture content of less than 25 mass %), it is possible to adjust the composition temperature to a relatively low temperature to lower the saturated moisture vapor content, whereby the average relative humidity can be adjusted to a predetermined ratio or higher. More specifically, the treatment where the dry mass basis moisture content in the composition decreases to 10 mass % or less may preferably be carried out so as to adjust the average relative humidity during the treatment to typically 50RH % or more, particularly 55RH % or more, more particularly 60RH % or more, or 65RH % or more, or 70RH % or more, or 75RH % or more, or 80RH % or more. In addition, at least either the average relative humidity during the period when the composition has a dry mass basis moisture content of 25 mass % or more and/or the average relative humidity during the period when the composition has a dry mass basis moisture content of less than 25 mass % but 10 mass % or more may preferably be adjusted to a predetermined ratio or higher (50RH % or more, particularly 55RH % or more, more particularly 60RH % or more, or 65RH % or more, or 70RH % or more, or 75RH % or more, or 80RH % or more). More specifically, it may be preferable that at the average relative humidity during the period when the composition has a dry mass basis moisture content of 25 mass % or more satisfies the predetermined ratio or higher mentioned above, and it is more preferable that the average relative humidity during the period when the composition has a dry mass basis moisture content of less than 25 mass % but 10 mass % or more also satisfies the predetermined ratio or higher mentioned above.

It is also preferable that the average relative humidity is adjusted to a predetermined ratio or higher at least during the first 40% of the period of time required from the start of the drying treatment until the dry mass basis moisture content in the composition decreases to 10 mass % (the time window during which the composition moisture is relatively high; more preferably, the dry mass basis moisture content may be 25 mass % or more during this time window) and/or during the last 60% of the period of time required from the start of the drying treatment until the dry mass basis moisture content in the composition decreases to 10 mass % (the time window during which the composition moisture is relatively low; more preferably, the dry mass basis moisture content may be less than 25 mass % during this time window). This adjustment may serve to provide the post-treatment composition (with a dry mass basis moisture content of 10 mass % or less) with a good quality not prone to cracking. It is more preferable that the average relative humidity is adjusted to a predetermined ratio or higher during both of these time windows. Specifically, the drying treatment may preferably be carried out so as to adjust the average relative humidity to 50RH % or more, particularly 55RH % or more, more particularly 60RH % or more, or 65RH % or more, or 70RH % or more, or 75RH % or more, or 80RH % or more during the first 40% and/or the last 60% of the period of time mentioned above.

Any method used for drying food products can be used to adjust the composition temperature during the drying treatment under the conditions mentioned above. However, it may be preferable to adjust the composition temperature and/or the ambient temperature using, e.g., air drying.

The pressure during the drying treatment is also not particularly limited, and it may be carried out either under atmospheric pressure or under reduced pressure. When the treatment is carried out under reduced pressure (e.g., less than 0.1 MPa), the temperature of the composition may preferably be less than 80 °C, in particular less than 70 °C, or less than 60 °C, in particular less than 50 °C. The lower limit is not particularly limited, but may be higher than 0 °C, or higher than 4 °C.

Any method commonly used for drying food products can be used as a drying method. Examples include freeze drying, air drying (e.g., draught drying (hot air drying), fluidized bed drying, spray drying, drum drying, low temperature drying, sun drying, shade drying, etc.), pressurized drying, reduced pressure drying, microwave drying, oil heat drying, etc. Of these method, from the viewpoint that the color tone and flavor inherent in food ingredients are not significantly changed, and that non-food aromas (e.g. burnt smell) can be controlled, microwave drying is preferred, and microwave drying under reduced pressure is even more preferred. On the other hand, from the viewpoint of processing large quantities of compositions, air drying (e.g., hot air drying, fluidized bed drying, spray drying, drum drying, low temperature drying, sun drying, shade drying, etc.) is also preferred, and draught drying (especially hot air drying with ambient temperatures within a predetermined temperature range) is particularly preferred.

During the drying treatment, it may be preferable to treat the composition for predetermined amount of time or longer in an environment where the ambient temperature exceeds a predetermined level, because this may reduce the time required for the dry mass basis moisture content to decrease by a predetermined ratio or higher. Specifically, the drying treatment may preferably be carried out at an ambient temperature of typically higher than 50 °C, particularly higher than 60 °C, more particularly higher than 70 °C, or higher than 80 °C. The upper limit of the ambient temperature is not particularly restricted, but may be typically 100 °C or lower. An environment where the ambient temperature is higher than a predetermined temperature can be created by, e.g., storing the composition extruded from the die section at high temperature environment, maintaining the temperature of the composition extruded at high temperature to increase the ambient temperature, or blowing the composition with high temperature air.

The treatment of the composition at ambient temperature may be carried out for a predetermined amount of time or longer, typically 0.1 hour or longer, particularly 0.2 hour or longer, or 0.3 hour or longer, or 0.4 hour or longer, or 0.5 hour or longer, or 0.6 hour or longer, or 0.7 hour or longer, or 0.8 hour or longer, or 0.9 hour or longer, especially 1.0 hour or longer. The upper limit of the duration is not particularly restricted, but may be 20 hours or less, or 15 hours or less.

The dry mass basis moisture content in the composition of the present invention may be derived either from various ingredients of the composition or from water externally added. Specifically, it may be preferable to provide the step of adjusting the dry mass basis moisture content to less than 25 mass % after step (iv). This step may serve to locally age, of the starch that has been once gelatinized at step (ii), only the starch near the surface of the composition, and make the resulting composition easier to eat. This is especially preferable when the composition is made into multiple pieces to be eaten together, such as noodles, since pieces of the compositions are less likely to bind to each other.

(8) Extruder

When an extruder is used in the present invention, the extruder may preferably include: a screw to be rotated by a motor; a barrel surrounding the circumference of the screw; a feeder, attached to the base side of the barrel, for injecting a food material; and a die section attached to the tip side of the barrel. Specifically, the screw in the extruder of the present invention may preferably include, from the base side to the tip side (i.e., in the direction of extrusion or towards the extruding side), a first flight section and a kneading section, and have a configuration in which the barrel has a vent section at a position corresponding to the tip side of the kneading section of the screw. According to one embodiment, the barrel may have the vent section and the die section integrated into a single unit. According to another embodiment, the screw may include, in addition to the first flight section and the kneading section, a second flight section on the tip side of the kneading section, and the barrel may include a vent section at a position corresponding to the base side start point of the second flight section of the screw (i.e., the die section is arranged immediately downstream of the kneading section). In addition, the barrel may preferably have a heater around a region corresponding to the first flight section and the kneading section, and when the barrel has the second flight section, the barrel may preferably have a cooler around a region corresponding to the second flight section.

In the screw to be used in the present invention, the first flight section refers to a section with screw flights on its circumferential surface that is located on the base side (motor side) with respect to most (preferably all) of the kneading section and all of the second flight section, and the second flight section refers to an optional section with screw flights on its circumferential surface that is located on the tip side (extrusion side) with respect to all of the first flight section and most (preferably all) of the kneading section.

According to the present invention, the first flight section has the function of conveying the composition to the tip side as the screw rotates while heating the composition by optionally using a heater, thereby causing the starch grains in the composition to swell with water by heating, and the second flight section has the function of conveying the composition from the kneading section to the die section on the tip side as the screw rotates with a quick drop in the pressure by the vent section, thereby homogenizing the composition with decomposed starch grain structures to form a starch matrix structure so as not to generate heat and, optionally, rapidly lowering the composition temperature using a cooler to locally age the starch near the composition surface.

The flight structure in which the composition is conveyed to the tip side as the screw rotates may be referred to herein as the "forward flight," while the flight structure in which the composition is conveyed to the base side as the screw rotates herein may be referred to herein as the "reverse flight." In addition, in each of the first flight section and (in the case of the screw of the extruder according to the first embodiment explained above) the second flight section, a section with the forward flight may be referred to as the "forward flight section," and a section with the reverse flight as the "reverse flight section."

In the extruder to be used in the present invention that includes the second flight section in the screw and the barrel, the kneading section refers to a known structure for kneading the majority (preferably more than 70%, more preferably more than 90%, still more preferably 100%) of which is located between the first flight section and the second flight section (specific examples include Maddock mixing section, Egan mixing section, blister ring mixing section, pin mixing section, Dulmage mixing section, Saxton mixing section, pineapple-type mixing section, mixing section having a screw with groove holes (will be explained later), cavity transfer mixing section, and any combinations thereof). In the extruder to be used in the present invention that does not include the second flight section in the screw and the barrel, the kneading section refers to a known structure for kneading the majority (preferably more than 70%, more preferably more than 90%, still more preferably 100%) of which is located on the tip side with respect to the first flight section. In the screw to be used in the present invention, the kneading section has the function to break up and knead the composition flow by heating the composition with a heater so as to decompose the starch grains by high-temperature strong kneading under pressurized conditions.

The length of the kneading section is not restricted, but may preferably account for a predetermined ratio or more with respect to the total length of the screw, since this may serve to decompose the starch grains by high-temperature strong kneading under pressurized conditions. Specifically, the ratio of the length of the kneading section to the total length of the screw may preferably be typically 20 % or more, particularly 25 % or more, or 30 % or more, or 35 % or more, or 40 % or more, or 45 % or more, or 50 % or more. On the other hand, the upper limit of the ratio of the length of the kneading section to the total length of the screw is not restricted, but may preferably be typically 80 % or less, or 70 % or less, or 60 % or less, in consideration to the relationship with other screw components.

The kneading section may preferably include one or more narrow-shaped structures on the screw that intercept the flow of the dough, so as to facilitate the decomposition of starch grains. The "narrow-shaped structure" herein refers to a structure that generally divides the space between the screw and the barrel inner wall into a space on the base side and a space on the tip side, such that that the dough fills the interior of the space on the base side to increase the dough internal pressure by a predetermined ratio or more, thereby causing a stretching flow in the dough that flows over the narrow-shaped structure. The "stretching flow," also referred to as an extending flow, herein is a flow that stretches a material. The stretching flow is typically caused by directing a material into a channel that is wide at the inlet and narrow at the outlet, i.e., a channel where the cross-sectional area of the opening in the flow direction is rapidly reduced. Examples of narrow-shaped structures include a raised structure relative to the screw surface (also referred to as a convex structure), a structure that makes the cross-sectional area of any given flow channel relatively reduced from the base side to the tip side, and a combination thereof. Specifically, it is preferable to provide a convex structure on the screw surface of the kneading section that rises to the vicinity of the barrel inner wall (specifically, 80% or more of the distance from the center of the screw to the inner wall of the barrel) such that the space between the screw and the inner wall of the barrel is generally divided into a space on the base side and a space on the tip side by the convex structure. In addition, it may be preferable to provide two or more narrow-shaped structures substantially in tandem, since this arrangement may create a complex stretching flow and enhance the effects of the present invention. Specifically, the number of the narrow-shaped structures to be arranged in tandem may preferably be typically 2 or more, or 3 or more, or 4 or more. The upper limit is not particularly restricted, but may be typically 50 or less. When two or more narrow-shaped structures are arranged substantially in tandem, they may preferably include one or more convex structures.

When the vent section is employed in the present invention, the vent section is installed in the barrel at a position on the tip side of the kneading section as mentioned above, and is configured to exhaust the gas present in the space between the barrel and the screw to thereby adjust its pressure.

Specifically, in the case of using the screw and the barrel having the second flight sections, the vent section may preferably be installed in the barrel at a position corresponding to the base side start point of the second flight section (i.e.,

near the boundary between the kneading section and the second flight section). This configuration allows for a rapid pressure drop by the vent section at the section where the composition is transferred from the kneading section to the second flight section to form a starch matrix structure by homogenizing the composition with collapsed starch grain structures to prevent heat generation, while rapid cooling in the second flight section immediately afterwards enables local ageing of the starch near the composition surface.

On the other hand, in the case of using the screw and the barrel not having the second flight sections, the vent section may preferably be integrated with the die section into a single unit, by providing the die section with the vent section's function to expose the composition to atmospheric pressure. This configuration allows for a rapid pressure drop the composition at the die and vent section by exposing the composition atmospheric pressure, whereby the starch grain structures in the composition are decomposed. In addition, subsequent rapid cooling of the composition after extrusion (e.g., by adding a small amount of water by mist water spraying and then volatilizing it, thereby rapidly lowering the composition temperature by the heat of evaporation) enables local ageing of the starch near the composition surface.

The specific position of the vent section is not limited. For example, in the case of using the screw and the barrel having the second flight sections, the vent section may preferably be installed at a position on the barrel corresponding to the first half of the second flight section of the screw, i.e., within 50% of the total length of the second flight section from the base side start point of the second flight section, more preferably within 20% of the total length of the second flight section from the base side start point of the second flight section, most preferably at a position on the barrel corresponding to the base side start point (i.e., near the boundary between the second flight section and the kneading section or near the end of the kneading section located at the most tip side). The reason for this is not known, but it is assumed to be due to the rapid pressure drop at the vent section, which causes the starch grain structures in the composition to collapse and the internal starch to flow out, forming a homogeneous matrix structure.

On the other hand, in the case of using the screw and the barrel not having the second flight sections, i.e., in the case of an embodiment where the composition is exposed to atmospheric pressure at the die section which also serves as the vent section, the vent section (also works as the die section) may preferably be installed at a position on the barrel corresponding to within 30%, more preferably within 20%, still more preferably within 10%, of the total length of the screw from the end point of the kneading section located at the most leading edge of the screw, and more preferably immediately after the end point of the kneading section located at the most advanced end (i.e., the die and vent section may preferably be installed immediately after the kneading section). It may also be preferable to install a flow retarding structure between the end of the kneading section and the die section, located at the most advanced end of the screw. It may also be possible not to provide a second flight section in the screw, but to directly cool the composition at the die section and/or the composition immediately after extrusion to thereby local age the starch near the surface of the composition.

According to the present invention, it may be preferable to provide a flow retarding structure at a position between the tip side end point of the second flight section and the die section in the case of the extruder having the second flight section, or at a position between the tip side end point of the kneading section and the die section in the case of the extruder according to the extruder lacking the second flight section. Specifically, the flow retarding structure may preferably be installed in the extruder according to the extruder having the second flight section, since it allows for the stable discharge of the composition with an increased viscosity due to ageing by the second flight section. On the other hand, the flow retarding structure may preferably be installed in the extruder according to the extruder lacking the second flight section, which do not have a second flight section, since this may result in the effect of stabilizing the extrusion. In addition, both in the extruder having the second flight section and in the extruder lacking the second flight section, the flow retarding structure may preferably be provided around the tip side end point of the kneading section (preferably, immediately after the tip side end point of the kneading section), since this may serve to increase the pressure at the kneading section and improve the kneading efficiency. The "flow retarding structure" herein refers to a structure that reduces the flow rate of the contents from the flight section, relative to the average flow rate of the contents in the flight section upstream of said structure. For example, in the extruder having the second flight section, the flow retarding structure is configured to reduce the flow rate of the contents relative to the flow rate of the contents in the second flight section. And in the extruder lacking the second flight section, the flow retarding structure is designed to reduce the flow rate of the contents relative to the flow rate of the contents in the first flight section. Examples of the flow retarding structures include: a structure with relatively large screw groove depths and/or pitch widths around the tip side end point of the second flight section to thereby decrease the flow rate; and a structure with relatively large internal diameters of the barrel around the tip side end point of the second flight section to thereby decrease the flow rate. The flow retarding structure may be provided as a structure independently of the second flight section at a position between the tip side end point of the second flight section and the die section in the case of the extruder according to the extruder having the second flight section, or at a position between the tip side end point of the kneading section and the die section in the case of the extruder according to the extruder lacking the second flight section. Such an independent flow retarding structure may be a structure that reduces the flow rate generated by screw rotation to thereby lower the flow rate compared to that generated by a forward flight structure. Examples include: a structure derived from a forward flight section by perforating or removing or deforming a part of the forward flight section (also referred to as a screw structure with groove holes); a reverse flight structure, which generates a relatively lower flow rate than the forward flight structure; and a torpedo structure, which lacks a torsional angle that provides feed to the material to be molded (e.g., a structure with ring-shaped projections formed on the screw surface with a radius of 80% or more of the distance between the rotation axis of the screw and the inner wall of the barrel). Among these, it may be preferable to provide a screw structure with groove holes or a reverse flight structure or a torpedo structure as the flow retarding structure at a position between the tip side end point of the second flight section and the die section in the case of the extruder according to the extruder having the second flight section, or at a position between the tip side end point of the kneading section and the die section in the case of the extruder according to the extruder lacking the second flight section. When adopting a torpedo structure with ring-shaped projections formed on the screw surface with a radius of 80% or more of the distance between the rotation axis of the screw and the inner wall of the barrel, it may be preferable to arrange two or more ring-shaped projections in succession, because this structure may serve to easily adjust the flow rate in the flow retarding structure.

The flow retarding ratio to be achieved by the flow retarding structure (i.e., the ratio of the flow rate at the flow retarding structure to the flow rate at the flight section upstream of the flow retarding structure) may be less than 100%, preferably 97 % or less, more preferably 95 % or less, still more preferably 93 % or less, or 90 % or less. The lower limit is not particularly restricted, but may preferably be 10 % or more, or 20 % or more.

When the flow retarding structure is adopted, it may be preferable from the viewpoint of achieving the effects of the present invention that the size of the flow retarding structure is limited to a predetermined ratio or lower, because if the size is too large, the size of other sections such as the kneading section and the second flight section becomes relatively small. Specifically, the ratio of the length of the flow retarding structure to the total length of the screw may preferably be typically 20 % or less, particularly 15 % or less, more particularly 10 % or less, or 8 % or less, or 5 % or less. The lower limit is not particularly restricted, but may preferably be 0 % or more, or 1 % or more.

The vent section may be opened to atmospheric pressure to reduce the pressure inside the barrel to atmospheric pressure, but may preferably have a forced exhaust mechanism in said vent section. This enables a stronger matrix structure to be formed by forcibly volatilizing a part of the water in the composition and removing air bubbles in the matrix structure while quickly lowering the temperature of the composition. The mechanism may particularly be useful when a uniaxial extruder is employed as the extruder, as this mechanism may serve to incorporate air bubbles into the matrix structure. The forced exhaust mechanism may be selected from known vacuum pumps and the like, e.g., liquid-sealed pumps (water-sealed pumps).

Any forced exhaustion mechanism (e.g., vacuum pump) can be used as long as it is capable of forcibly volatilizing some of the water in the composition to the extent that the composition temperature in the vent section is reduced to a certain degree. For example, the forced exhaust mechanism (e.g. vacuum pump, etc.) may preferably have the capacity to reduce the temperature by at least 1°C, more preferably by at least 2°C, at the vent section. The mechanism employed (e.g., vacuum pumps, etc.) can be any mechanism to the extent that the above performance can be achieved, but may be a forced exhaust mechanism with a suction capacity (also referred to as suction pressure or suction gas pressure) of 0.04 MPa or higher, preferably 0.06 MPa or higher, more preferably 0.08 MPa or higher. The upper limit is not particularly restricted, but may preferably be typically 0.1 MPa or lower, or 0.09 MPa or lower, since the pump is so strong it may also suck the dough. In an extruder producing swellings, it is in principle difficult to employ such a configuration as in the present invention, as the internal pressure of the extruder must in principle be increased to at least atmospheric pressure while the composition temperature is maintained above 100 °C. Conventional extruders for producing swollen foods do not usually employ such a configuration as in the present invention, since such an extruder is in principle required to extrude the composition under atmospheric pressure or elevated pressure with maintaining the composition temperature at 100 °C or higher.

When an extruder is used in the production method of the present invention, it is preferable to mix a predetermined percentage or more of the moisture to be incorporated into the composition during its production with other ingredients before the temperature in the extruder is heated above 20°C, since this may prevent starch from changing its properties due to overheating. Specifically, before the temperature in the extruder is increased by 20°C or more, typically 50 mass % or more, particularly 60 mass % or more, more particularly 70 mass % or more, or 80 mass % or more, or 90 mass % or more, especially 100 mass %, of the moisture content to be incorporated in the final composition may preferably be pre-mixed with other materials, and/or the dry mass basis moisture content of the composition may preferably be pre-adjusted to more than 25 mass %, or more than 30 mass %, or more than 35 mass %, or more than 40 mass %. When the aforementioned volume of moisture is pre-mixed with other materials, the pre-mixing of the moisture and the other materials may preferably be carried out before they are fed into the extruder.

In addition, if water is injected into the extruder after the temperature inside the extruder is heated to a predetermined temperature or higher, the water may boil off and damage the composition structure. Therefore, the aforementioned proportion of moisture may preferably be pre-mixed with other materials while the temperature inside the extruder is below a predetermined temperature (typically more than 50 % by mass, in particular more than 60 % by mass, even more than 70 % by mass, or more than 80 % by mass, or more than 90 % by mass, in particular 100 % by mass, of the moisture content to be incorporated in the composition at step (I) may preferably be added, and/or the dry mass basis moisture content of the dough composition may be adjusted to more than 25 mass %, or more than 30 mass %, or more than 35 mass %, or more than 40 mass %, or 200 mass % or less, or 175 mass % or less, or 150 mass % or less by water addition). Specifically, it is preferable to mix the aforementioned percentage of water with other ingredients while the temperature inside the extruder is usually less than 100 °C, particularly less than 90 °C, more particularly less than 80 °C, or less than 70 °C, or less than 60 °C, or less than 50 °C, especially less than 40 °C. Furthermore, the dough composition processed according to the above conditions (e.g., by using an extruder) may be used at step (I) to produce the composition of the present invention, whereby a part of the high-temperature strong kneading required during the production of the composition may be pre-performed at the step of preparing the dough composition.

In particular, for compositions that are strongly kneaded using an extruder as in the present invention, increasing the amount of water to be added to the dough may increase the viscosity of the dough, which may in turn increase the resistance during kneading and the internal pressure, and tends to reduce the kneading strength (SME value) even when an agitator of the same capacity is used. In addition, if a heater of the same capacity is used, there may occur a situation where the dough composition, whose specific heat has increased with water addition, is neither heated up nor then cooled down sufficiently, which may have a negative impact on the starch processing in the present invention. Therefore, a method of adding a large amount of water to the dough composition in advance has not commonly been adopted in the conventional art, and even when water is added in advance, the proportion of water added in advance to the total amount of water to be incorporated is limited.

When an extruder is used in the production method of the present invention, a predetermined ratio of the total amount of water to be incorporated into the composition during the production process (typically more than 50 % by mass, in particular more than 60 % by mass, even more than 70 % by mass, or more than 80 % by mass, or more than 90 % by mass, in particular 100 % by mass, of the moisture content to be incorporated in the composition at step (I) may preferably be added, and/or the dry mass basis moisture content of the dough composition may be adjusted to more than 25 mass %, or more than 30 mass %, or more than 35 mass %, or more than 40 mass %, or 200 mass % or less, or 175 mass % or less, or 150 mass % or less by water addition) may preferably be pre-mixed with other raw materials before the interior of the extruder is pressurized (pre-pressurized), since this may serve to prevent the properties of starch from changing due to overheating. Specifically, typically 50 % or more, particularly 60 % or more, more particularly 70 % or more, or 80 % or more, or 90 % or more, especially 100% of the total amount of water to be incorporated into the composition during the production process may preferably be pre-mixed with other raw materials before the interior of the extruder is pressurized (pre-pressurized). This proportion of water may preferably pre-mixed with other raw materials before the interior of the extruder is heated to 100 °C or higher.

The type of the extruder to be use is not limited, but may preferably be one which allows for the steps of water addition, severe kneading (with an SME value of at least 350kJ/kg or more), heating, cooling, and extrusion molding in a single unit. Particularly preferred is an extruder with a structure that can add water to the raw material before heating and pressurization. Specifically, either a uniaxial extruder or a biaxial extruder can be used, but from the viewpoint of achieving strong kneading to promote the formation of the compositional structure of the invention, it is preferable to use a uniaxial extruder or a biaxial extruder instead of a common uniaxial extruder. In particular, uniaxial extruders are preferable from an economic viewpoint, while biaxial extruders are preferable from the viewpoint of obtaining higher kneading power. On the other hand, extruders using ordinary barrels, screw extruders using ordinary screws (driving screws), or ordinary helix-propelled equipment may not be suitable for the production method of the present invention, since the main purpose of such equipment is to feed the contents quickly and therefore may not be able to provide sufficient kneading force.

On the other hand, the devices commonly referred to as uniaxial screw extruders or biaxial screw extruders (especially the devices referred to as extruder or twin screw extruder overseas) include extruders that merely has mixer and kneader functions, but such devices are not desirable in the present invention, since they cannot achieve strong kneading to form the composition structure of the present invention. In addition, when a raw material having a starch grain structure is used, the structure is so strong that a sufficient kneading force may not be achieved by using an ordinary extruder with a limited flight screw part in order for the starch grain structure to be completely destroyed. Therefore, it may be even more preferable to use an extruder that has a significantly higher number of barrel parts than usual that have a kneading effect. Specifically, the ratio of the length of the flight screw part to the total barrel length in the extruder may preferably be 95% or lower, since this serves to achieve the strong kneading of the composition and thereby accelerate the formation of the characteristic structure of the composition of the present invention. The flight screw part, also referred to as the transport element, means a part of the barrel having the most common shape. The higher its ratio to the total barrel length, the stronger the ability to push the dough composition toward the die, but the weaker the ability to knead the dough composition and promote its reaction.

According to one embodiment of the production method of the present invention, the ratio of the length of the flight screw part to the total barrel length in the extruder may preferably be typically 95%less than, particularly 90 % or less, more particularly 85 % or less. Incidentally, when puffs and other swollen products are produced using an extruder, the composition must be extruded vigorously at high pressure (even when kneading is carried out at high SME values), which provides a motivation to increase the ratio of the flight screw part to the total barrel length, which is normally set at 95 % to 100 %.

According to one embodiment of the production method of the present invention, the part having the kneading effects may account for 5% or higher, more preferably 7% or higher, even more preferably 10% or higher, even more preferably 12% or higher of the total barrel length. In general, extruders using ordinary barrels, screw extruders using ordinary screws (driving screws), and ordinary helix-propelled equipment often do not satisfy the aforementioned range for the ratio of the flight screw section length to the total barrel length, since the main purpose of such equipment is to feed the contents quickly and is not designed to obtain strong kneading.

(9) Post treatment

The method for producing the composition of the present invention includes at least the steps (i) to (iii) explained above, and optionally the step (vi) mentioned above. However, any post treatment may also be carried out. Examples of post treatments include molding treatment and drying treatment.

Examples of molding treatments include molding the solid paste composition into a desired form (e.g., pasta, Chinese noodles, udon, inaniwa udon, kishimen, houtou, suiton, hiyamugi, somen, soba, soba gaki, bee-hun, pho, reimen, vermicelli, oatmeal, couscous, kiritanpo, tteok, and gyoza skins, as mentioned above). Such a molding treatment can be carried out using methods normally known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition. The term "paste composition" herein refers to a food composition produced by kneading food ingredients of edible plant origin, and encompasses kneaded products and pastas (including those not made from wheat). The drying treatment method may be any method selected from those generally used for drying food products.

[III: Crushed Product of Composition and its Agglomerate]

The composition of the present invention may be crushed before use. Specifically, the production method of the present invention may further include, after the cooling of step (iii), the step of (v) crushing the composition to produce a crushed composition. The thus-obtained crushed product of the composition of the present invention (hereinafter also referred to as "the crushed composition of the present invention") also constitutes a subject of the present invention. When the composition of the present invention is crushed into the crushed composition of the present invention, the conditions for crushing the composition are not particularly limited, but may be determined such that the particle diameter $d_{50}$ and/or $d_{90}$ of the crushed composition is adjusted to within the range of 50 $\mu$m or more but 1000 $\mu$m or less.

When producing the crushed composition of the present invention, it may be preferable to crush the composition of the present invention with high water retention properties, since the resulting crushed composition may constitute an agglomerate with excellent shape retention property even at s high moisture content in terms of dry mass basis. Specifically, according to a preferable embodiment of the present invention, even when an agglomerate is produced from a crushed composition with a high dry mass basis moisture content, for example, of typically 50 mass % or more, particularly 60 mass % or more, more particularly 70 mass % or more, or 80 mass % or more, or 90 mass % or more, especially 100 mass % or more, the resulting agglomerate may have excellent shape retention property. The upper limit of the dry mass basis moisture content is not particularly restricted, but may be 500 mass % or less, or 400 mass % or less. It is also possible to add moisture to the agglomerate composition followed by baking or kneading, whereby an agglomerate composition with excellent moisture retention property is obtained.

It is also possible to use the crushed composition of the present invention as a raw material to prepare an agglomerate of the crushed composition, e.g., by subjecting the crushed composition again to the high-temperature, strong-kneading treatment according to the production method of the present invention, or by adding a certain volume of water to the crushed composition followed by kneading. It may also be preferable to produce an agglomerate by pasta-pressing a crushed composition of the present invention containing more than 15 mass % of moisture (preferably a crushed composition the decremental difference in the dry mass basis moisture content at step (iii) and onward is 10 mass % or less) as a raw material, more preferably with heating at 70 °C or higher (or 80 °C or higher). In other words, the production method of the present invention may further include, after the crushing at step (v), the step of (vi) agglomerating the crushed composition to produce a crushed composition agglomerate. The thus-obtained agglomerate of the crushed composition of the present invention (also referred to as "the crushed composition agglomerate of the present invention") may also preferably be used as the composition of the present invention or as a raw material at step (i) of the production method of the present invention. The crushed composition agglomerate of the present invention also constitutes a subject of the present invention. When the composition of the present invention is crushed into the crushed composition of the present invention, the manufacture conditions are as explained above.

In addition, it may be preferable to use the crushed composition and/or the crushed composition agglomerate as a heat-treated raw material at step (i) of the production method of the present invention at a predetermined ratio, since this may serve to inhibit binding between pieces of the resulting composition. Specifically, the crushed composition obtained at step (v) and/or the crushed composition agglomerate obtained at step (vi) may be incorporated into the dough composition prepared at step (i) at a predetermined ratio in terms of dry mass basis. The lower limit of the ratio is not particularly restricted, but may be typically 5 mass % or more, particularly 10 mass % or more, more particularly 15 mass % or more, especially 20 mass % or more in terms of dry mass basis. The upper limit of the ratio is not particularly restricted, but may be typically 100 mass % or less, or 90 mass % or less.

## EXAMPLES

The present invention will now be described in further detail by way of Examples. These examples are shown merely for convenience of the description, and should not be construed as limitations to the present invention in any sense. Test Examples 9, 21 and 23 are not part of the invention.

[Preparation of starch-containing solid compositions]

Each dough composition for the Test Examples and the Comparative Examples were produced using dried pulse powder that had undergone the pre-treatment (powdering and heating treatment) indicated in "Dried pulse powder" of Table 1 below, with addition of water as appropriate. Using the dough composition in each of the Test Examples and Comparative Examples, the starch-containing solid compositions was produced under the conditions indicated in "Processing conditions" of Table 3 below. Specifically, the production was made using an equipment indicated in "Equipment type" of "Equipment used" and a barrel having a ratio indicated in "Ratio of flight screw segments" with changing, of the barrel segments (segments (1) to (9) indicated in Table 3 below), the segments indicated in "Kneading segments" with segments each having a shape with strong kneading capacity, and changing the temperature of each segment as indicated in "Temperature conditions" of the table (the segment (1) corresponds to the raw material injection part temperature, and the segment (9) corresponds to the outlet temperature).

The biaxial extruder used was a HAAKE Process 11 from Thermo Fisher Scientific (screw diameter 11 mm x 2, screw length 41 cm, segmented, co-rotating screw), and the uniaxial extruder used was a uniaxial extruder from NP Foods (screw diameter 70 mm x screw length 140 cm) was used. Water was added in accordance with the method indicated in "Water injection method." The processing was carried out using the conditions indicated in "Barrel rotating speed," "Kneading strength (SME)," and "Internal pressure (pressure near outlet)." The composition after extrusion was placed on a mesh-type conveyor, and optionally subjected to the post-treatment indicated in Table 3 to adjust the composition temperature, with also adjusting the period of time required after the dough temperature dropped to less than 80 °C until the dry mass basis moisture content was lowered to less than 25%, e.g., by spraying the composition with water in the form of mist, thereby producing the starch-containing solid composition.

In "Water injection method" of Table 3, "A" means that the powder of raw materials was mixed with the total volume of water (the volume satisfying the "Dry mass basis moisture content" of "Measurement values of dough compositions" in Table 2-2) to prepare dough, which was injected at segment (1), and "B" means that the powder of raw materials injected at segment (1), and the total volume of water (the volume satisfying the "Dry mass basis moisture content" of "Measurement values for dough compositions" in Table 2-2) was injected at the segment (3). In addition, in "Temperature conditions at each barrel segment" in Table 3, the symbol "-" means that no heating was carried out.

[Measurement of various contents and characteristics of dough compositions and starch-containing solid compositions]

Various components and physical properties were measured by means described below for the dough composition and the starch-containing solid composition of each of the Test Examples and Comparative Examples. The measurement results are shown in "Measurement values for dough compositions" of Table 2 below and "Measurement values for starch-containing solid composition measurement values" of Tables 4 and 5 below

[Measurement of starch, protein, insoluble dietary fiber, and dry mass basis moisture contents]

The "Starch" content was determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol. The "Protein" content was determined according to the Japan Standard Tables for Food Composition 2015 (7th revised edition), by quantifying the total amount of nitrogen using the modified Kjeldahl method, and then multiplying the total amount of nitrogen with the "nitrogen-protein conversion factor." The "Insoluble dietary fiber" content was determined according to the Japan Standard Tables for Food Composition 2015 (7th revised edition), using the Prosky variant method. The "Dry mass basis moisture content" was according to the Japan Standard Tables for Food Composition 2015 (7th revised edition), by heating to 90°C using a decompression heating and drying method.

[Measurement of molecular weight distribution of starch]

Measurement of molecular weight distribution and analysis of relating parameters (i.e., mass average molecular weight logarithms, [value α], [value β], and [value γ]) for each composition of the Test and Comparative Examples were carried out in the manner explained below.

One volume of each composition of the Test and Comparative Examples was subjected to isothermal treatment in 40 volumes of water at 90 °C for 15 minutes. As [procedure a], 2.5% aqueous dispersion of each composition of the Test and Comparative Examples was prepared, subjected to homogenizing treatment with the composition particles in the liquid, and then subjected to protein degrading enzyme treatment, and an ethanol-insoluble and dimethyl sulfoxide-soluble component was obtained as purified starch. The homogenizing treatment after the isothermal treatment was carried out at 25,000 rpm for 30 seconds using a homogenizer NS52 (Microtech Nichion, Inc.). The protein degrading enzyme treatment was carried out by adding 0.5 mass % proteolytic enzyme (Proteinase K by Takara Bio, product code 9034) to the homogenized composition and allowing them to react for 16 hours at 20°C.

The extraction of ethanol-insoluble and dimethyl sulfoxide-soluble component was carried out as follows. (i) After having undergone pulverizing and degreasing treatment, the composition was mixed with 240-fold volume of 99.5% ethanol (FUJIFILM Wako Pure Chemicals Co.), and the mixture was centrifuged (e.g., at 10000 rpm for 5 minutes). The precipitate fraction was collected as the ethanol-insoluble component. Next, (ii) the resulting ethanol-insoluble fraction was mixed with 80-fold volume of dimethyl sulfoxide (CAS67-68-5, FUJIFILM Wako Pure Chemicals Co.) based on the initial volume of the crushed composition. The mixture was dissolved by isothermal treatment at 90°C for 10 minutes with stirring, and the dissolved solution after isothermal treatment was centrifuged (e.g., at 10000 rpm for 5 minutes). The resulting supernatant was collected to obtain dimethyl sulfoxide-soluble fraction dissolved in dimethyl sulfoxide. Then, (iii) the resulting dimethyl sulfoxide-soluble fraction dissolved in dimethyl sulfoxide was mixed with 240-fold volume of 99.5% ethanol (FUJIFILM Wako Pure Chemicals Co.), and the mixture was centrifuged (e.g., at 10000 rpm for 5 minutes). The precipitate fraction was collected. Then, (iv) the above (iii) was repeated three times, and the final precipitate obtained was dried under reduced pressure, whereby the ethanol-insoluble and dimethyl sulfoxide-soluble component was obtained as purified starch.

Next, as [condition A], 0.10 mass % of the thus-obtained purified starch for each of the Test Examples and Comparative Examples was dissolved into 1M aqueous solution of sodium hydroxide, allowed to stand at 37°C for 30 minutes, combined with the same volume of water and the same volume of eluent (0.05M NaOH/0.2% NaCl), and filtered with a 5μm filter to obtain a filtrate. 5mL of the thus-obtained filtrate for each of the Test Examples and Comparative Examples was subjected to gel filtration chromatography, and a molecular weight distribution in an interval with molecular weight logarithms of 5.0 or more but less than 9.5 was measured.

As the gel filtration columns for gel filtration chromatography, the following four columns were selected, and connected in tandem from the upstream of the analysis, from the highest exclusion limit molecular weight to the lowest exclusion limit molecular weight. This configuration allows for separation of the starch having molecular weight logarithms corresponding to medium [value β] (i.e., 6.5 or more but less than 8.0) from the starch having molecular weight logarithms corresponding to smaller [value α] (i.e., 5.0 or more but less than 6.5) and/or the starch having molecular weight logarithms corresponding to larger [value γ] (i.e., 8.0 or more but less than 9.5), whereby each parameter can be measured appropriately.

*TOYOPEARL HW-75S (made by Tosoh Co., exclusion limit molecular weight (logarithm): 7.7Da, average pore diameter 100 nm or more, Φ2cmx30cm): two columns.
*TOYOPEARL HW-65S (made by Tosoh Co., exclusion limit molecular weight (logarithm): 6.6Da, average pore diameter 100 nm, Φ2cmx30cm): one column.
*TOYOPEARL HW-55S (made by Tosoh Co., exclusion limit molecular weight (logarithm): 5.8Da, average pore diameter 50 nm, Φ2cmx30cm): one column.

Other conditions for gel filtration chromatography were as follows. The eluting agent used as 0.05M NaOH/0.2% NaCl. Separation was carried out with an oven temperature of 40°C, at a flow rate of 1 mL/min, and detection was made with a unit time of 0.5 seconds. The detection equipment used was an RI detector (RI-8021 manufactured by Tosoh Co., Ltd.).

Data analysis of gel filtration chromatography was carried out as follows. Measurement values obtained from the detection instrument within the molecular weight logarithmic range to be measured (i.e., 5.0 or more but less than 9.5) were corrected so that the lowest value within the measurement range was zero. A calibration curve was prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). In addition, the sum of the measurement values obtained at all elution times within a given molecular weight logarithmic range (i.e., 5.0 or more but less than 9.5) of the measurement target was set at 100, and the measured value at each elution time (molecular weight log) was expressed as a percentage. This allowed for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created.

From the molecular weight distribution curve obtained by the above procedure, the mass average molecular weight was calculated by the following procedure. For each value within the logarithmic molecular weight range (i.e., 5.0 or more but less than 9.5) of the measurement target, the molecular weight converted from the elution time was multiplied by 1/100th of the Y-axis value in the molecular weight distribution described above (percentage of the measured value at each molecular weight to the total RI detector measured value for the entire measurement range) and added up. The mass average molecular weight was obtained by multiplying the value on the Y-axis of the aforementioned molecular weight distribution (percentage of the measured value at each molecular weight over the total RI detector measured value for the entire measurement range) by one-hundredth of the value on the Y-axis, and then calculating its ordinary logarithm to obtain the logarithm of the mass average molecular weight.

In addition, from the molecular weight distribution curve, the area under the curve was calculated for each of the following intervals with specific molecular weight logarithms, and determined as [value $\alpha$], [value $\beta$], and [value $\gamma$].

[Value $\alpha$] The ratio of the area under the curve in an interval with molecular weight logarithms of 5.0 or more but less than 6.5 to the area under the entire curve of the molecular weight distribution (i.e., 5.0 or more but less than 9.5).
[Value $\beta$] The ratio of the area under the curve in an interval with molecular weight logarithms of 6.5 or more but less than 8.0 to the area under the entire curve of the molecular weight distribution (i.e., 5.0 or more but less than 9.5).
[Value $\gamma$] The ratio of the area under the curve in an interval with molecular weight logarithms of 8.0 or more but less than 9.5 to the area under the entire curve of the molecular weight distribution (i.e., 5.0 or more but less than 9.5).

(Measurement of the number of starch grain structures in the field of view)

Each composition of the Test and Comparative Examples was pulverized with a mill and filtered through an aperture size of 150 μm to prepare composition powder. 3mg of the powder was suspended in 50μL of water to prepare a 6% aqueous suspension of composition powder. The suspension was dropped onto a glass slide, on which a cover glass was then placed and lightly crushed to obtain a prepared slide. Representative sites in the prepared slide were observed under a phase contrast microscope (ECLIPSE80i, Nikon) at a magnification of 200x to determine the number of starch grain structures in the field of view.

(Measurement of the peak temperature of gelatinization)

3.5g of each composition sample of the Test Examples and Comparative Examples in terms of dry mass basis was crushed such that the resulting crushed product has a size of, e.g., 100-mesh pass (150 μm mesh aperture) and 120-mesh on (125 μm mesh aperture). The resulting crushed material was then weighed into an aluminum cup for RVA measurement, and distilled water was added to make a total volume of 28.5 g to prepare 14 mass % sample aqueous slurry, which was used for the RVA viscosity measurement in [Procedure a] above. The measurement was started at 50°C. The rotation speed was set at 960 rpm from the start of measurement for 10 seconds, and then changed to 160 rpm and maintained until the end of measurement. After held at 50°C for one minute, the temperature was increased at a rate of 12.5°C/minute from 50°C to 140°C, while the peak temperature of gelatinization (°C) was measured.

(Degree of gelatinization of starch)

The degree of gelatinization of each composition of the Test and Comparative Examples was measured as the ratio of the gelatinized starch content to the total starch content using the glucoamylase second method, which was a partial modification of the Central Analytical Laboratory of Customs (following the method by Japan Food Research Laboratories: https://www.jfrl.or.jp/storage/file/221.pdf).

(Starch degrading enzyme activity)

The starch degrading enzyme activity in each composition of the Test and Comparative Examples was measured as follows. Each composition sample of the Test and Comparative Examples was crushed, 1g of a crushed sample was combined with 10 mL of 0.5% NaCl/10 mM acetic acid buffer (pH 5), allowed to stand at 4°C for 16 hours, then homogenized into a paste by using a homogenizer NS52 (Microtech Nichion) at 2500 rpm for 30 seconds, allowed to stand at 4°C for another 16 hours, and then filtered through filter paper (Advantec, Qualitative Filter Paper No. 2) to obtain an enzyme solution.

Two milliliter of 0.05% soluble starch (FUJIFILM Wako Pure Chemicals, starch (soluble) CAS 9005-25-8, product code 195-03961) was put into a test tube and allowed to stand at 37°C for 10 minutes. 0.25 mL of the enzyme solution was added and mixed, the mixture was then allowed to stand at 37°C for 30 minutes, and 0.25mL of 1M HCl was added and mixed. 0.25 mL of potassium iodide solution containing 0.05 mol/L of iodine (0.05 mol/L iodine solution: FUJIFILM Wako Pure Chemicals (product code 091-00475)) was added, mixed, and diluted with 11.5 mL of water. The absorbance of the resulting solution at 660 nm was measured with a spectrophotometer (absorbance A). As a control, 2 mL of 0.05% soluble starch was placed in a test tube and allowed to stand at 37°C for 40 minutes, then 0.25 mL of 1M HCl was added and mixed, followed by addition of 0.25 mL of the enzyme solution, 0.25 mL of 0.05 mol/L iodine solution, and 0.25 mL of water. After dilution, the absorbance at 660 nm was measured with a spectrophotometer (absorbance B).

A measurement sample was subjected to the enzyme reaction for 30 minutes, and the absorbance reduction rate C (%) at a wavelength of 660 nm measured with a spectrophotometer before and after the reaction was determined as the absorbance reduction rate of the enzyme reaction zone (absorbance A) relative to the comparison zone (absorbance B), i.e., {(absorbance B) - (absorbance A) / (absorbance B)} x 100 (%). The enzyme activity that reduces absorbance by 10% per 10 minutes was determined as one unit (U), and the enzyme activity per gram of the sample measured was determined from the absorbance reduction rate C (%) when the enzyme reaction was conducted with 0.25 mL of the enzyme solution (sample content: 0.025 g) for 30 minutes, using the following formula.

[Formula 4]

$$\text{Enzyme activity unit (U/g)} = \{C \times (10/30) \times (1/10)\} / 0.025$$

(Measurement of iodine stainability)

Samples of each composition of the Test and Comparative Examples before and after processing were put into 40 volumes of water, and immediately subjected to the processing defined in the [Procedure a] above to thereby obtain purified starch. The purified starch was then filtered and subjected to the gel filtration chromatography under the conditions defined in the [Condition A] above to thereby separate a fraction with molecular weight logarithms of 5.0 or more but less than 6.5 and a fraction with molecular weight logarithms of 6.5 or more but less than 8.0. Each of the separated fractions was adjusted to pH7.0 with hydrochloric acid (FUJIFILM Wako Pure Chemical Corp., special grade reagent hydrochloric acid), and stained with a iodine solution (0.25mM) prepared by 200-fold diluting 0.05mol/L iodine solution (FUJIFILM Wako Pure Chemical Corp., product code 091-00475), and the absorbance at 660 nm was measured with a spectrophotometer.

(Measurement of PDI)

One volume of each composition of the Test and Comparative Examples was mixed with 20 volumes of water and crushed (using a Microtech Nichion NS-310E3 homogenizer at 8500 rpm for 10 minutes), and the total nitrogen content of the resulting crushed liquid was multiplied by 20 to determine the total nitrogen content of the entire composition. The crushing solution was then centrifuged (3000G for 10 minutes), and the total nitrogen content of the supernatant obtained was multiplied by 20 to determine the water soluble nitrogen content, whereby the PDI value in the composition was determined. The total nitrogen content was measured using the combustion method (improved Dumas method) specified in the Food Labeling Law ("About Food Labeling Standards" (March 30, 2015, Shokuhin Table No. 139)).

[Sensory evaluation of starch-containing solid compositions]

One mass of each composition of the Test and Comparative Examples prepared in the manner described above was cooked in 9 masses of water at 90°C for 5 minutes, and sensory evaluation was conducted on the cooled product. Specifically, the heat cooled compositions were placed on paper plates, and 10 trained sensory inspectors observed the compositions and evaluated their physical properties and tastes when eaten from the viewpoints of "elasticity during water retention," "viscosity during water retention," and "overall evaluation," in accordance with the following criteria. The average of the scores of 10 sensory inspectors was calculated for each evaluation item, and rounded off to the first decimal place to obtain the final score. Sensory inspectors who conducted each sensory test were selected from inspectors who had been trained in advance to distinguish taste, texture, and appearance of food products, had particularly excellent performance, had experience in product development, were knowledgeable about the quality of the taste, texture, and appearance of food products, and were capable of performing absolute evaluation for each sensory test item. For any of the aforementioned evaluation items, all the inspectors evaluated the standard samples in advance and standardized the scores for each of the evaluation criteria before conducting an objective sensory inspection.

*Evaluation criteria for "Elasticity during water retention":

The elasticity of each composition was evaluated on the following one-to-five scale.

5: Very favorable, with elasticity very strongly felt.
4: Favorable, with elasticity strongly felt.
3: Rather favorable, with elasticity felt.
2: Rather unfavorable, with little elasticity felt.
1: Unfavorable, with no elasticity felt.

*Evaluation criteria for "Viscosity during water retention":

The viscosity of each composition was evaluated on the following one-to-five scale.

5: Very favorable, with no composition surface viscosity felt.
4: Favorable, with little composition surface viscosity felt.
3: Rather favorable, with composition surface viscosity slightly felt.
2: Rather unfavorable, with composition surface viscosity felt.
1: Unfavorable, with composition surface viscosity prominently felt.

*Evaluation criteria for "Overall evaluation":

The balance between elasticity and viscosity of each composition was evaluated on the following one-to-five scale.

5: Very favorable, with a very good balance between composition elasticity and viscosity.
4: Favorable, with a good balance between composition elasticity and viscosity.
3: Rather favorable, with an acceptable balance between composition elasticity and viscosity.
2: Rather unfavorable, with a slightly bad balance between composition elasticity and viscosity.
1: Unfavorable, with a bad balance between composition elasticity and viscosity.

[Results]

The manufacture conditions, contents, physical properties, and evaluation results of each composition of the Test and Comparative Examples are indicated in Tables 1 to 5 below.

[Table 1-1]

| Table 1 | Dry pulse powder | | | |
|---|---|---|---|---|
| | Raw material pulse | Powdering method | Heat treatment method | d50 after ultrasonication |
| | | | | μm |
| Comparative Example 1 | Yellow pea (with seed skin) | Pin mill | Powder steam-treated at 100°C, 5 min | 35 |
| Comparative Example 2 | Yellow pea (with seed skin) | Pin mill | Powder steam-treated at 100°C, 5 min | 100 |

(continued)

| Table 1 | Dry pulse powder | | | |
|---|---|---|---|---|
| | Raw material pulse | Powdering method | Heat treatment method | d50 after ultrasonication |
| | | | | μm |
| Test Example 3 | Yellow pea (with seed skin) | Pin mill | Powder steam-treated at 100°C, 5 min | 100 |
| Test Example 4 | Yellow pea (with seed skin) | Pin mill | Powder steam-treated at 100°C, 5 min | 100 |
| Comparative Example 5 | Yellow pea (with seed skin) | Pin mill | Powder steam-treated at 100°C, 5 min | 100 |
| Test Example 6 | Yellow pea (with seed skin) | Pin mill | Powder steam-treated at 100°C, 5 min | 100 |
| Test Example 7 | Yellow pea (with seed skin) | Pin mill | Powder steam-treated at 100°C, 5 min | 100 |
| Comparative Example 8 | Yellow pea (with seed skin) | Pin mill | Powder steam-treated at 100°C, 5 min | 100 |
| Test Example 9 | Yellow pea (with seed skin) | Pin mill | Powder steam-treated at 100°C, 5 min | 100 |
| Test Example 10 | Yellow pea (with seed skin) | Pin mill | Powder steam-treated at 100°C, 5 min | 100 |
| Test Example 11 | Yellow pea (with seed skin) | Pin mill | Powder steam-treated at 100°C, 5 min | 100 |
| Test Example 12 | Yellow pea (with seed skin) | Pin mill | Powder steam-treated at 100°C, 5 min | 100 |
| Test Example 13 | Yellow pea (with seed skin) | Pin mill | Powder steam-treated at 100°C, 5 min | 100 |
| Test Example 14 | Yellow pea (with seed skin) | Pin mill | Powder steam-treated at 100°C, 5 min | 100 |
| Test Example 15 | Yellow pea (with seed skin) | Pin mill | Pulse steam-treated at 85°C, 90 min | 100 |
| Test Example 16 | Yellow pea (with seed skin) | Pin mill | Pulse steam-treated at 85°C, 90 min | 220 |
| Test Example 17 | Yellow pea (with seed skin) | Pin mill | Pulse steam-treated at 85°C, 90 min | 425 |
| Test Example 18 | Yellow pea (with seed skin) | Pin mill | Pulse steam-treated at 85°C, 90 min | 539 |

[Table 1-2]

| Table 1 | Dry pulse powder | | | |
|---|---|---|---|---|
| | Raw material pulse | Powdering method | Heat treatment method | d50 after ultrasonication |
| | | | | μm |
| Test Example 19 | Yellow pea (without seed skin) | Pin mill | Pulse steam-treated at 85°C. 90 min, then Powder steam-treated at 100°C, 10 min | 126 |

(continued)

| Table 1 | Dry pulse powder | | | |
|---|---|---|---|---|
| | Raw material pulse | Powdering method | Heat treatment method | d50 after ultrasonication |
| | | | | µm |
| Test Example 20 | Yellow pea (with seed skin) | Pin mill | None (non-treated pulse pulverized) | 90 |
| Test Example 21 | Yellow pea (with seed skin) | Pin mill | None (non-treated pulse pulverized) | 90 |
| Comparative Example 22 | Yellow pea (without seed skin) | Pin mill | Powder steam-treated at 100°C, 5 min | 48 |
| Test Example 23 | Yellow pea (without seed skin) | Pin mill | Powder steam-treated at 100°C, 5 min | 48 |
| Test Example 24 | Yellow pea (without seed skin) | Pin mill | Powder steam-treated at 100°C, 5 min | 48 |
| Test Example 25 | Yellow pea (without seed skin) | Pin mill | Powder steam-treated at 100°C, 5 min | 48 |
| Test Example 26 | Chickpea (with seed skin) | Jet mill | Pulse roasted at 100°C, 10 min | 3 |
| Test Example 27 | Blue pea (with seed skin) | Hammer mill | Pulse heat-treated at 70°C, 30 min | 268 |
| Test Example 28 | Lentil (with seed skin) | Hammer mill | Pulse heat-treated at 70°C, 30 min | 358 |
| Test Example 29 | Kidney bean (with seed skin) | Hammer mill | Pulse steam-treated at 110°C, 5 min, then Powder steam-treated at 90°C, 10 min | 152 |
| Test Example 30 | Grean bean (with seed skin) | Pin mill | Pulse heat-treated at 60°C, 60 min | 84 |
| Test Example 31 | Pea (without seed skin) | Pin mill | Powder steam-treated at 100°C, 5 min | 135 |
| Comparative Example 32 | Yellow pea (without seed skin) | Pin mill | Raw material powder kneaded with Extruder heated at 90°C | 126 |

[Table 2A-1]

| Table 2A | Measurement values for dough composition | | | | | | | | | | |
|---|---|---|---|---|---|---|---|---|---|---|---|
| | Dry pulse powder content | Starch | | | | | | | | | |
| | | Originl of starch (main material) | Starch content (wet basis) | Degree of gelatinization of starch | Ratio of starch contained in pulse to Total starch content | Value $\alpha$ | Value $\beta$ | Value $\gamma$ | Starch degrading enzyme activity (dry basis) | Iodine stainability ratio [(ABS6.5-8.0)/(ABS5.0-6.5)] | Iodine stainability of low Mw fraction (Mw log 5.0-6.5) |
| | mass % | | mass % | mass % | mass % | % | % | % | U/g | ABS 660mm | ABS 660nm |
| Comparative Example 1 | 100 | Yellow pea | 29 | 13 | 100 | 74 | 24 | 1 | 47.0 | 0.233 | 0.15 |
| Comparative Example 2 | 100 | Yellow pea | 29 | 4 | 100 | 74 | 24 | 1 | 47.0 | 0.233 | 0.15 |
| Test Example 3 | 100 | Yellow pea | 29 | 4 | 100 | 74 | 24 | 1 | 47.0 | 0.233 | 0.15 |
| Test Example 4 | 100 | Yellow pea | 29 | 4 | 100 | 74 | 24 | 1 | 47.0 | 0.233 | 0.15 |
| Comparative Example 5 | 100 | Yellow pea | 29 | 4 | 100 | 74 | 24 | 1 | 47.0 | 0.233 | 0.15 |
| Test Example 6 | 100 | Yellow pea | 29 | 4 | 100 | 74 | 24 | 1 | 47.0 | 0.233 | 0.15 |
| Test Example 7 | 100 | Yellow pea | 29 | 4 | 100 | 74 | 24 | 1 | 47.0 | 0.233 | 0.15 |
| Comparative Example 8 | 100 | Yellow pea | 29 | 4 | 100 | 74 | 24 | 1 | 47.0 | 0.233 | 0.15 |
| Test Example 9 | 100 | Yellow pea | 29 | 4 | 100 | 74 | 24 | 1 | 47.0 | 0.233 | 0.15 |
| Test Example 10 | 100 | Yellow pea | 29 | 4 | 100 | 74 | 24 | 1 | 47.0 | 0.233 | 0.15 |
| Test Example 11 | 100 | Yellow pea | 29 | 4 | 100 | 74 | 24 | 1 | 47.0 | 0.233 | 0.15 |
| Test Example 12 | 100 | Yellow pea | 29 | 4 | 100 | 74 | 24 | 1 | 47.0 | 0.233 | 0.15 |

[Table 2A-2]

| Table 2A | Measurement values for dough composition | | | | | | | | | | |
|---|---|---|---|---|---|---|---|---|---|---|---|
| | Dry pulse powder content | Starch | | | | | | | | | |
| | | Originl of starch (main material) | Starch content (wet basis) | Degree of gelatinization of starch | Ratio of starch contained in pulse to Total starch content | Value $\alpha$ | Value $\beta$ | Value $\gamma$ | Starch degrading enzyme activity (dry basis) | Iodine stainability ratio [(ABS6.5-8.0)/(ABS5.0-6.5)] | Iodine stainability of low Mw fraction (Mw log 5.0-6.5) |
| | mass % | | mass % | mass % | mass % | % | % | % | U/g | ABS 660nm | ABS 660nm |
| Test Example 13 | 100 | Yellow pea | 29 | 4 | 100 | 74 | 24 | 1 | 47.0 | 0.233 | 0.15 |
| Test Example 14 | 100 | Yellow pea | 29 | 4 | 100 | 74 | 24 | 1 | 47.0 | 0.233 | 0.15 |
| Test Example 15 | 100 | Yellow pea | 29 | 13 | 100 | 68 | 32 | 1 | 51.0 | 0.010 | 0.10 |
| Test Example 16 | 100 | Yellow pea | 29 | 13 | 100 | 68 | 32 | 1 | 51.0 | 0.010 | 0.10 |
| Test Example 17 | 100 | Yellow pea | 29 | 13 | 100 | 68 | 32 | 1 | 51.0 | 0.010 | 0.10 |
| Test Example 18 | 100 | Yellow pea | 29 | 13 | 100 | 68 | 32 | 1 | 51.0 | 0.010 | 0.10 |
| Test Example 19 | 100 | Yellow pea | 26 | 35 | 100 | 62 | 38 | 1 | 23.0 | 0.513 | 0.72 |
| Test Example 20 | 100 | Yellow pea | 20 | 4 | 100 | 79 | 20 | 1 | 45.0 | 2.500 | 0.10 |
| Test Example 21 | 100 | Yellow pea | 20 | 4 | 100 | 79 | 20 | 1 | 80.0 | 2.500 | 0.10 |
| Comparative Example 22 | 45 | Yellow pea 45% Purified rice starch 55% | 50 | 13 | 28 | 32 | 34 | 32 | 39.0 | 0.001 | 1.25 |

[Table 2A-3]

| Table 2A | Measurement values for dough composition | | | | | | | | | | |
|---|---|---|---|---|---|---|---|---|---|---|---|
| | Dry pulse powder content | Starch | | | | | | | | | |
| | | Originl of starch (main material) | Starch content (wet basis) | Degree of gelatinization of starch | Ratio of starch contained in pulse to Total starch content | Value $\alpha$ | Value $\beta$ | Value $\gamma$ | Starch degrading enzyme activity (dry basis) | Iodine stainability ratio [(ABS6.5-8.0)/ (ABS5.0-6.5)] | Iodine stainability of low Mw fraction (Mw log 5.0-6.5) |
| | mass % | | mass % | mass % | mass % | % | % | % | U/g | ABS 660nm | ABS 660nm |
| Test Example 23 | 60 | Yellow pea 60% Purified rice starch 40% | 45 | 11 | 45 | 42 | 34 | 24 | 45.0 | 0.196 | 0.78 |
| Test Example 24 | 80 | Yellow pea 80% Purified rice starch 20% | 40 | 15 | 65 | 59 | 33 | 8 | 35.0 | 0.228 | 0.58 |
| Test Example 25 | 90 | Yellow pea 90% Purified rice starch 10% | 37 | 12 | 80 | 63 | 33 | 4 | 56.0 | 0.852 | 0.25 |
| Test Example 26 | 100 | Chickpea | 16 | 8 | 100 | 67 | 33 | 1 | 51.0 | 3.660 | 0.15 |
| Test Example 27 | 100 | Blue pea | 10 | 9 | 100 | 69 | 30 | 1 | 39.0 | 0.254 | 0.35 |
| Test Example 28 | 100 | Lentil | 20 | 5 | 100 | 71 | 28 | 1 | 31.0 | 3.570 | 0.10 |
| Test Example 29 | 100 | Kidney bean | 18 | 5 | 100 | 70 | 29 | 1 | 25.0 | 0.197 | 0.61 |
| Test Example 30 | 100 | Grean bean | 20 | 36 | 100 | 83 | 14 | 3 | 38.0 | 2.367 | 0.15 |

(continued)

| Table 2A | Measurement values for dough composition | | | | | | | | | | |
|---|---|---|---|---|---|---|---|---|---|---|---|
| | Dry pulse powder content | Starch | | | | | | | | | |
| | | Originl of starch (main material) | Starch content (wet basis) | Degree of gelatinization of starch | Ratio of starch contained in pulse to Total starch content | Value $\alpha$ | Value $\beta$ | Value $\gamma$ | Starch degrading enzyme activity (dry basis) | Iodine stainability ratio [(ABS6.5-8.0)/(ABS5.0-6.5)] | Iodine stainability of low Mw fraction (Mw log 5.0-6.5) |
| | mass % | | mass % | mass % | mass % | % | % | % | U/g | ABS 660nm | ABS 660nm |
| Test Example 31 | 100 | Pea | 15 | 11 | 100 | 74 | 24 | 1 | 44.0 | 2.207 | 0.15 |
| Comparative Example 32 | 100 | Yellow pea | 26 | 45 | 100 | 90 | 10 | 0 | 0.0 | 0.001 | 1.89 |

[Table 2B-1]

| Table 2B | Measurement values for dough composition | | | | | | | |
|---|---|---|---|---|---|---|---|---|
| | Protein | | | | Insoluble dietary fiber | | | Dry mass basis moisture content |
| | Origin of Protein (main material) | Protein content (wet basis) | Ratio of protein contained in pulse to Total protein content | PDI Value | Origin of dietary fiber (main material) | Insoluble dietary fiber content (wet basis) | d50 after starch-and protein-digestion treatment A and ultrasonication | |
| | | mass % | mass % | mass % | | mass % | µm | mass % |
| Comparative Example 1 | Yellow pea | 16.0 | 100 | 77 3 | Yellow pea (with seed skin) | 13.3 | 16 | 50 |
| Comparative Example 2 | Yellow pea | 16.0 | 100 | 77.3 | Yellow pea (with seed skin) | 13.3 | 16 | 50 |
| Test Example 3 | Yellow pea | 16.0 | 100 | 77.3 | Yellow pea (with seed skin) | 13.3 | 16 | 50 |
| Test Example 4 | Yellow pea | 16.0 | 100 | 77.3 | Yellow pea (with seed skin) | 13.3 | 16 | 50 |
| Comparative Example 5 | Yellow pea | 16.0 | 100 | 77.3 | Yellow pea (with seed skin) | 13.3 | 16 | 50 |
| Test Example 6 | Yellow pea | 16.0 | 100 | 773 | Yellow pea (with seed skin) | 13.3 | 16 | 50 |
| Test Example 7 | Yellow pea | 16.0 | 100 | 77.3 | Yellow pea (with seed skin) | 13.3 | 16 | 50 |
| Comparative Example 8 | Yellow pea | 16.0 | 100 | 77.3 | Yellow pea (with seed skin) | 13.3 | 16 | 50 |
| Test Example 9 | Yellow pea | 16.0 | 100 | 77.3 | Yellow pea (with seed skin) | 13.3 | 16 | 50 |
| Test Example 10 | Yellow pea | 16.0 | 100 | 77.3 | Yellow pea (with seed skin) | 13.3 | 16 | 50 |

(continued)

| Table 2B | Measurement values for dough composition | | | | | | | |
|---|---|---|---|---|---|---|---|---|
| | Protein | | | | Insoluble dietary fiber | | | Dry mass basis moisture content |
| | Origin of Protein (main material) | Protein content (wet basis) | Ratio of protein contained in pulse to Total protein content | PDI Value | Origin of dietary fiber (main material) | Insoluble dietary fiber content (wet basis) | d50 after starch-and protein-digestion treatment A and ultrasonication | |
| | | mass % | mass % | mass % | | mass % | µm | mass % |
| Test Example 11 | Yellow pea | 16.0 | 100 | 77.3 | Yellow pea (with seed skin) | 13.3 | 16 | 50 |
| Test Example 12 | Yellow pea | 16.0 | 100 | 77.3 | Yellow pea (with seed skin) | 13.3 | 16 | 50 |
| Test Example 13 | Yellow pea | 16.0 | 100 | 773 | Yellow pea (with seed skin) | 13.3 | 16 | 50 |
| Test Example 14 | Yellow pea | 16.0 | 100 | 77.3 | Yellow pea (with seed skin) | 13.3 | 16 | 50 |
| Test Example 15 | Yellow pea | 8.0 | 100 | 81.5 | Yellow pea (with seed skin) | 12.6 | 69 | 75 |
| Test Example 16 | Yellow pea | 8.0 | 100 | 81.5 | Yellow pea (with seed skin) | 12.6 | 196 | 75 |
| Test Example 17 | Yellow pea | 8.0 | 100 | 81 5 | Yellow pea (with seed skin) | 12.6 | 405 | 75 |
| Test Example 18 | Yellow pea | 7.4 | 100 | 81.5 | Yellow pea (with seed skin) | 12.6 | 521 | 75 |

[Table 2B-2]

| Table 2B | Measurement values for dough composition | | | | | | | |
|---|---|---|---|---|---|---|---|---|
| | Protein | | | | Insoluble dietary fiber | | | Dry mass basis moisture content |
| | Origin of Protein (main material) | Protein content (wet basis) | Ratio of protein contained in pulse to Total protein content | PDI Value | Origin of dietary fiber (main material) | Insoluble dietary fiber content (wet basis) | d50 after starch-and protein-digestion treatment A and ultrasonication | |
| | | mass % | mass % | mass % | | mass % | µm | mass % |
| Test Example 19 | Yellow pea | 6.0 | 100 | 48 | Yellow pea (without seed skin) | 4.0 | 120 | 150 |
| Test Example 20 | Yellow pea | 7.4 | 100 | 95 | Yellow pea (with seed skin) + Yellow pea seed skin | 20.0 | 123 | 75 |
| Test Example 21 | Yellow pea | 7.4 | 100 | 95 | Yellow pea (with seed skin) + Yellow pea seed skin | 20.0 | 153 | 75※ |
| Comparative Example 22 | Yellow pea | 5.3 | 100 | 75 | Yellow pea (without seed skin) | 3.3 | 23 | 50 |
| Test Example 23 | Yellow pea | 8.0 | 100 | 74 | Yellow pea (without seed skin) | 6.7 | 52 | 50 |
| Test Example 24 | Yellow pea | 12.0 | 100 | 81 | Yellow pea (without seed skin) | 8.0 | 50 | 50 |
| Test Example 25 | Yellow pea | 13.3 | 100 | 80 | Yellow pea (without seed skin) | 8.7 | 54 | 50 |
| Test Example 26 | Chickpea | 10.0 | 100 | 89 | Chickpea (with seed skin) | 8.0 | 5 | 100 |
| Test Example 27 | Blue pea | 12.5 | 100 | 98 | Blue pea (with seed skin) | 9.5 | 262 | 100 |

(continued)

| Table 2B | Measurement values for dough composition | | | | | | | |
|---|---|---|---|---|---|---|---|---|
| | Protein | | | | Insoluble dietary fiber | | | Dry mass basis moisture content |
| | Origin of Protein (main material) | Protein content (wet basis) | Ratio of protein contained in pulse to Total protein content | PDI Value | Origin of dietary fiber (main material) | Insoluble dietary fiber content (wet basis) | d50 after starch-and protein-digestion treatment A and ultrasonication | |
| | | mass % | mass % | mass % | | mass % | μm | mass % |
| Test Example 28 | Lentil | 8.5 | 100 | 92 | Lentil (with seed skin) | 11.5 | 335 | 100 |
| Test Example 29 | Kidney bean | 11.0 | 100 | 45 | Kidney bean (with seed skin) | 11.5 | 211 | 100 |
| Test Example 30 | Grean bean | 14.5 | 100 | 99 | Grean bean (with seed skin) | 7.5 | 56 | 100 |
| Test Example 31 | Pea+ Purified pea protein | 19.5 | 100 | 89 | Pea | 7.5 | 68 | 100 |
| Comparative Example 32 | Yellow pea | 7.5 | 100 | 0 | Yellow pea (without seed skin) | 5.0 | 120 | 100 |

[Table 3-1]

| Table 3 | Processing conditions | | | | Processing conditions | | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | | | | | |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | Kneading strength (SME) | Post-treatment | Decrease in Degree of gelatinization of starch at Post-treatment | Time after dough temp. dropped below 80°C until dry basis moisture content decreases to below 25% |
| | | % to total length | | | °C | °C | °C | °C | °C | °C | Degassing method (suction capacity) | Boiled? | °C | °C | °C | kJ/kg | | mass % | Min |
| Comparative Example 1 | Uniaxial extruder | 66 | (4)(5) (6) | A | - | - | - | - | - | - | Forced exhaust (0.8MPa) | No | - | - | - | 1540 | Air-dried (22°C) | 9 | 350 |
| Comparative Example 2 | Uniaxial extruder | 66 | (4)(5) (6) | A | - | 80 | 80 | 80 | 80 | 80 | Forced exhaust (0.6MPa) | No | 80 | 80 | 60 | 1489 | Air-dried (22°C) | 8 | 280 |
| Test Example 3 | Uniaxial extruder | 66 | (4)(5) (6) | A | - | 80 | 100 | 100 | 100 | 100 | Forced exhaust (0.6MPa) | No | 90 | 80 | 60 | 1398 | Air-dried (22°C) | 6 | 60 |
| Test Example 4 | Uniaxial extruder | 66 | (4)(5) (6) | A | - | 80 | 100 | 120 | 120 | 120 | Forced exhaust (0.6MPa) | No | 90 | 80 | 60 | 1380 | Air-dried (22°C) | 34 | 60 |
| Comparative Example 5 | Uniaxial extruder | 87 | (6) | A | - | 80 | 100 | 120 | 120 | 120 | Forced exhaust (0.6MPa) | No | 90 | 80 | 60 | 326 | Air-dried (22°C) | 3 | 60 |
| Test Example 6 | Uniaxial extruder | 66 | (4)(5) (6) | A | - | 80 | 100 | 170 | 170 | 170 | Forced exhaust (0.6MPa) | No | 90 | 80 | 60 | 1240 | Air-dried (22°C) | 46 | 60 |

(continued)

| Table 3 | Processing conditions | | | | Processing conditions | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | Kneading strength (SME) | Post-treatment | Decrease in Degree of gelatinization of starch at Post-treatment | Time after dough temp. dropped below 80°C until dry basis moisture content decreases to below 25% |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | | | | |
| | | % to total length | | | °C | °C | °C | °C | °C | °C | Degassing method (suction capacity) | Boiled? | °C | °C | °C | kJ/kg | | mass % | Min |
| Test Example 7 | Uniaxial extruder | 66 | (4)(5) (6) | A | - | 80 | 100 | 190 | 100 | 190 | Forced exhaust (0.6MPa) | Slightly | 90 | 80 | 60 | 1130 | Air-dried (22°C) | 46 | 60 |
| Comparative Example 8 | Uniaxial extruder | 66 | (4)(5) (6) | A | - | 80 | 100 | 200 | 200 | 200 | Forced exhaust (0.6MPa) | Yes | 90 | 80 | 60 | 1050 | Air-dried (22°C) | 53 | 60 |
| Test Example 9 | Uniaxial extruder | 66 | (4)(5) (6) | A | - | 80 | 100 | 120 | 120 | 120 | Forced exhaust (0.2MPa) | No | 90 | 80 | 60 | 1136 | Air-dried (80°C) | 1 | 30 |
| Test Example 10 | Uniaxial extruder | 66 | (4)(5) (6) | A | - | 80 | 100 | 120 | 120 | 120 | Forced exhaust (0.6MPa) | No | 90 | 80 | 60 | 1050 | Air-dried (22°C) | 35 | 60 |

[Table 3-2]

| Table 3 | Processing conditions | | | | Processing conditions | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | Kneading strength (SME) | Post-treatment | Decrease in Degree of gelatinization of starch at Post-treatment | Time after dough temp. dropped below 80°C until dry basis moisture content decreases to below 25% |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | | | | |
| | | % to total length | | | °C | °C | °C | °C | °C | °C | Degassing (suction capacity) | Boiled? | °C | °C | °C | kJ/kg | | mass % | Min |
| Test Example 11 | Uniaxial extruder | 66 | (4)(5) (6) | A | - | 80 | 10 0 | 120 | 120 | 120 | Forced exhaust (0.6MPa) | No | 90 | 80 | 60 | 1205 | Air-dried (22°C) | 22 | 60 |
| Test Example 12 | Uniaxial extruder | 66 | (4)(5) (6) | A | - | 80 | 100 | 120 | 120 | 120 | Forced exhaust (1.0MPa) | No | 90 | 80 | 60 | 1380 | Refrigerated | 34 | 1500 < |
| Test Example 13 | Uniaxial extruder | 66 | (4)(5) (6) | A | - | 80 | 100 | 120 | 120 | 120 | Forced exhaust (1.0MPa) | No | 90 | 80 | 60 | 1380 | Air-dried (4°C) | 40 | 240 |
| Test Example 14 | Uniaxial extruder | 66 | (4)(5) (6) | A | - | 80 | 100 | 120 | 120 | 120 | Forced exhaust (0.8MPa) | No | 90 | 80 | 60 | 1380 | Air-dried (10°C) | 46 | 180 |
| Test Example 15 | Uniaxial extruder | 66 | (4)(5) (6) | A | - | 80 | 100 | 120 | 120 | 120 | Forced exhaust (0.8MPa) | No | 90 | 80 | 60 | 953 | Air-dried (28°C) | 20 | 30 |
| Test Example 16 | Uniaxial extruder | 66 | (4)(5) (6) | A | - | 80 | 100 | 120 | 120 | 120 | Forced exhaust (0.8MPa) | No | 90 | 80 | 60 | 896 | Air-dried (28°C) | 28 | 30 |
| Test Example 17 | Uniaxial extruder | 66 | (4)(5) (6) | A | - | 80 | 100 | 120 | 120 | 120 | Forced exhaust (0.8MPa) | No | 90 | 80 | 60 | 958 | Air-dried (28°C) | 33 | 30 |

(continued)

| Table 3 | Processing conditions | | | | Processing conditions | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | Kneading strength (SME) | Post-treatment | Decrease in Degree of gelatinization of starch at Post-treatment | Time after dough temp. dropped below 80°C until dry basis moisture content decreases to below 25% |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | | | | |
| | | % to total length | | | °C | °C | °C | °C | °C | °C | Degassing (suction capacity) | Boiled? | °C | °C | °C | kJ/kg | | mass % | Min |
| Test Example 18 | Uniaxial extruder | 66 | (4)(5) (6) | A | - | 80 | 100 | 120 | 120 | 120 | Forced exhaust (0.8MPa) | No | 90 | 80 | 60 | 850 | Air-dried (28°C) | 46 | 30 |
| Test Example 19 | Uniaxial extruder | 66 | (4)(5) (6) | A | - | 80 | 100 | 120 | 120 | 120 | Forced exhaust (0.8MPa) | No | 90 | 80 | 60 | 2152 | Air-dried (32°C) | 42 | 200 |
| Test Example 20 | Biaxial extruder | 50 | (3)(4) (5) (6) | A | - | 80 | 100 | 120 | 120 | 120 | None | No | 90 | 80 | 60 | 458 | Air-dried (40°C) | 0 | 10 |
| Test Example 21 | Biaxial extruder | 50 | (3)(4) (5) (6) | B | - | 80 | 100 | 120 | 120 | 120 | None | No | 90 | 80 | 60 | 405 | Air-dried (40°C) | 0 | 10 |

[Table 3-3]

| Table 3 | Processing conditions | | | | Processing conditions | | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | | | | | |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | Kneading strength (SME) | Post-treatment | Decrease in Degree of gelatinization of starch at Post-treatment | Time after dough temp. dropped below 80°C until dry basis moisture content decreases to below 25% |
| | | % to total length | | | °C | °C | °C | °C | °C | °C | Degassing method (suction capacity) | Boiled? | °C | °C | °C | kJ/kg | | mass % | Min |
| Comparative Example 22 | Uniaxial extruder | 66 | (4)(5) (6) | A | - | 80 | 100 | 120 | 120 | 120 | Forced exhaust (0.8MPa) | No | 90 | 80 | 60 | 428 | Air-dried (22°C) | 21 | 30 |
| Test Example 23 | Uniaxial extruder | 66 | (4)(5) (6) | A | - | 80 | 100 | 120 | 120 | 120 | Forced exhaust (0.8MPa) | No | 90 | 80 | 60 | 453 | Air-dried (22°C) | 28 | 30 |
| Test Example 24 | Uniaxial extruder | 66 | (4)(5) (6) | A | - | 80 | 100 | 120 | 120 | 120 | Forced exhaust (0.8MPa) | No | 90 | 80 | 60 | 688 | Air-dried (22°C) | 31 | 30 |
| Test Example 25 | Uniaxial extruder | 66 | (4)(5) (6) | A | - | 80 | 100 | 120 | 120 | 120 | Forced exhaust (0.8MPa) | No | 90 | 80 | 60 | 688 | Air-dried (22°C) | 18 | 25 |
| Test Example 26 | Uniaxial extruder | 66 | (4)(5) (6) | A | - | 80 | 100 | 120 | 120 | 120 | Forced exhaust (0.8MPa) | No | 90 | 80 | 60 | 899 | Air-dried (22°C) | 43 | 50 |
| Test Example 27 | Uniaxial extruder | 80 | (5)(6) | A | - | 80 | 100 | 110 | 110 | 110 | Forced exhaust (0.8MPa) | No | 90 | 80 | 60 | 1052 | Air-dried (22°C) | 20 | 50 |

(continued)

| Table 3 | Processing conditions | | | | Processing conditions | | | | | | | | | | | | | | |
|---|---|---|---|---|---|---|---|---|---|---|---|---|---|---|---|---|---|---|---|
| | Equipment | | | | Temp. condition for each barrel segment | | | | | | | | | | | Kneading strength (SME) | Post-treatment | Decrease in Degree of gelatinization of starch at Post-treatment | Time after dough temp. dropped below 80°C until dry basis moisture content decreases to below 25% |
| | Type | Flight screw ratio | Kneading segments | Water injection method | (1) (Raw material injection) | (2) | (3) | (4) | (5) | (6) | Depressurizing section | | (7) | (8) | (9) (Outlet Temp.) | | | | |
| | | % to total length | | | °C | °C | °C | °C | °C | °C | Degassing method (suction capacity) | Boiled? | °C | °C | °C | kJ/kg | | mass % | Min |
| Test Example 28 | Uniaxial extruder | 80 | (5)(6) | A | - | 80 | 100 | 110 | 110 | 110 | Forced exhaust (0.8MPa) | No | 90 | 80 | 60 | 1055 | Air-dried (22°C) | 6 | 50 |
| Test Example 29 | Uniaxial extruder | 80 | (5)(6) | A | - | 80 | 100 | 110 | 110 | 110 | Forced exhaust (0.8MPa) | No | 90 | 80 | 50 | 847 | Air-dried (22°C) | 41 | 120 |
| Test Example 30 | Uniaxial extruder | 80 | (5)(6) | A | - | 80 | 100 | 110 | 110 | 110 | Forced exhaust (0.8MPa) | No | 90 | 80 | 50 | 995 | Air-dried (22°C) | 35 | 120 |
| Test Example 31 | Uniaxial extruder | 80 | (4)(5) (6) | A | - | 80 | 100 | 120 | 120 | 120 | Forced exhaust (0.8MPa) | No | 90 | 80 | 40 | 1206 | Air-dried (22°C) | 40 | 180 |
| Comparative Example 32 | Uniaxial extruder | 66 | (4)(5) (6) | A | - | 80 | 100 | 120 | 120 | 120 | Forced exhaust (0.8MPa) | No | 90 | 80 | 60 | 2215 | Air-dried (52°C) | 0 | 5 |

[[Table 4-1]

| Table 4 | Measurement values for Starch-containing solid composition | | | | | | | | | | | | | | | | |
|---|---|---|---|---|---|---|---|---|---|---|---|---|---|---|---|---|---|
| | Starch | | | | | | | | | | | | | | | | |
| | Starch content (dry mass basis) | Degree of gelatinization of starch | RVA peak temp. of gelatinization (b) | Decrease in RVA peak temp. of gelatinization at Step (ii) (d) | Number of starch grains in 6% suspension (x200) ( a ) | Decrease in starch grains at Step (ii) (c) | Value α (Mw log 5.0-6.5) | | Value β (Mw log 6.5-8.0) | | β/α | Value γ (Mw log 8.0-9.5) | | β/γ | Mass Starch degrading average Mw enzyme (log) activity (dry basis) | | Iodine stainability of low Mw fraction (Mw bg 5.0-6.5) |
| | mass % | mass % | °C | °C | /mm2 | % | % | Peak count | % | Peak count | | % | Peak count | | | U/g | |
| Comparative Example 1 | 44 | 5 | 135 | 0 | >300 | 0 | 78 | 1 | 21 | 0 | 0.27 | 0.8 | 0 | 26 | 5.9 | 44.0 | 0.15 |
| Comparative Example 2 | 44 | 40 | 128 | 5 | 226 | 15 | 69 | 1 | 30 | 0 | 0.43 | 0.5 | 0 | 60 | 6.0 | 39.5 | 0.15 |
| Test Example 3 | 44 | 89 | 119 | 16 | 123 | 56 | 59 | 1 | 40 | 1 | 0.68 | 0.4 | 0 | 111 | 6.2 | 28.6 | 0.15 |
| Test Example 4 | 44 | 65 | 85 | 45 | 0 | 100 | 37 | 1 | 63 | 1 | 1.70 | 0.1 | 0 | 630 | 7.1 | 9.5 | 0.15 |
| Comparative Example 5 | 44 | 46 | 132 | 3 | >300 | 0 | 69 | 1 | 30 | 1 | 0.43 | 0.9 | 0 | 33 | 6.2 | 33.0 | 0.10 |
| Test Example 6 | 44 | 54 | 80 | 55 | 0 | 100 | 42 | 1 | 58 | 1 | 1.38 | 0.1 | 0 | 580 | 6.9 | 0.0 | 0.52 |
| Test Example 7 | 44 | 54 | 70 | 65 | 0 | 100 | 57 | 1 | 42 | 1 0.74 | | 0.1 | 0 | 420 | 6.8 | 0.0 | 0.75 |
| Comparative Example 8 | 44 | 47 | 55 | 80 | 0 | 100 | 65 | 1 | 34 | 1 | 0.52 | 0.0 | 0 | | 6.6 | 0.0 | 0.88 |
| Test Example 9 | 44 | 99 | 89 | 46 | 0 | 100 | 35 | 1 | 65 | 1 | 1.86 | 0.0 | 0 | | 7.0 | 8.2 | 0.78 |
| Test Example 10 | 44 | 65 | 82 | 53 | 0 | 100 | 29 | 1 | 71 | 1 | 2.45 | 0.2 | 0 | 355 | 7.2 | 0.0 | 0.19 |
| Test Example 11 | 44 | 78 | 86 | 49 | 0 | 100 | 37 | 1 | 63 | 1 | 1.70 | 0.1 | 0 | 630 | 7.1 | 9.5 | 0.15 |

(continued)

| Table 4 | Measurement values for Starch-containing solid composition | | | | | | | | | | | | | | | | |
|---|---|---|---|---|---|---|---|---|---|---|---|---|---|---|---|---|---|
| | Starch | | | | | | | | | | | | | | | | |
| | Starch content (dry mass basis) | Degree of gelatinization of starch | RVA peak temp. of gelatinization (b) | Decrease in RVA peak temp. of gelatinization at Step (ii) (d) | Number of starch grains in 6% suspension (x200) ( a ) | Decrease in starch grains at Step (ii) (c) | Value $\alpha$ (Mw log 5.0-6.5) | | Value $\beta$ (Mw log 6.5-8.0) | | $\beta/\alpha$ | Value $\gamma$ (Mw log 8.0-9.5) | | $\beta/\gamma$ | Mass Starch degrading average Mw enzyme (log) activity (dry basis) | | Iodine stainability of low Mw fraction (Mw bg 5.0-6.5) |
| | mass % | mass % | °C | °C | /mm2 | % | % | Peak count | % | Peak count | | % | Peak count | | | U/g | |
| Test Example 12 | 44 | 65 | 89 | 46 | 0 | 100 | 33 | 1 | 67 | 1 | 2.03 | 0.1 | 0 | 670 | 7.1 | 22.5 | 0.05 |
| Test Example 13 | 44 | 59 | 88 | 47 | 0 | 100 | 31 | 1 | 69 | 1 | 2.23 | 0.1 | 0 | 690 | 7.0 | 22.0 | 0.01 |
| Test Example 14 | 44 | 53 | 89 | 46 | 0 | 100 | 26 | 1 | 74 | 1 | 2.85 | 0.1 | 0 | 740 | 7.1 | 5.6 | 0.00 |
| Test Example 15 | 50 | 78 | 92 | 43 | 0 | 100 | 40 | 1 | 59 | 1 | 1.48 | 0.1 | 0 | 590 | 6.9 | 12.3 | 0.16 |
| Test Example 16 | 50 | 70 | 101 | 34 | 65 | 81 | 43 | 1 | 57 | 1 | 1.33 | 0.1 | 0 | 570 | 6.9 | 15.8 | 0.16 |

[Table 4-2]

| Table 4 | Measurement values for Starch-containing solid composition | | | | | | | | | | | | | | | | |
|---|---|---|---|---|---|---|---|---|---|---|---|---|---|---|---|---|---|
| | Starch | | | | | | | | | | | | | | | | |
| | Starch content (dry mass basis) | Degree of gelatinization of starch | RVA peak temp. of gelatinization (b) | Decrease in RVA peak temp. of gelatinization at Step (ii) (d) | Number of starch grains in 6% suspension (x200) ( a ) | Decrease in starch grains at Step (ii) (c) | Value α (Mw log 5.0-6.5) | | Value β (Mw log 6.5-8.0) | | β/α | Value γ (Mw log 8.0-9.5) | | β/γ | Mass average Mw (log ) | Starch degrading enzyme activity (dry basis) | Iodine stainability of low Mw fraction (Mw log 5.0-6.5) |
| | mass % | mass % | °C | °C | /mm2 | % | % | Peak count | % | Peak count | | % | Peak count | | | U/g | |
| Test **Example** 17 | 50 | 65 | 105 | 30 | 105 | 70 | 45 | 1 | 55 | 1 | 1.22 | 0.1 | 0 | 550 | 6.8 | 12.3 | 0.16 |
| Test Example 18 | 50 | 52 | 117 | 18 | 262 | 15 | 45 | 1 | 55 | 1 | 1.22 | 0.1 | 0 | 550 | 6.7 | 12.3 | 0.16 |
| Test **Example** 19 | 64 | 58 | 88 | 7 | 0 | 100 | 31 | 1 | 69 | 1 | 2.23 | 0.0 | 0 | | 7.1 | 9.5 | 0.45 |
| Test Example 20 | 35 | 90 | 81 | 59 | 0 | 100 | 58 | 1 | 41 | 1 | 0.71 | 0.5 | 0 | 82 | 6.8 | 19.5 | 0.11 |
| Test Example 21 | 35 | 90 | 65 | 35 | 0 | 100 | 60 | 1 | 40 | 1 | 0.67 | 0.0 | 0 | | 6.7 | 11.5 | 0.78 |
| Comparative Example 22 | 75 | 78 | 69 | 6 | 0 | 100 | 26 | 1 | 41 | 2 | 1.58 | 32.0 | 1 | 1 | 8.1 | 3.0 | 1.10 |
| Test Example 23 | 68 | 71 | 75 | 30 | 0 | 100 | 28 | 1 | 48 | 2 | 1.71 | 24.0 | 1 | 2 | 7.5 | 5.1 | 0.85 |
| Test Example 24 | 60 | 68 | 84 | 31 | 0 | 100 | 31 | 1 | 60 | 2 | 1.94 | 8.0 | 1 | 8 | 7.1 | 4.1 | 0.51 |
| Test Example 25 | 55 | 81 | 88 | 33 | 0 | 100 | 30 | 1 | 65 | 2 | 2.17 | 4.0 | 1 | 16 | 6.9 | 2.1 | 0.25 |
| Test Example 26 | 31 | 55 | 82 | 39 | 0 | 100 | 32 | 1 | 68 | 1 | 2.13 | 0.1 | 0 | 680 | 6.9 | 0.0 | 0.02 |
| Test Example 27 | 20 | 68 | 112 | 9 | 89 | 75 | 33 | 1 | 67 | 1 | 2.03 | 0.0 | 0 | | 6.9 | 0.0 | 0.39 |

(continued)

| Table 4 | Measurement values for Starch-containing solid composition | | | | | | | | | | | | | | | | |
|---|---|---|---|---|---|---|---|---|---|---|---|---|---|---|---|---|---|
| | Starch | | | | | | | | | | | | | | | | |
| | Starch content (dry mass basis) | Degree of gelatinization of starch | RVA peak temp. of gelatinization (b) | Decrease in RVA peak temp. of gelatinization at Step (ii) (d) | Number of starch grains in 6% suspension (x200) ( a ) | Decrease in starch grains at Step (ii) (c) | Value $\alpha$ (Mw log 5.0-6.5) | | Value $\beta$ (Mw log 6.5-8.0) | | $\beta/\alpha$ | Value $\gamma$ (Mw log 8.0-9.5) | | $\beta/\gamma$ | Mass average Mw (log ) | Starch degrading enzyme activity (dry basis) | Iodine stainability of low Mw fraction (Mw log 5.0-6.5) |
| | mass % | mass % | °C | °C | /mm2 | % | % | Peak count | % | Peak count | | % | Peak count | | | U/g | |
| Test Example 28 | 40 | 89 | 110 | 10 | 59 | 85 | 29 | 1 | 69 | 1 | 2.38 | 1.6 | 0 | 43 | 7.1 | 15.0 | 0.10 |
| Test Example 29 | 35 | 56 | 86 | 9 | 0 | 100 | 30 | 1 | 69 | 1 | 2.30 | 1.0 | 0 | 69 | 6.9 | 0.0 | 0.09 |
| Test Example 30 | 40 | 62 | 118 | 2 | 289 | 3 | 40 | 1 | 57 | 1 | 1.43 | 2.0 | 0 | 29 | 7.2 | 19.6 | 0.07 |
| Test Example 31 | 30 | 59 | 85 | 50 | 0 | 100 | 37 | 1 | 63 | 1 | 1.70 | 0.1 | 0 | 630 | 7.1 | 11.5 | 0.13 |
| Comparative Example 32 | 64 | 98 | 50 | 44 | 0 | 0 | 100 | 1 | 0 | 0 | 0.00 | 0.0 | 0 | | 5.7 | 0.0 | 1.98 |

[Table 5-1]

| Table 5 | Shape | Starch-containing solid composition: Measurement values: Protein: Protein content (dry mass basis) | PDI Value | Insoluble dietary fiber: Insoluble dietary fiber content (dry mass basis) | Diameter d50 after starch- and protein-digestion and ultrasonication | Dry mass basis moisture content | Total oil and fat content | Sensory evaluation: Elasticity during water retention | Viscosity during water retention | Overall evaluation |
|---|---|---|---|---|---|---|---|---|---|---|
| | | mass % | mass % | mass % | µm | mass % | mass % | | | |
| Comparative Example 1 | Diameter 1mm Noodles | 24 | 72.0 | 20.0 | 13 | 5 | 5 | 1 | 1 | 1 |
| Comparative Example 2 | Diameter 1mm Noodles | 24 | 68.0 | 20.0 | 14 | 5 | 5 | 2 | 2 | 2 |
| Test Example 3 | Diameter 1mm Noodles | 24 | 45.0 | 20.0 | 5 | 5 | 5 | 5 | 5 | 5 |
| Test Example 4 | Diameter 1mm Noodles | 24 | 5,9 | 20.0 | 7 | 5 | 5 | 5 | 5 | 5 |
| Comparative Example 5 | Diameter 1mm Noodles | 24 | 59.0 | 20.0 | 16 | 5 | 5 | 2 | 1 | 1 |
| Test Example 6 | Diameter 1mm Noodles | 24 | 4.2 | 20.0 | 21 | 5 | 5 | 5 | 4 | 5 |
| Test Example 7 | Diameter 1mm Noodles | 24 | 3.0 | 20.0 | 14 | 5 | 5 | 4 | 4 | 4 |
| Comparative Example 8 | Diameter 1mm Noodles | 24 | 2.0 | 20.0 | 23 | 5 | 5 | 3 | 3 | 2 |
| Test Example 9 | Diameter 1mm Noodles | 24 | 0.1 | 20.0 | 10 | 5 | 5 | 4 | 4 | 4 |
| Test Example 10 | Diameter 1cm Pellets | 24 | 8.4 | 20.0 | 16 | 5 | 5 | 5 | 5 | 5 |
| Test Example 11 | Powder (d90=200µm) | 24 | 12.0 | 20.0 | 7 | 5 | 5 | 5 | 5 | 5 |

(continued)

| Table 5 | Starch-containing solid composition | | | | | | | | | | |
|---|---|---|---|---|---|---|---|---|---|---|---|
| | Shape | Measurement values | | | | | | Sensory evaluation | | | |
| | | Protein | | Insoluble dietary fiber | | Dry mass basis moisture content | Total oil and fat content | Elasticity during water retention | Viscosity during water retention | Overall evaluation | |
| | | Protein content (dry mass basis) | PDI Value | Insoluble dietary fiber content (dry mass basis) | Diameter d50 after starch- and protein-digestion and ultrasonication | | | | | | |
| | | mass % | mass % | mass % | µm | mass % | mass % | | | | |
| Test Example 12 | Diameter 1mm Noodles | 24 | 5.6 | 20.0 | 7 | 55 | 5 | 5 | 5 | 5 | |
| Test Example 13 | Diameter 1mm Noodles | 24 | 3.5 | 20.0 | 7 | 24 | 5 | 5 | 5 | 5 | |
| Test Example 14 | Diameter 1mm Noodles | 24 | 3.3 | 20.0 | 7 | 15 | 5 | 5 | 5 | 5 | |
| Test Example 15 | Diameter 1mm Noodles | 14 | 16.5 | 22.0 | 59 | 2 | 6 | 5 | 5 | 5 | |
| Test Example 16 | Diameter 1mm Noodles | 14 | 18.5 | 22.0 | 159 | 2 | 6 | 5 | 5 | 5 | |
| Test Example 17 | Diameter 1mm Noodles | 14 | 5.9 | 22.0 | 295 | 2 | 6 | 4 | 5 | 4 | |
| Test Example 18 | Diameter 1mm Noodles | 13 | 5.9 | 22.0 | 503 | 3 | 6 | 4 | 4 | 4 | Grainy texture |

[Table 5-2]

| Table 5 | Starch-containing solid composition | | | | | | | | | | |
|---|---|---|---|---|---|---|---|---|---|---|---|
| | Shape | Measurement values | | | | | | Sensory evaluation | | | |
| | | Protein | | Insoluble dietary fiber | | Dry mass basis moisture content | Total oil and fat content | Elasticity during water retention | Viscosity during water retention | Overall evaluation | |
| | | Protein content (dry mass basis) | PDI Value | Insoluble dietary fiber content (dry mass basis) | Diameter d50 after starch- and protein-digestion and ultrasonication | | | | | | |
| | | mass % | mass % | mass % | μm | mass % | mass % | | | | |
| Test Example 19 | Diameter 1mm Noodles | 15 | 0.1 | 10.0 | 103 | 4 | 6 | 5 | 5 | 5 | |
| Test Example 20 | Diameter 1mm Noodles | 13 | 12.5 | 35.0 | 68 | 5 | 6 | 4 | 4 | 4 | |
| Test Example 21 | Diameter 1mm Noodles | 13 | 1.5 | 35.0 | 68 | 5 | 6 | 4 | 4 | 4 | |
| Comparative Example 22 | Diameter 1mm Noodles | 8 | 4.0 | 5.0 | 12 | 5 | 4 | 4 | 3 | 3 | |
| Test Example 23 | Diameter 1mm Noodles | 12 | 5.1 | 10.0 | 43 | 5 | 3 | 4 | 3 | 3 | |
| Test Example 24 | Diameter 1mm Noodles | 18 | 6.8 | 12.0 | 40 | 5 | 3 | 4 | 4 | 3 | |
| Test Example 25 | Diameter 1mm Noodles | 20 | 6.3 | 13.0 | 40 | 5 | 3 | 4 | 4 | 4 | |
| Test Example 26 | Diameter 1mm Noodles | 20 | 25.0 | 16.0 | 5 | 11 | 8 | 5 | 5 | 5 | |

(continued)

| Table 5 | Starch-containing solid composition | | | | | | | | | | |
|---|---|---|---|---|---|---|---|---|---|---|---|
| | Shape | Measurement values | | | | | | Sensory evaluation | | | |
| | | Protein | | Insoluble dietary fiber | | Dry mass basis moisture content | Total oil and fat content | Elasticity during water retention | Viscosity during water retention | Overall evaluation | |
| | | Protein content (dry mass basis) | PDI Value | Insoluble dietary fiber content (dry mass basis) | Diameter d50 after starch- and protein-digestion and ultrasonication | | | | | | |
| | | mass % | mass % | mass % | µm | mass % | mass % | | | | |
| Test Example 27 | Diameter 1mm Noodles | 25 | 17.0 | 19.0 | 326 | 13 | 5 | 4 | 5 | 5 | |
| Test Example 28 | Diameter 1mm Noodles | 17 | 8.9 | 23.0 | 452 | 8 | 3 | 4 | 5 | 4 | Slightly grainy texture |
| Test Example 29 | Diameter 1mm Noodles | 22 | 1.3 | 23.0 | 121 | 8 | 2 | 5 | 5 | 5 | |
| Test Example 30 | Diameter 1mm Noodles | 29 | 29,0 | 15.0 | 43 | 8 | 2 | 4 | 5 | 4 | |
| Test Example 31 | Diameter 1mm Noodles | 39 | 1.5 | 15.0 | 36 | 3 | 2 | 5 | 5 | 5 | |
| Comparative Example 32 | Diameter 1mm Noodles | 15 | 0.0 | 10.0 | 111 | 4 | 6 | 1 | 1 | 1 | |

## INDUSTRIAL APPLICABILITY

The present invention is widely applicable in the field of food products and other products with solid compositions based on starch, and is of great use value.

## Claims

1. A starch-containing solid composition satisfying the requirements (1) to (5) below.

    (1) The composition has a starch content of 20 mass % or more in terms of dry mass basis, optionally when the purified starch obtained via the treatment of the [Procedure a] below is subjected to measurement under the [Condition A] below, the logarithm of the mass average molecular weight obtained is 6.0 or more, and optionally the composition is a non-swollen product.
    (2) The composition satisfies the requirement(s) (a) and/or (b) below.

        (a) When 6% suspension of a crushed product of the composition is observed, the number of starch grain structures observed is 300/$mm^2$ or less.
        (b) When 14 mass % aqueous slurry of a crushed product of the composition is subjected to measurement with a rapid visco-analyzer with elevating the temperature from 50°C to 140°C at a rate of 12.5°C/min, the peak temperature of gelatinization obtained is lower than 120°C.

    (3) The degree of gelatinization of starch in the composition is 50 mass % or more.
    (4) The [value $\alpha$] of the composition defined below is 60% or less, the [value $\beta$] of the composition defined below is 35% or more, and optionally the ratio of the [value $\beta$] to the [value $\alpha$] ($\beta/\alpha$) is 0.5 or more.
    (5) The $ABS_{5.0\text{-}6.5}$ value of the composition is 0.75 or less, wherein the $ABS_{5.0\text{-}6.5}$ value is obtained by: placing the composition into 40-fold volume of water and immediately treated in accordance with the [Procedure a]; separating and collecting under the [Condition A] to obtain purified starch; preparing a sample from a separated fraction with molecular weight logarithms of 5.0 or more but less than 6.5 by adjusting the pH of the fraction to 7.0; staining one mass part of the fraction with 9 mass parts of 0.25 mM iodine solution; measuring the resulted sample for an absorbance at 660nm; and calibrating the measured value by subtracting it from the absorbance at 660 nm of a blank 0.25 mM iodine solution.

        [Value $\alpha$] When purified starch is obtained by subjecting the composition to isothermal treatment at 90°C in 40-fold volume of water for 15 minutes and then to [Procedure a] below, and the purified starch obtained is then subjected to measurement under [Condition A] below to determine a molecular weight distribution, the ratio of the area under the curve in an interval with molecular weight logarithms of 5.0 or more but less than 6.5 to the area under the entire curve of the molecular weight distribution is determined to be [value $\alpha$].
        [Value $\beta$] The ratio of the area under the curve in an interval with molecular weight logarithms of 6.5 or more but less than 8.0 to the area under the entire curve of the molecular weight distribution is determined to be [value $\beta$].
        [Procedure a] 2.5% aqueous dispersion of the composition is crushed and treated with proteolytic enzyme, and an ethanol-insoluble and dimethyl sulfoxide-soluble component is obtained as purified starch.
        [Condition A] The purified starch is dissolved into 1M aqueous solution of sodium hydroxide at a concentration of 0.10 mass % and allowed to stand at 37°C for 30 minutes, then combined with an equal volume of water and an equal volume of eluting agent and subjected to filtration with a 5-$\mu$m filter, and 5mL of the filtrate is then subjected to gel filtration chromatography to determine a molecular weight distribution in an interval with molecular weight logarithms of 5.0 or more but less than 9.5, wherein
        the starch-containing solid composition is obtainable by a method comprising the steps of:

            (i) preparing a composition having a starch content of 10.0 mass % or more in terms of wet mass basis and a dry mass basis moisture content of more than 40 mass %; and
            (ii) kneading the composition prepared at step (i) at a temperature of between 100°C and 190°C under conditions with an SME value of 400 kJ/kg or more.

2. The composition according to claim 1, wherein the [value $\gamma$] of the composition defined below is 30% or less, and optionally the ratio of the [value $\beta$] to the [value $\gamma$] ($\beta/\gamma$) is 10.
    [Value $\gamma$] The ratio of the area under the curve in an interval with molecular weight logarithms of 8.0 or more but less than 9.5 to the area under the entire curve of the molecular weight distribution is determined to be [value γ].

**3.** The composition according to claim 1 or 2, wherein the composition has an amylolytic enzyme activity of 30.0 U/g or less in terms of dry mass basis.

**4.** The composition according to any one of claims 1 to 3, wherein when the composition is placed into 40-fold volume of water and immediately treated in accordance with the [Procedure a] above, and separated and collected under the [Condition A] above to obtain purified starch, and a sample is prepared from a separated fraction with molecular weight logarithms of 5.0 or more but less than 6.5 by adjusting the pH of the fraction to 7.0 and staining one mass part of the fraction with 9 mass parts of iodine solution (0.25mM), the absorbance of the stained sample at 660 nm is 0.80 or less.

**5.** The composition according to any one of claims 1 to 4, wherein the composition has a protein content of 3.0 mass % or more in terms of dry mass basis, and optionally the composition has a PDI (protein dispersibility index) value of less than 55 mass %.

**6.** The composition according to any one of claims 1 to 5, wherein when the composition is subjected to the starch and protein digestion treatment under [Procedure b] below followed by ultrasonication, and then to measurement for the particle diameter distribution, the $d_{50}$ and/or $d_{90}$ obtained from the particle diameter distribution is less than 450 μm.
[Procedure b] 6 mass % aqueous suspension of the composition is treated with 0.4 volume % of protease and 0.02 mass % of α-amylase at 20°C for 3 days.

**7.** The composition according to any one of claims 1 to 6, wherein

the composition has an insoluble dietary fiber content of 2.0 mass % or more in terms of dry mass basis,
optionally the composition has a total oil and fat content of less than 17 mass % in terms of dry mass basis, and
optionally the composition has a dry mass basis moisture content of 60 mass % or less.

**8.** The composition according to any one of claims 1 to 7, wherein

the composition comprises pulse,
optionally the pulse has a dry mass basis moisture content of less than 15 mass %,
optionally the pulse is matured pulse,
optionally the pulse is one or more species of pulse selected from Pisum, Phaseolus, Cajanus, Vigna, Vicia, Cicer, Glycine and Lens species,
optionally the pulse is in the form of powder with a particle diameter $d_{90}$ of less than 500μm after ultrasonication,
optionally the pulse content is 50 mass % or more in terms of dry mass basis,
optionally the ratio of the starch contained in pulse to the total starch content of the composition is 30 mass % or more, and
optionally the ratio of the protein contained in pulse to the total protein content of the composition is 10 mass % or more.

**9.** A crushed composition agglomerate prepared by agglomerating the crushed composition prepared by crushing the composition according to any one of claims 1 to 8.

**10.** A method for producing a starch-containing solid composition according to any one of claims 1 to 8, comprising the steps of:

(i) preparing a composition having a starch content of 10.0 mass % or more in terms of wet mass basis and a dry mass basis moisture content of more than 40 mass %, wherein optionally the composition has a PDI value of less than 90 mass %; and
(ii) kneading the composition prepared at step (i) at a temperature of between 100°C and 190°C under conditions with an SME value of 400 kJ/kg or more until the requirements (1) to (5) below are satisfied.
(iii) optionally cooling the kneaded composition from step (ii) to less than 100 °C.
(iv) optionally adjusting the dry mass basis moisture content of the composition to less than 25 mass %.

(1) The composition satisfies the requirement(s) (a) and/or (b) below.

(a) The number of starch grain structures of the composition is 300/$mm^2$ or less.

(b) When 14 mass % aqueous slurry of a crushed product of the composition is subjected to measurement with a rapid visco-analyzer with elevating the temperature from 50°C to 140°C at a rate of 12.5°C/min, the peak temperature of gelatinization is less than 120 °C.

(2) The degree of gelatinization of the composition is 50 mass % or more.
(3) The [value $\alpha$] of the composition is 60% or less.
(4) The [value $\beta$] of the composition is 35% or more.
(5) The $ABS_{5.0-6.5}$ value of the composition is 0.75 or less.

**11.** The method according to claim 10, wherein the time required after the temperature of the composition drops below 80°C until the dry mass basis moisture content of the composition decreases to less than 25 mass % on a dry weight basis after step (ii) is 10 minutes or more.

**12.** The method according to claim 10 or 11, wherein the time required for the dry mass basis moisture content of the composition to become less than 25 mass % is adjusted by applying water addition treatment to the composition at step (iii) or thereafter.

**13.** The method according to any one of claims 10 to 12, further comprising a step after step (ii) through which the degree of gelatinization decreases by 1 mass % or more.

**14.** The method according to any one of claims 10 to 13, further comprising, at least after step (ii), the step of:

(v) crushing the composition to prepare a crushed composition, and
(vi) optionally agglomerating the crushed composition to prepare a crushed composition agglomerate after step (v).

**15.** The method according to any one of claims 10 to 14, wherein

step (ii) is carried out using an extruder, optionally at step (i), the raw materials in the extruder are not exposed to temperatures of 90 °C or more when the dry mass basis moisture content is less than 25 mass %,
optionally more than 50 mass % of the total water content to be added at steps (i) and (ii) during production is mixed with other raw materials before the internal temperature of the extruder rises to 90°C or more, and
optionally the flight screw length of the extruder is 95% or less of the total screw length of the extruder.

**16.** The method according to claim 15, wherein preparing the composition at step (i) comprises, before feeding raw materials to the extruder, adding water to the raw materials, and optionally preparing the composition at step (i) comprises, after feeding raw materials to the extruder, adding water to the raw materials in the extruder.

**17.** The method according to claim 15 or 16, wherein

the composition after step (iii) is placed on a mesh conveyor having a loading surface which is partially or completely ventilated, and
optionally the method further comprises adding water to the composition before or after being placed on the mesh conveyor.

**18.** The method according to claim 17, further comprising lowering the composition temperature by blowing air from the top and/or from the bottom of the mesh conveyor against the composition, wherein optionally the degree of gelatinization decreases by 1 mass % during the air blowing.

**19.** The method according to any one of claims 10 to 18, wherein the requirement (c) or (d) is satisfied at step (ii).

(c) When 6% suspension of a crushed product of the composition is observed, the number of starch grain structures decreases by more than 5% during step (ii).
(d) When 14 mass % aqueous slurry of a crushed product of the composition is subjected to measurement with a rapid visco-analyzer with elevating the temperature from 50°C to 140°C at a rate of 12.5°C/min, the peak temperature of gelatinization decreases by 1 °C or higher during step (ii).

**20.** The method according to any one of claims 10 to 19, wherein when a the particle diameter distribution is determined by subjecting the composition from step (i) to starch and protein digestion treatment followed by ultrasonication, the $d_{50}$ and/or $d_{90}$ obtained from the particle diameter distribution is less than 450 $\mu$m.

**21.** The method according to any one of claims 10 to 20, wherein

the ratio of the content of starch in the form of heat-treated pulse to the total starch content of the composition at step (i) is 30 mass % or more, and
optionally the amylolytic enzyme activity (U/g) decreases by 20% or more through step (ii).

**22.** The method according to any one of claims 10 to 21, wherein when the composition from step (i) is placed into 40-fold volume of water and immediately treated in accordance with the [Procedure a] above, and separated and collected under the [Condition A] above to obtain purified starch, and a sample is prepared from a separated fraction with molecular weight logarithms of 5.0 or more but less than 6.5 by adjusting the pH of the fraction to 7.0 and staining one mass part of the fraction with 9 mass parts of iodine solution (0.25mM), the absorbance of the stained sample at 660 nm is 0.80 or less.

**23.** The method according to any one of claims 10 to 22, wherein when the composition from step (i) is placed into 40-fold volume of water and immediately treated in accordance with the [Procedure a] above, and separated and collected under the [Condition A] above to obtain purified starch, and a first sample and a second sample are prepared from a first separated fraction with molecular weight logarithms of 5.0 or more but less than 6.5 and a second separated fraction with molecular weight logarithms of 6.5 or more but less than 8.0, respectively, by adjusting the pH of each fraction to 7.0 and staining each fraction with 9 mass parts of iodine solution (0.25mM), the ratio of the absorbance (660nm) of the stained second sample to the absorbance (660nm) of the stained first sample is 0.003 or more.

## Patentansprüche

**1.** Stärkehaltige feste Zusammensetzung, welche die Anforderungen (1) bis (5) unten erfüllt, wobei

(1) die Zusammensetzung einen Stärkegehalt von 20 Masse-% oder mehr bezogen auf Trockenmassenbasis aufweist, wobei optional, wenn die gereinigte Stärke, die über die Behandlung des [Vorgangs a] unten erhalten wird, Messung unter der [Bedingung A] unten unterzogen wird, der Logarithmus des erhaltenen massenmittleren Molekulargewichts 6,0 oder mehr ist und optional die Zusammensetzung ein nicht gequollenes Produkt ist,
(2) die Zusammensetzung die Anforderung(en) (a) und/oder (b) unten erfüllt, wobei

(a) wenn 6 % Suspension eines zerkleinerten Produkts der Zusammensetzung beobachtet werden, die Anzahl an beobachteten Stärkekornstrukturen 300/mm$^2$ oder weniger ist,
(b) wenn 14 Masse-% wässrige Schlacke eines zerkleinerten Produkts der Zusammensetzung Messung mit einem schnellen Viskositätsanalysator unterzogen werden, wobei die Temperatur mit einer Rate von 12,5 °C/min von 50 °C auf 140 °C erhöht wird, die erhaltene Spitzentemperatur von Gelatinierung niedriger als 120 °C ist,

(3) der Grad an Gelatinierung von Stärke in der Zusammensetzung 50 Masse-% oder mehr ist,
(4) der [Wert $\alpha$] der unten definierten Zusammensetzung 60 % oder weniger ist, der [Wert $\beta$] der unten definierten Zusammensetzung 35 % oder mehr ist und optional das Verhältnis des [Wertes $\beta$] zu dem [Wert $\alpha$] ($\beta/\alpha$) 0,5 oder mehr ist,
(5) der $ABS_{5,0\text{-}6,5}$-Wert der Zusammensetzung 0,75 oder weniger ist, wobei der $ABS_{5,0\text{-}6,5}$-Wert erhalten wird durch: Platzieren der Zusammensetzung in 40-faches Volumen Wasser und umgehend behandelt gemäß dem [Vorgang a]; Abtrennen und Sammeln unter der [Bedingung A], um gereinigte Stärke zu erhalten; Zubereiten einer Probe aus einer abgetrennten Fraktion mit Molekulargewichtslogarithmen von 5,0 oder mehr, aber weniger als 6,5 durch Einstellen des pH der Fraktion auf 7,0; Färben eines Massenteils der Fraktion mit 9 Massenteilen von 0,25 mM Jodlösung; Messen der resultierenden Probe auf ein Absorptionsvermögen bei 660 nm; und Kalibrieren des gemessenen Wertes durch Subtrahieren desselben von dem Absorptionsvermögen bei 660 nm einer leeren 0,25 mM Jodlösung, wobei

[Wert $\alpha$] wenn gereinigte Stärke erhalten wird, indem die Zusammensetzung isothermer Behandlung bei 90 °C in 40-fachem Volumen Wasser für 15 Minuten und dann [Vorgang a] unten unterzogen wird und die erhaltene gereinigte Stärke dann Messung unter [Bedingung A] unten unterzogen wird, um eine Molekulargewichtsverteilung zu bestimmen, das Verhältnis der Fläche unter der Kurve in einem Intervall mit Molekulargewichtslogarithmen von 5,0 oder mehr, aber weniger als 6,5 zu der Fläche unter der gesamten Kurve der Molekulargewichtsverteilung als [Wert α] bestimmt wird,
[Wert β] das Verhältnis der Fläche unter der Kurve in einem Intervall mit Molekulargewichtslogarithmen von 6,5 oder mehr, aber weniger als 8,0 zu der Fläche unter der gesamten Kurve der Molekulargewichtsverteilung als [Wert β] bestimmt wird,
[Vorgang a] 2,5 % wässrige Dispersion der Zusammensetzung zerkleinert und mit proteolytischem Enzym behandelt wird, und eine in Ethanol unlösliche und in Dimethylsulfoxid lösliche Komponente als gereinigte Stärke erhalten wird,
[Bedingung A] die gereinigte Stärke in 1 M wässriger Lösung von Natriumhydroxid mit einer Konzentration von 0,10 Masse-% gelöst wird und bei 37 °C 30 Minuten lang stehen darf, dann mit einem gleichen Volumen Wasser und einem gleichen Volumen Elutionsmittel kombiniert und Filtration mit einem 5-μm-Filter unterzogen wird und 5 ml des Filtrats dann Gelfiltrationschromatographie unterzogen werden, um eine Molekulargewichtsverteilung in einem Intervall mit Molekulargewichtslogarithmen von 5,0 oder mehr, aber weniger als 9,5 zu bestimmen, wobei
die stärkehaltige feste Zusammensetzung durch ein Verfahren erhaltbar ist, das die folgenden Schritte umfasst:

(i) Zubereiten einer Zusammensetzung mit einem Stärkegehalt von 10,0 Masse-% oder mehr bezogen auf Feuchtmassenbasis und einem Trockenmassenbasisfeuchtigkeitsgehalt von mehr als 40 Masse-%; und
(ii) Kneten der Zusammensetzung, die in Schritt (i) zubereitet wird, bei einer Temperatur zwischen 100 °C und 190 °C unter Bedingungen mit einem SME-Wert von 400 kJ/kg oder mehr.

**2.** Zusammensetzung nach Anspruch 1, wobei der [Wert γ] der unten definierten Zusammensetzung 30 % oder weniger ist und optional das Verhältnis des [Wertes β] zu dem [Wert γ] (β/γ) 10 ist, wobei
[Wert γ] das Verhältnis der Fläche unter der Kurve in einem Intervall mit Molekulargewichtslogarithmen von 8,0 oder mehr, aber weniger als 9,5 zu der Fläche unter der gesamten Kurve der Molekulargewichtsverteilung als [Wert γ] bestimmt wird.

**3.** Zusammensetzung nach Anspruch 1 oder 2, wobei die Zusammensetzung eine amylolytische Enzymaktivität von 30,0 U/g oder weniger bezogen auf Trockenmassenbasis aufweist.

**4.** Zusammensetzung nach einem der Ansprüche 1 bis 3, wobei, wenn die Zusammensetzung in 40-faches Volumen Wasser platziert und umgehend gemäß dem [Vorgang a] oben behandelt und unter der [Bedingung A] oben abgetrennt und gesammelt wird, um gereinigte Stärke zu erhalten, und eine Probe aus einer abgetrennten Fraktion mit Molekulargewichtslogarithmen von 5,0 oder mehr, aber weniger als 6,5 durch Einstellen des pH der Fraktion auf 7,0 und Färben eines Massenteils der Fraktion mit 9 Massenteilen Jodlösung (0,25 mM) zubereitet wird, das Absorptionsvermögen der gefärbten Probe bei 660 nm 0,80 oder weniger ist.

**5.** Zusammensetzung nach einem der Ansprüche 1 bis 4, wobei die Zusammensetzung einen Proteingehalt von 3,0 Masse-% oder mehr bezogen auf Trockenmassenbasis aufweist und optional die Zusammensetzung einen PDI(Proteindispergierbarkeitsindex-)Wert von weniger als 55 Masse-% aufweist.

**6.** Zusammensetzung nach einem der Ansprüche 1 bis 5, wobei, wenn die Zusammensetzung der Stärke- und Proteinverdauungsbehandlung unter [Vorgang b] unten gefolgt von Ultraschall, und dann Messung der Partikeldurchmesserverteilung unterzogen wird, der $d_{50}$ und/oder $d_{90}$, der aus der Partikeldurchmesserverteilung erhalten wird, weniger als 450 μm ist, wobei
[Vorgang b] 6 Masse-% wässrige Suspension der Zusammensetzung bei 20 °C 3 Tage lang mit 0,4 Volumen-% Protease und 0,02 Masse-% α-Amylase behandelt wird.

**7.** Zusammensetzung nach einem der Ansprüche 1 bis 6, wobei

die Zusammensetzung einen Gehalt an unlöslichen Ballaststoffen von 2,0 Masse-% oder mehr bezogen auf Trockenmassenbasis aufweist,
optional die Zusammensetzung einen Gesamtöl- und -fettgehalt von weniger als 17 Masse- % bezogen auf Trockenmassenbasis aufweist und
optional die Zusammensetzung einen Trockenmassenbasisfeuchtigkeitsgehalt von 60 Masse-% oder weniger aufweist.

**8.** Zusammensetzung nach einem der Ansprüche 1 bis 7, wobei

die Zusammensetzung Hülsenfrucht umfasst,
optional die Hülsenfrucht einen Trockenmassenbasisfeuchtigkeitsgehalt von weniger als 15 Masse-% aufweist,
optional die Hülsenfrucht gereifte Hülsenfrucht ist,
optional die Hülsenfrucht eine oder mehrere Spezies an Hülsenfrucht ausgewählt aus den Spezies Pisum, Phaseolus, Cajanus, Vigna, Vicia, Cicer, Glycine und Lens ist und
optional die Hülsenfrucht in der Form von Pulver mit einem Partikeldurchmesser $d_{90}$ von weniger als 500 $\mu$m nach Ultraschall ist,
optional der Hülsenfruchtgehalt 50 Masse-% oder mehr bezogen auf Trockenmassenbasis ist,
optional das Verhältnis der Stärke, die in der Hülsenfrucht enthalten ist, zu dem Gesamtstärkegehalt der Zusammensetzung 30 Masse-% oder mehr ist und
optional das Verhältnis des Proteins, das in der Hülsenfrucht enthalten ist, zu dem Gesamtproteingehalt der Zusammensetzung 10 Masse-% oder mehr ist.

**9.** Agglomerat einer zerkleinerten Zusammensetzung, zubereitet durch Agglomerieren der zerkleinerten Zusammensetzung zubereitet durch Zerkleinern der Zusammensetzung nach einem der Ansprüche 1 bis 8.

**10.** Verfahren zur Herstellung einer stärkehaltigen festen Zusammensetzung nach einem der Ansprüche 1 bis 8, umfassend die folgenden Schritte:

(i) Zubereiten einer Zusammensetzung mit einem Stärkegehalt von 10,0 Masse-% oder mehr bezogen auf Feuchtmassenbasis und einem Trockenmassenbasisfeuchtigkeitsgehalt von mehr als 40 Masse-%, wobei optional die Zusammensetzung einen PDI-Wert von weniger als 90 Masse-% aufweist; und
(ii) Kneten der Zusammensetzung, die in Schritt (i) zubereitet wird, bei einer Temperatur zwischen 100 °C und 190 °C unter Bedingungen mit einem SME-Wert von 400 kJ/kg oder mehr, bis die Anforderungen (1) bis (5) unten erfüllt sind,
(iii) optional Kühlen der gekneteten Zusammensetzung aus Schritt (ii) auf weniger als 100 °C,
(iv) optional Einstellen des Trockenmassenbasisfeuchtigkeitsgehalts der Zusammensetzung auf weniger als 25 Masse-%, wobei

(1) die Zusammensetzung die Anforderung(en) (a) und/oder (b) unten erfüllt, wobei

(a) die Anzahl an Stärkekornstrukturen der Zusammensetzung 300/$mm^2$ oder weniger ist,
(b) wenn 14 Masse-% wässrige Schlacke eines zerkleinerten Produkts der Zusammensetzung Messung mit einem schnellen Viskositätsanalysator unterzogen werden, wobei die Temperatur mit einer Rate von 12,5 °C/min von 50 °C auf 140 °C erhöht wird, die Spitzentemperatur von Gelatinierung niedriger als 120 °C ist,

(2) der Grad an Gelatinierung der Zusammensetzung 50 Masse-% oder mehr ist,
(3) der [Wert $\alpha$] der Zusammensetzung 60 % oder weniger ist,
(4) der [Wert $\beta$] der Zusammensetzung 35 % oder mehr ist,
(5) der $ABS_{5,0\text{-}6,5}$-Wert der Zusammensetzung 0,75 oder weniger ist.

**11.** Verfahren nach Anspruch 10, wobei die Zeit, die erforderlich ist, nachdem die Temperatur der Zusammensetzung unter 80 °C fällt, bis der Trockenmassenbasisfeuchtigkeitsgehalt der Zusammensetzung auf weniger als 25 Masse-% auf einer Trockengewichtsbasis nach Schritt (ii) abnimmt, 10 Minuten oder mehr ist.

**12.** Verfahren nach Anspruch 10 oder 11, wobei die Zeit, die erforderlich ist, damit der Trockenmassenbasisfeuchtigkeitsgehalt der Zusammensetzung weniger als 25 Masse-% wird, durch Anwenden einer Wasserzusatzbehandlung auf die Zusammensetzung bei Schritt (iii) oder danach eingestellt wird.

**13.** Verfahren nach einem der Ansprüche 10 bis 12, ferner umfassend einen Schritt nach Schritt (ii), durch den der Grad an Gelatinierung um 1 Masse-% oder mehr abnimmt.

**14.** Verfahren nach einem der Ansprüche 10 bis 13, ferner umfassend, zumindest nach Schritt (ii) den folgenden Schritt:

(v) Zerkleinern der Zusammensetzung, um eine zerkleinerte Zusammensetzung zuzubereiten, und
(vi) optional Agglomerieren der zerkleinerten Zusammensetzung, um ein Agglomerat der zerkleinerten Zusammensetzung nach Schritt (v) zuzubereiten.

**15.** Verfahren nach einem der Ansprüche 10 bis 14, wobei

Schritt (ii) unter Verwendung eines Extruders durchgeführt wird, wobei optional bei Schritt (i) die Rohmaterialien in dem Extruder keinen Temperaturen von 90 °C oder mehr ausgesetzt werden, wenn der Trockenmassenbasisfeuchtigkeitsgehalt weniger als 25 Masse-% ist,
optional mehr als 50 Masse-% des Gesamtwassergehalts, der in Schritt (i) und (ii) während Herstellung zuzusetzen ist, mit anderen Rohmaterialien vermischt werden, bevor die Innentemperatur des Extruders auf 90 °C oder mehr ansteigt, und
optional die Schneckenganglänge des Extruders 95 % oder weniger der Gesamtschneckenlänge des Extruders ist.

**16.** Verfahren nach Anspruch 15, wobei das Zubereiten der Zusammensetzung bei Schritt (i) vor dem Zuführen von Rohmaterialien zu dem Extruder Zusetzen von Wasser zu den Rohmaterialien umfasst und optional das Zubereiten der Zusammensetzung bei Schritt (i) nach dem Zuführen von Rohmaterialien zu dem Extruder Zusetzen von Wasser zu den Rohmaterialien in dem Extruder umfasst.

**17.** Verfahren nach Anspruch 15 oder 16, wobei

die Zusammensetzung nach Schritt (iii) auf einem Maschenförderer mit einer Ladefläche platziert wird, die teilweise oder vollständig belüftet ist, und
optional das Verfahren ferner Hinzufügen von Wasser zu der Zusammensetzung umfasst, bevor oder nachdem sie auf dem Maschenförderer platziert wird.

**18.** Verfahren nach Anspruch 17, ferner umfassend Verringern der Zusammensetzungstemperatur durch Blasen von Luft von der Oberseite und/oder von der Unterseite des Maschenförderers gegen die Zusammensetzung, wobei optional der Grad an Gelatinierung um 1 Masse-% während des Luftblasens abnimmt.

**19.** Verfahren nach einem der Ansprüche 10 bis 18, wobei die Anforderung (c) oder (d) in Schritt (ii) erfüllt ist, wobei

(c) wenn 6 % Suspension eines zerkleinerten Produkts der Zusammensetzung beobachtet werden, die Anzahl an Stärkekornstrukturen um mehr als 5 % während Schritt (ii) abnimmt,
(d) wenn 14 Masse-% wässrige Schlacke eines zerkleinerten Produkts der Zusammensetzung Messung mit einem schnellen Viskositätsanalysator unterzogen werden, wobei die Temperatur mit einer Rate von 12,5 °C/min von 50 °C auf 140 °C erhöht wird, die Spitzentemperatur von Gelatinierung um 1 °C oder höher während Schritt (ii) abnimmt.

**20.** Verfahren nach einem der Ansprüche 10 bis 19, wobei, wenn eine die Partikeldurchmesserverteilung bestimmt wird, indem die Zusammensetzung aus Schritt (i) Stärke- und Proteinverdauungsbehandlung gefolgt von Ultraschall unterzogen wird, der $d_{50}$ und/oder $d_{90}$, der aus der Partikeldurchmesserverteilung erhalten wird, weniger als 450 μm ist.

**21.** Verfahren nach einem der Ansprüche 10 bis 20, wobei

das Verhältnis des Gehalts an Stärke in der Form von wärmebehandelter Hülsenfrucht zu dem Gesamtstärkegehalt der Zusammensetzung in Schritt (i) 30 Masse-% oder mehr ist und
optional die amylolytische Enzymaktivität (U/g) um 20 % oder mehr durch Schritt (ii) abnimmt.

**22.** Verfahren nach einem der Ansprüche 10 bis 21, wobei, wenn die Zusammensetzung aus Schritt (i) in 40-faches Volumen Wasser platziert und umgehend gemäß dem [Vorgang a] oben behandelt und unter der [Bedingung A] oben abgetrennt und gesammelt wird, um gereinigte Stärke zu erhalten, und eine Probe aus einer abgetrennten Fraktion mit Molekulargewichtslogarithmen von 5,0 oder mehr, aber weniger als 6,5 durch Einstellen des pH der Fraktion auf 7,0 und Färben eines Massenteils der Fraktion mit 9 Massenteilen Jodlösung (0,25 mM) zubereitet wird, das Absorptionsvermögen der gefärbten Probe bei 660 nm 0,80 oder weniger ist.

**23.** Verfahren nach einem der Ansprüche 10 bis 22, wobei, wenn die Zusammensetzung aus Schritt (i) in 40-faches Volumen Wasser platziert und umgehend gemäß dem [Vorgang a] oben behandelt und unter der [Bedingung A] oben abgetrennt und gesammelt wird, um gereinigte Stärke zu erhalten, und jeweils eine erste Probe und eine zweite Probe aus einer ersten abgetrennten Fraktion mit Molekulargewichtslogarithmen von 5,0 oder mehr, aber weniger als 6,5 bzw. einer zweiten abgetrennten Fraktion mit Molekulargewichtslogarithmen von 6,5 oder mehr, aber weniger als 8,0 durch Einstellen des pH jeder Fraktion auf 7,0 und Färben jeder Fraktion mit 9 Massenteilen Jodlösung (0,25 mM) zubereitet werden, das Verhältnis des Absorptionsvermögens (660 nm) der gefärbten zweiten Probe zu dem Absorptionsvermögen (660 nm) der gefärbten ersten Probe 0,003 oder mehr ist.

## Revendications

**1.** Composition solide contenant de l'amidon satisfaisant aux exigences (1) à (5) ci-dessous ;

(1) la composition comporte une teneur en amidon de 20 % en masse ou plus en termes de base de masse sèche, éventuellement lorsque l'amidon purifié obtenu par le traitement de la [Procédure a] ci-dessous est soumis à une mesure selon la [Condition A] ci-dessous, le logarithme du poids moléculaire moyen en masse obtenu est de 6,0 ou plus, et éventuellement la composition est un produit non gonflé ;
(2) la composition satisfait à la ou aux exigence(s) (a) et/ou (b) ci-dessous ;

(a) lorsqu'une suspension à 6 % d'un produit broyé de la composition est observée, le nombre de structures de grains d'amidon observées est de 300/$mm^2$ ou moins ;
(b) lorsqu'une boue aqueuse à 14 % en masse d'un produit broyé de la composition est soumise à une mesure par un visco-analyseur rapide avec élévation de la température de 50 °C à 140 °C à un taux de 12,5 °C/min, la température de pointe de gélatinisation obtenue est inférieure à 120 °C ;

(3) le degré de gélatinisation de l'amidon dans la composition est de 50 % en masse ou plus ;
(4) la [valeur $\alpha$] de la composition définie ci-dessous est de 60 % ou moins, la [valeur $\beta$] de la composition définie ci-dessous est de 35 % ou plus, et éventuellement le rapport entre la [valeur $\beta$] et la [valeur $\alpha$] ($\beta/\alpha$) est de 0,5 ou plus ;
(5) la valeur $ABS_{5,0-6,5}$ de la composition est de 0,75 ou moins, ladite valeur $ABS_{5,0-6,5}$ étant obtenue par : le placement de la composition dans un volume d'eau de 40 fois et le traitement immédiat conformément à la [Procédure a] ; la séparation et la collecte selon la [Condition A] pour obtenir de l'amidon purifié ; la préparation d'un échantillon à partir d'une fraction séparée avec des logarithmes de poids moléculaire de 5,0 ou plus mais moins de 6,5 en ajustant le pH de la fraction à 7,0 ; la coloration d'une partie en masse de la fraction avec 9 parties en masse de solution d'iode 0,25 mM ; la mesure de l'échantillon résultant pour une absorbance à 660 nm ; et l'étalonnage de la valeur mesurée en la soustrayant de l'absorbance à 660 nm d'une solution témoin d'iode 0,25 mM ;

[Valeur $\alpha$] lorsque l'amidon purifié est obtenu en soumettant la composition à un traitement isotherme à 90 °C dans un volume d'eau de 40 fois pendant 15 minutes, puis à la [Procédure a] ci-dessous, et que l'amidon purifié obtenu est ensuite soumis à une mesure selon la [Condition A] ci-dessous pour déterminer une distribution de poids moléculaire, le rapport entre l'aire sous la courbe dans un intervalle avec des logarithmes de poids moléculaire de 5,0 ou plus mais moins de 6,5 et l'aire sous la courbe entière de la distribution de poids moléculaire est déterminé comme étant [valeur $\alpha$] ;
[Valeur $\beta$] le rapport entre l'aire sous la courbe dans un intervalle avec des logarithmes de poids moléculaire de 6,5 ou plus mais moins de 8,0 et l'aire sous la courbe entière de la distribution de poids moléculaire est déterminé comme étant [valeur $\beta$] ;
[Procédure a] une dispersion aqueuse à 2,5 % de la composition est broyée et traitée avec une enzyme protéolytique, et un composant insoluble dans l'éthanol et soluble dans le diméthylsulfoxyde est obtenu sous forme d'amidon purifié ;
[Condition A] l'amidon purifié est dissous dans une solution aqueuse d'hydroxyde de sodium 1M à une concentration de 0,10 % en masse et laissé reposer à 37 °C pendant 30 minutes, puis combiné avec un volume égal d'eau et un volume égal d'agent d'élution et soumis à une filtration avec un filtre de 5 $\mu$m, et 5 ml du filtrat sont ensuite soumis à une chromatographie de filtration sur gel pour déterminer une distribution de poids moléculaire dans un intervalle avec des logarithmes de poids moléculaire de 5,0 ou plus mais moins de 9,5, dans laquelle
la composition solide contenant de l'amidon peut être obtenue par un procédé comprenant les étapes de :

(i) préparation d'une composition comportant une teneur en amidon de 10,0 % en masse ou plus en termes de base de masse humide et une teneur en humidité de base de masse sèche de plus de 40 % en masse ; et
(ii) pétrissage de la composition préparée à l'étape (i) à une température comprise entre 100 °C et 190 °C dans des conditions avec une valeur SME de 400 kJ/kg ou plus.

**2.** Composition selon la revendication 1, dans laquelle la [valeur $\gamma$] de la composition définie ci-dessous est de 30 % ou moins, et éventuellement le rapport entre la [valeur $\beta$] et la [valeur $\gamma$] ($\beta/\gamma$) est de 10 ;
[Valeur $\gamma$] le rapport entre l'aire sous la courbe dans un intervalle avec des logarithmes de poids moléculaire de 8,0 ou plus mais moins de 9,5 et l'aire sous la courbe entière de la distribution de poids moléculaire est déterminé comme étant [valeur $\gamma$].

**3.** Composition selon l'une des revendications 1 ou 2, dans laquelle la composition comporte une activité d'enzyme amylolytique de 30,0 U/g ou moins en termes de base de masse sèche.

**4.** Composition selon l'une quelconque des revendications 1 à 3, dans laquelle lorsque la composition est placée dans un volume d'eau de 40 fois et immédiatement traitée conformément à la [Procédure a] ci-dessus, et séparée et collectée selon la [Condition A] ci-dessus pour obtenir de l'amidon purifié, et qu'un échantillon est préparé à partir d'une fraction séparée avec des logarithmes de poids moléculaire de 5,0 ou plus mais moins de 6,5 en ajustant le pH de la fraction à 7,0 et en colorant une partie en masse de la fraction avec 9 parties en masse de solution d'iode (0,25 mM), l'absorbance de l'échantillon coloré à 660 nm est de 0,80 ou moins.

**5.** Composition selon l'une quelconque des revendications 1 à 4, dans laquelle la composition comporte une teneur en protéines de 3,0 % en masse ou plus en termes de base de masse sèche, et éventuellement la composition comporte une valeur PDI (indice de dispersibilité des protéines) inférieure à 55 % en masse.

**6.** Composition selon l'une quelconque des revendications 1 à 5, dans laquelle lorsque la composition est soumise au traitement de digestion de l'amidon et des protéines selon la [Procédure b] ci-dessous suivi d'ultrasons, puis à une mesure pour la distribution de diamètre de particules, le $d_{50}$ et/ou $d_{90}$ obtenu à partir de la distribution de diamètre de particules est inférieur à 450 $\mu$m ;
[Procédure b] une suspension aqueuse à 6 % en masse de la composition est traitée avec 0,4 % en volume de protéase et 0,02 % en masse d'$\alpha$-amylase à 20 °C pendant 3 jours.

**7.** Composition selon l'une quelconque des revendications 1 à 6, dans laquelle

la composition comporte une teneur en fibres alimentaires insolubles de 2,0 % en masse ou plus en termes de base de masse sèche,
éventuellement, la composition comporte une teneur totale en huile et en matières grasses inférieure à 17 % en masse en termes de base de masse sèche, et
éventuellement, la composition comporte une teneur en humidité de base de masse sèche de 60 % en masse ou moins.

**8.** Composition selon l'une quelconque des revendications 1 à 7, dans laquelle

la composition comprend des légumineuses,
éventuellement, les légumineuses comportent une teneur en humidité de base de masse sèche inférieure à 15 % en masse,
éventuellement, les légumineuses sont des légumineuses mûres,
éventuellement, les légumineuses sont une ou plusieurs espèces de légumineuses choisies parmi les espèces Pisum, Phaseolus, Cajanus, Vigna, Vicia, Cicer, Glycine et Lens,
éventuellement les légumineuses se présentent sous forme de poudre avec un diamètre de particules $d_{90}$ inférieur à 500 $\mu$m après ultrasons,
éventuellement, la teneur en légumineuses est de 50 % en masse ou plus en termes de base de masse sèche,
éventuellement, le rapport entre l'amidon contenu dans les légumineuses et la teneur totale en amidon de la composition est de 30 % en masse ou plus, et
éventuellement, le rapport entre la protéine contenue dans les légumineuses et la teneur totale en protéines de la composition est de 10 % en masse ou plus.

**9.** Agglomérat de composition broyée préparé par agglomération de la composition broyée préparée par broyage de la composition selon l'une quelconque des revendications 1 à 8.

**10.** Procédé de production d'une composition solide contenant de l'amidon selon l'une quelconque des revendications 1 à 8, comprenant les étapes de :

(i) préparation d'une composition comportant une teneur en amidon de 10,0 % en masse ou plus en termes de base de masse humide et une teneur en humidité de base de masse sèche de plus de 40 % en masse, éventuellement ladite composition comportant une valeur PDI de moins de 90 % en masse ; et
(ii) pétrissage de la composition préparée à l'étape (i) à une température comprise entre 100 °C et 190 °C dans des conditions avec une valeur SME de 400 kJ/kg ou plus jusqu'à ce que les exigences (1) à (5) ci-dessous soient satisfaites ;
(iii) éventuellement, refroidissement de la composition pétrie de l'étape (ii) à moins de 100 °C ;
(iv) éventuellement, ajustement de la teneur en humidité de base de masse sèche de la composition à moins de 25 % en masse ;

(1) la composition satisfait à la ou aux exigence(s) (a) et/ou (b) ci-dessous ;

(a) le nombre de structures de grains d'amidon de la composition est de 300/$mm^2$ ou moins ;
(b) lorsqu'une boue aqueuse à 14 % en masse d'un produit broyé de la composition est soumise à une mesure par un visco-analyseur rapide avec élévation de la température de 50 °C à 140 °C à un taux de 12,5 °C/min, la température de pointe de gélatinisation est inférieure à 120 °C ;

(2) le degré de gélatinisation de la composition est de 50 % en masse ou plus ;
(3) la [valeur $\alpha$] de la composition est de 60 % ou moins ;
(4) la [valeur $\beta$] de la composition est de 35 % ou plus ;
(5) la valeur $ABS_{5,0-6,5}$ de la composition est de 0,75 ou moins.

**11.** Procédé selon la revendication 10, dans lequel le temps nécessaire après que la température de la composition tombe en dessous de 80 °C jusqu'à ce que la teneur en humidité de base de masse sèche de la composition diminue à moins de 25 % en masse sur une base de masse sèche après l'étape (ii) est de 10 minutes ou plus.

**12.** Procédé selon l'une des revendications 10 ou 11, dans lequel le temps nécessaire pour que la teneur en humidité de base de masse sèche de la composition devienne inférieure à 25 % en masse est ajusté en appliquant un traitement d'ajout d'eau à la composition à l'étape (iii) ou par la suite.

**13.** Procédé selon l'une quelconque des revendications 10 à 12, comprenant en outre une étape après l'étape (ii) à travers laquelle le degré de gélatinisation diminue de 1 % en masse ou plus.

**14.** Procédé selon l'une quelconque des revendications 10 à 13, comprenant en outre, au moins après l'étape (ii), l'étape de :

(v) broyage de la composition pour préparer une composition broyée, et
(vi) éventuellement, agglomération de la composition broyée pour préparer un agglomérat de composition broyée après l'étape (v).

**15.** Procédé selon l'une quelconque des revendications 10 à 14, dans lequel

l'étape (ii) est réalisée à l'aide d'une extrudeuse, éventuellement à l'étape (i), les matières premières dans l'extrudeuse ne sont pas exposées à des températures de 90 °C ou plus lorsque la teneur en humidité de base de masse sèche est inférieure à 25 % en masse,
éventuellement plus de 50 % en masse de la teneur totale en eau à ajouter aux étapes (i) et (ii) pendant la production est mélangée à d'autres matières premières avant que la température interne de l'extrudeuse ne monte à 90 °C ou plus, et
éventuellement, la longueur de la vis sans fin de l'extrudeuse est de 95 % ou moins de la longueur totale de la vis de l'extrudeuse.

**16.** Procédé selon la revendication 15, dans lequel la préparation de la composition à l'étape (i) comprend, avant l'alimentation en matières premières de l'extrudeuse, l'ajout d'eau aux matières premières, et éventuellement la préparation de la composition à l'étape (i) comprend, après l'alimentation en matières premières de l'extrudeuse, l'ajout d'eau aux matières premières dans l'extrudeuse.

**17.** Procédé selon l'une des revendications 15 ou 16, dans lequel

la composition après l'étape (iii) est placée sur un convoyeur à mailles comportant une surface de chargement partiellement ou complètement ventilée, et
éventuellement, le procédé comprend en outre l'ajout d'eau à la composition avant ou après son placement sur le convoyeur à mailles.

**18.** Procédé selon la revendication 17, comprenant en outre l'abaissement de la température de composition par soufflage d'air par le haut et/ou par le bas du convoyeur à mailles contre la composition, éventuellement dans lequel le degré de gélatinisation diminue de 1 % en masse pendant le soufflage d'air.

**19.** Procédé selon l'une quelconque des revendications 10 à 18, dans lequel l'exigence (c) ou (d) est satisfaite à l'étape (ii) ;

(c) Lorsqu'une suspension à 6 % d'un produit broyé de la composition est observée, le nombre de structures de grains d'amidon diminue de plus de 5 % au cours de l'étape (ii) ;
(d) Lorsqu'une boue aqueuse à 14 % en masse d'un produit broyé de la composition est soumise à une mesure par un visco-analyseur rapide avec élévation de la température de 50 °C à 140 °C à un taux de 12,5 °C/min, la température de pointe de gélatinisation diminue de 1 °C ou plus au cours de l'étape (ii).

**20.** Procédé selon l'une quelconque des revendications 10 à 19, dans lequel lorsque une la distribution de diamètre de particules est déterminée en soumettant la composition de l'étape (i) à un traitement de digestion de l'amidon et des protéines suivi d'ultrasons, le $d_{50}$ et/ou $d_{90}$ obtenu à partir de la distribution de diamètre de particules est inférieur à 450 µm.

**21.** Procédé selon l'une quelconque des revendications 10 à 20, dans lequel

le rapport entre la teneur en amidon sous forme de légumineuses traitées thermiquement et la teneur totale en amidon de la composition à l'étape (i) est de 30 % en masse ou plus, et
éventuellement, l'activité d'enzyme amylolytique (U/g) diminue de 20 % ou plus au cours de l'étape (ii).

**22.** Procédé selon l'une quelconque des revendications 10 à 21, dans lequel lorsque la composition de l'étape (i) est placée dans un volume d'eau de 40 fois et immédiatement traitée conformément à la [Procédure a] ci-dessus, et séparée et collectée selon la [Condition A] ci-dessus pour obtenir de l'amidon purifié, et qu'un échantillon est préparé à partir d'une fraction séparée avec des logarithmes de poids moléculaire de 5,0 ou plus mais moins de 6,5 en ajustant le pH de la fraction à 7,0 et en colorant une partie en masse de la fraction avec 9 parties en masse de solution d'iode (0,25 mM), l'absorbance de l'échantillon coloré à 660 nm est de 0,80 ou moins.

**23.** Procédé selon l'une quelconque des revendications 10 à 22, dans lequel lorsque la composition de l'étape (i) est placée dans un volume d'eau de 40 fois et immédiatement traitée conformément à la [Procédure a] ci-dessus, et séparée et collectée selon la [Condition A] ci-dessus pour obtenir de l'amidon purifié, et qu'un premier échantillon et un second échantillon sont préparés à partir d'une première fraction séparée avec des logarithmes de poids moléculaire de 5,0 ou plus mais moins de 6,5 et d'une seconde fraction séparée avec des logarithmes de poids moléculaire de 6,5 ou plus mais moins de 8,0, respectivement, en ajustant le pH de chaque fraction à 7,0 et en colorant chaque fraction avec 9 parties en masse de solution d'iode (0,25 mM), le rapport entre l'absorbance (660 nm) du second échantillon coloré et l'absorbance (660 nm) du premier échantillon coloré est de 0,003 ou plus.

Fig.1

0.04%
0.03%
0.03%
0.02%
0.02%
0.01%
0.01%
0.00%
-0.01%
5
5.5
6
6.5
7
7.5
8
8.5
9
Test Example 1
Test Example 2
Test Example 4
Test Example 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004215543 A
- US 5989620 A
- US 2018360079 A1


### Non-patent literature cited in the description


- PASTA-LIKE PRODUCT FROM PEA FLOUR BY TWIN-SCREW EXTRUSION. **WANG N et al.** JOURNAL OF FOOD SCIENCE. WILEY-BLACKWELL PUBLISHING, INC, 01 January 1999, vol. 64, 671-678